**Europäisches Patentamt**

**European Patent Office**

**Office européen des brevets**

(19)

(11) Veröffentlichungsnummer: **0 142 096**
**B1**

(12) # EUROPÄISCHE PATENTSCHRIFT

(45) Veröffentlichungstag der Patentschrift:
**22.04.87**

(51) Int. Cl.⁴: **H 02 M 7/757**, H 02 J 3/36

(21) Anmeldenummer: **84113026.3**

(22) Anmeldetag: **29.10.84**

(54) **Verfahren und Vorrichtung zur Hochspannungsleichstromübertragung mit Bypass-Pfad für den Störungsfall.**

(30) Priorität: 09.11.83 DE 3340540
01.03.84 DE 3407656
26.09.84 DE 3435305

(43) Veröffentlichungstag der Anmeldung:
**22.05.85 Patentblatt 85/21**

(45) Bekanntmachung des Hinweises auf die Patenterteilung:
**22.04.87 Patentblatt 87/17**

(84) Benannte Vertragsstaaten:
**CH DE FR GB LI SE**

(56) Entgegenhaltungen:
**EP - A - 0 075 319**
**US - A - 3 636 431**

(73) Patentinhaber: **Siemens Aktiengesellschaft Berlin und München, Wittelsbacherplatz 2, D-8000 München 2 (DE)**

(72) Erfinder: **Neupauer, Helmut, Dr., Heiligenlohstrasse 3b, D-8520 Erlangen (DE)**
Erfinder: **Wild, Georg, Zedernstrasse 20, D-8521 Langensendelbach (DE)**
Erfinder: **Kaufhold, Wolfgang, Dipl.-Ing., Lannersberg 15, D-8520 Erlangen (DE)**

## Beschreibung

Die Erfindung betrifft ein Verfahren zum Betrieb einer Hochspannungsgleichstrom-Übertragungsstrecke (HGÜ) zwischen zwei Wechselspannungsnetzen gemäss dem Oberbegriff des Anspruchs 1 und eine Vorrichtung hierzu.

Hierbei speist ein an das erste Wechselspannungsnetz NA angeschlossener im Normalbetrieb als Gleichrichter betriebener erster Stromrichter in einer ersten Station A den Gleichstrom in die HGÜ ein, während ein in einer zweiten Station B angeordneter, in das zweite Wechselspannungsnetz NB einspeisender zweiter Stromrichter die Spannung der HGÜ bestimmt. Jede Änderung der von der zweiten Station bestimmten HGÜ-Spannung bewirkt nach einer von der Übertragungszeit («Laufzeit») der HGÜ bestimmten Totzeit eine Änderung des in der ersten Station eingespeisten Stromes, solange nicht der Steuerwinkel des ersten Stromrichters verstellt wird. Umgekehrt bewirkt jede Änderung des von der Station A eingespeisten Gleichstroms eine Änderung in der Kommutierungszeit der Ventile des zweiten Stromrichters, dessen Steuerwinkel im Hinblick auf die Einhaltung der Wechselrichtertrittgrenze entsprechend überwacht und gegebenenfalls verschoben werden muss.

Daher sind in der Regel die beiden Stationen über Fernwirkleitungen miteinander verbunden und greifen (z.B. über ein sogenanntes «Marginalstrom»-Signal) gegenseitig in die Bildung der Steuerwinkel ein. Die in den Stationen vorgesehenen Regler sind dabei verhältnismässig träge eingestellt.

Kommt es in der Station A zu einem Spannungskurzschluss, so erlischt kurz darauf der Gleichstrom in der HGÜ bzw. der zweite Stromrichter wird stillgesetzt, um eine Energieeinspeisung in den Kurzschluss zu vermeiden (Gleichrichterstörung). Die Gleichspannungsanschlüsse des ersten Stromrichters können über einen Kurzschlussschalter («Bypass-Pfad») kurzgeschlossen werden, um einen eventuell vorhandenen Gleichstrom am Stromrichter vorbeizuführen.

Dieser Kurzschlussschalter kann als verhältnismässig träger mechanischer Schalter oder als ein eigenes Ventil ausgeführt sein, das nur auf verhältnismässig kleine Ströme ausgelegt ist. Er ist nicht geeignet, einen Strom zu führen, der im Falle einer nicht stillgesetzten, sondern während der Störung als Gleichrichter betriebenen Station B eingespeist würde. Ein derartiger Bypass-Strom würde ein Blindstrom für das Netz NB bedeuten und könnte hohe Werte (z.B. 60% des Nennstromes) ausmachen.

Die für den Normalbetrieb des ersten Stromrichters ohnehin vorhandenen Stromrichterventile können zwar einen derartigen Strom führen, jedoch könnten sie nur mittels aufwendiger Zündeinrichtungen gezündet werden, wenn die HGÜ infolge der Gleichrichterstörung stromlos geworden ist und auch das zusammengebrochene Netz NA keine Zündenergie zur Verfügung stellen kann. Deshalb ist ein derartiger «Bypass-Betrieb», bei dem der Stromrichter A nach einer Gleichrichterstörung überbrückt wird und der Stromrichter B als Gleichrichter betrieben wird, bisher schon aus Kostengründen nicht als sinnvoll angesehen worden.

Ferner sind die Regeleinrichtungen der Station B aus den erläuterten Gründen verhältnismässig träge eingestellt und ein derartiger Bypass-Betrieb würde nur zu einer schwer steuerbaren Blindlast für das Netz NB führen.

Im Falle einer Störung in der Station B gelten ähnliche Verhältnisse. Bei jedem Spannungskurzschluss fliesst der HGÜ-Strom in diesen Kurzschluss und der Wechselrichter kippt. Er wird stillgesetzt und die HGÜ entlädt sich über die Wechselrichterventile. Um den Wechselrichter geordnet stillzusetzen, ist in der US-A-3 636 431 vorgeschlagen, mit den netzgetakteten Zündbefehlen des Wechselrichters die Wechselrichterventile und gleichzeitig einen Zwischenspeicher einer Blockierschaltung anzusteuern. Nach einer Störungsmeldung sperren von dem Zwischenspeicher gesteuerte Schaltmittel innerhalb der folgenden Halbperiode des Zündzyklus den übernächsten Zündbefehl, wodurch in Reihe liegende Wechselrichterventile zwangsläufig leitend werden und vorübergehend als Bypass-Pfad den HGÜ-Strom übernehmen, bis ein zusätzlicher Kurzschlussschalter geschlossen wird.

Normalerweise ist während einer Wechselrichterstörung der Gleichrichter A stillgesetzt. Würden die Stromrichterventile selbst als Kurzschlussschalter benutzt, so waren zusätzliche Massnahmen zur richtigen Zündimpulsauswahl für die bei der Wiederkehr der Spannung netzgetaktet zu zündenden Ventile erforderlich.

Erschwerend kommt hinzu, dass die Fernsignalleitungen eigene Übertragungs- und Verarbeitungszeiten besitzen, so dass die für den Betrieb der ungestörten Station erforderlichen Signale über den jeweiligen Zustand der anderen Station nur mit erheblichen Verzögerungen zur Verfügung stehen.

Daher wurde bisher der Normalbetrieb der HGÜ vorrangig so ausgelegt, dass z.B. ein Wechselrichterkippen oder andere Störungen möglichst vermieden werden; während einer Störung jedoch wurde die HGÜ durch Stillsetzen beider Stromrichter stromlos gehalten.

Der Erfindung liegt nun die Aufgabe zugrunde, einen Betrieb der HGÜ anzugeben, bei dem die HGÜ auch während einer Störung in einer der Stationen genutzt werden kann.

Bei dem erfindungsgemässen Verfahren wird während einer Störung die gestörte Station durch einen Kurzschlusspfad überbrückt, der auf die Belastung mit einem den Bedürfnissen des Wechselspannungsnetzes in der ungestörten Station abgestimmten Blindstrom ausgelegt ist, und die ungestörte Station wird als Gleichrichter zur Einspeisung dieses Stromes verwendet. Die HGÜ kann daher zu einer schnellen Blindlaststellung, zur Dämpfung subsynchroner Resonanzerscheinungen oder anderer Ausgleichsvorgänge verwendet werden, um insbesondere das ungestörte Wechselspannungsnetz möglichst zu stabilisieren. Dies ist insbesondere möglich, da die Regeleinrichtungen der ungestörten Station im Störungsfall in ihrer Regelgeschwindigkeit nicht auf die überbrückte andere Station abgestimmt zu werden brauchen.

Diese Aufgabe wird gelöst durch ein Verfahren mit den Merkmalen des Anspruchs 1. In den Unteransprüchen sind vorteilhafte Weiterbildungen des Verfahrens, insbesondere unter Berücksichtigung der verschiedenen Störfälle, sowie eine Vorrichtung hierzu samt vorteilhafter Weiterbildungen angegeben.

Weitere der Beschreibung entnehmbare Erfindungen sind Gegenstand der gleichzeitig eingereichten EP-Anmeldungen Nr. 84 113 023.0 und 84 113 024.8.

Anhand von mehreren Ausführungsbeispielen und Figuren wird die Erfindung näher erläutert. Dabei zeigen:

Fig. 1 den Aufbau einer HGÜ-Anlage,

Fig. 2 den Zusammenhang zwischen Zündwinkel $\alpha$, Löschwinkel $\gamma$, dem induktiven Gleichspannungsabfall, der Gleichspannung und der Wechselspannung beim Betrieb eines netzgetakteten Stromrichters,

Fig. 3 den schematischen Aufbau einer HGÜ-Kurzkupplung mit Vorsteuerung der Steuerwinkel für den ungestörten Normalbetrieb,

Fig. 4 die Struktur des Aufbaus nach Fig. 3,

Fig. 5 einen abgewandelten Aufbau einer HGÜ-Anlage mit Vorsteuerung,

Fig. 6 eine andere schematische Ausführungsform der Station B mit Vorsteuerung,

Fig. 7 einen gegenüber Fig. 3 abgewandelten Aufbau,

Fig. 8 und 9 gegenüber Fig. 6 abgewandelte Ausführungsform der Station B,

Fig. 10 eine andere schematische Ausführungsform der Station A mit Vorsteuerung,

Fig. 11 eine Ausführungsform einer Überwachungseinrichtung für die Station A oder B,

Fig. 12 und 28 Signalverläufe und Aufbau einer Ausführungsform einer Grenzwertmeldeeinrichtung für die Überwachungseinrichtung nach Fig. 11,

Fig. 13 die Verwendung eines Netzmodells in einer Station bei einer HGÜ-Fernleitung,

Fig. 14 den Aufbau des Netzmodells von Fig. 13,

Fig. 15 den detaillierten Aufbau einer Station am Beispiel der Station B,

Fig. 16 Signalverläufe für den Betrieb der Station B nach Fig. 1, bei Aufnahme des netzgetakteten Betriebs nach einer Stillsetzung der HGÜ,

Fig. 17 das Schaltbild einer Blockierschaltung für die Anordnung nach Fig. 1,

Fig. 18 und 19 Verlauf von Spannungen und Strömen sowie Stromführungsdauern für die Stromrichterventile beim Betrieb nach Fig. 16,

Fig. 20 Signalverläufe für den Betrieb der Station B nach Fig. 1 bei einer vorübergehenden Störung (Übergang aus dem Normalbetrieb und in den Normalbetrieb),

Fig. 21 das Schaltbild einer Auswahlschaltung beim Aufbau nach Fig. 15,

Fig. 22 den Verlauf einer nach einer Netzstörung wiederkehrenden Wechselspannung und die netzgetakteten Zündimpulse der Station nach Fig. 15,

Fig. 23 den Verlauf der Steuerwinkel, Spannungen und Ströme bei einem bevorzugten Beispiel,

Fig. 24 und 25 den Verlauf von Spannungen, Strömen und Signalen beim Betrieb einer HGÜ mit einer während einer Störung der Station B bzw. der Station A entregten Strecke,

Fig. 26 und 27 die gleichen Verläufe für den Fall eines Notbetriebs mit Bypass während einer Störung der Station A bzw. B.

*Aufbau einer HGÜ-Anlage*

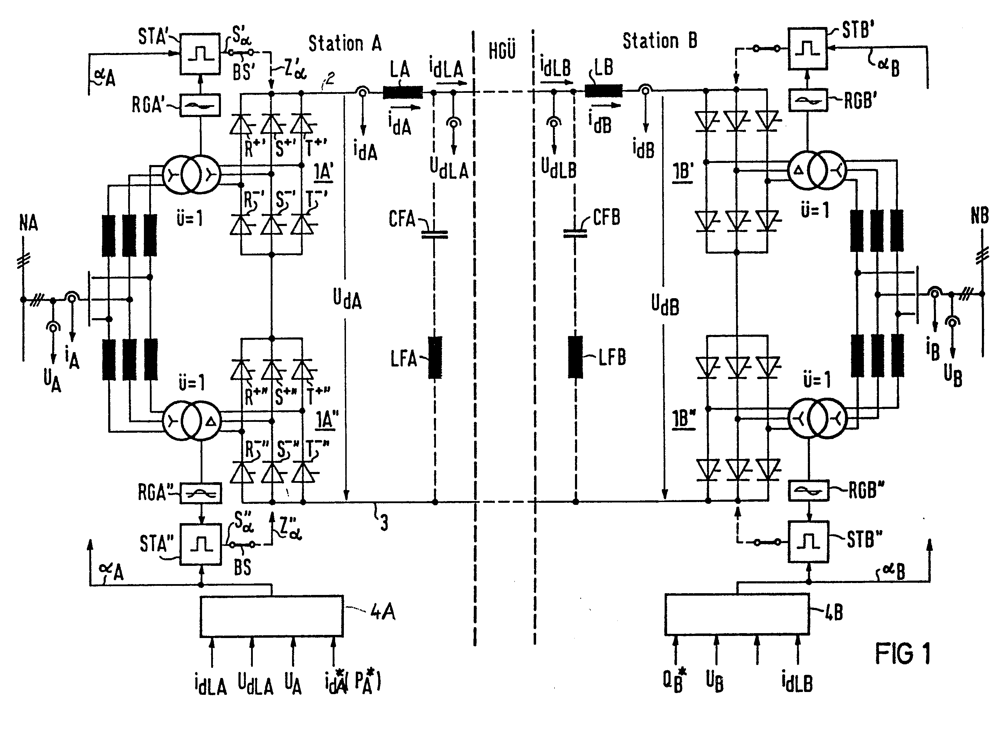

Nach Fig. 1 ist eine Hochspannungsgleichstrom-Übertragungsstrecke (HGÜ) über die Stationen A und B, die jeweils einen Stromrichter enthalten, an zwei Wechselspannungsnetze NA und NB angeschlossen. Soll mit dieser Anlage ein Gleichstrom von der ersten Station A zur zweiten Station B übertragen werden, so wird der über die HGÜ fliessende Strom dadurch vorgegeben, dass in der Station A der erste Stromrichter als Gleichrichter betrieben wird, um dem ersten Netz NA (Spannung $U_A$) einen Strom zu entnehmen, der als Ausgangsgleichstrom $i_{dA}$ des Stromrichters von der Station A der HGÜ eingeprägt wird. Der zweite Stromrichter (Station B) wird bei dieser Betriebsart als Wechselrichter betrieben, um den über seine Gleichstromanschlüsse fliessenden Eingangsgleichstrom $i_{dB}$ in das zweite Netz NB einzuspeisen, wobei der für die Stromeinspeisung verwendete Wechselrichter-Steuerwinkel die Eingangsgleichspannung $U_{dB}$ der Station B und somit das Spannungsniveau der HGÜ bestimmt.

Meist wird ein oberwellenarmer Betrieb der Stromrichter angestrebt, weshalb die Stromrichter als 12- und mehrpulsige Stromrichter aufgebaut sind und mehrere, z.B. gleichstromseitig in Reihe geschaltete Teil-Stromrichter enthalten, die über Stromrichterdrosseln LA bzw. LB und/oder Filterkreise (CFA, LFA bzw. CFB, LFB) an die HGÜ und über unterschiedlich geschaltete Stromrichtertransformatoren, die mit ihrem Übertragungsverhältnis ü bezeichnet sind (z.B. ü = 1), an das jeweilige Wechselspannungsnetz NA bzw. NB angeschlossen sind. Insbesondere bei Kurzkupplungen, die zur Verkopplung zweier räumlich nahe benachbarter Netze dienen und häufig lediglich eine Hochspannungs-Glättungsdrossel enthalten, kann die Verwendung der Filterelemente LFA, CFA bzw. LFB, CFB u.U. auch ganz entfallen. Der nach den Filterelementen auftretende Strom («HGÜ»-Strom) wird mit $i_{dLA}$ (bzw. die entsprechende «HGÜ-Spannung» mit $U_{dLA}$) bezeichnet, während die Grössen vor den Filter-Elementen mit $i_{dA}$ und $U_{dA}$ bezeichnet sind.

Für die Regelung benötigte Ist-Werte werden dabei meist vorteilhaft möglichst nahe am HGÜ-Anschluss der jeweiligen Station, also gegebenenfalls hinter den Filter-Elementen, abgegriffen; in anderen Fällen (z.B. zur Überwachung des störungsfreien HGÜ-Betriebes) kann es gleichgültig sein, wo die zur Erfassung der Istwerte nötigen (nicht dargestellten) Messglieder angeordnet sind.

Die Teilstromrichter 1A', 1A'' sind gleichstromseitig zur Verbindung der Pole 2, 3 der HGÜ in Reihe geschaltet und enthalten jeweils einer Ausgangsphase R, S, T ihrer Transformatoren zugeordnete Ventilgruppen, die mit « + » bzw. «−» gekennzeichnet sind, wenn ihre Anoden bzw. Kathoden an den Transformator angeschlossen sind. Z.B. liegt die Ventilgruppe R⁺' in Stromflussrichtung zwischen Transformator und Pol 2. Ein Steuersatz liefert für den Teilstromrichter 1A' die Zündbefehlsfolge S'$_\alpha$, die aus einzelnen Zündbefehlen R$_\alpha^{+\prime}$, ..., T$_\alpha^{-\prime}$ besteht und in einer Blockierschaltung (Schaltersymbol BS') entweder gesperrt oder zu einer Zündimpulsfolge Z'$\alpha$ verstärkt als Einzelimpulse R$^{+\prime}$, ..., T$^{-\prime}$ an die mit dem gleichen Symbol bezeichneten Ventile gelegt werden.

Der Steuersatz ST$_A'$ erhält ein Referenzspannungssystem U$_{Asyn}'$ von einem an den Wechselspannungseingang des Teilstromrichters angeschlossenen Referenzspannungsgenerator RG$_A'$, der die Zündbefehle S$_\alpha'$ durch Vergleich von U$_{Asyn}'$ mit einer Stellgrösse (z.B. einer Steuerspannung U$_{STA}$ oder einem Steuerwinkel $\alpha_A$) bildet («netzgetakteter Betrieb mit dem Steuerwinkel $\alpha_A''$»).

Die Stellgrösse (z.B. Steuerwinkel $\alpha_A$) wird dabei von einer Steuer- und Regeleinrichtung 4A geliefert und ist im Stand der Technik in der Regel allen Teilumrichtern der Station gemeinsam. Der Teilstromrichter 1A'' (Ventilgruppen R$^{+\prime\prime}$, ..., T$^{-\prime\prime}$) und seine Stelleinrichtungen (RGA'', STA'', BS'') sind wie der Teilstromrichter 1A' aufgebaut; gleichartige Grössen sind entsprechend bezeichnet. Da es in den meisten Fällen für den Fachmann selbstverständlich ist, wie mit der Stellgrösse der Station A die Steuerung der vorhandenen Teilumrichter vorzunehmen ist, wird im folgenden der Gesamtstromrichter häufig mit 1A bezeichnet und die Unterscheidung der dem jeweiligen Teilstromrichter zugeordneten Grössen unterdrückt.

Auch die Station B ist möglichst gleichartig analog aufgebaut; die Teilumrichter 1B' und 1B'' werden z.B. häufig wie ein einheitlicher Stromrichter 1B behandelt. Da viele Bauteile und Massnahmen für die beiden Stationen identisch sind, wird in diesen Fällen auch die Unterscheidung durch die Buchstaben A und B weggelassen.

Im als Gleichrichter betriebenen Stromrichter 1A wird der Steuerwinkel nahe der Vollaussteuerung ($\alpha_A \approx 0°$) vorgegeben und bestimmt zunächst die Ausgangsgleichspannung U$_{dA}$. Der Ausgangsgleichstrom i$_{dA}$ ist dann durch den Spannungsabfall U$_{dLA}$ − U$_{dA}$ an der nachgeordneten Drossel LA bestimmt gemäss

$$i_{dA} = \frac{1}{LA} \int (U_{dA} - U_{dLA})\, dt \qquad (1)$$

Wird daher der Steuer- und Regeleinrichtung 4A eine Führungsgrösse i$_{dA}^*$ als Sollwert für eine den Steuerwinkel $\alpha_A$ liefernde Stromregelung eingegeben, so bewirkt ein Einbruch der Spannung U$_B$ oder U$_{dB}$, wie er z.B. von einem Wechselrichterkippen in der Station B hervorgerufen wird, oder jede andere Änderung im Betrieb der Station B nach der Laufzeit der HGÜ eine Änderung von U$_{dLA}$, die sich in einer Stromänderung bemerkbar macht und den Stromregler anstösst.

Für die Stromregelung der Station A wirkt also U$_{dLA}$ bzw. — mit der durch die HGÜ-Laufzeit bedingten Totzeit — U$_{dB}$ als Störgrösse.

Ähnlich ist es, wenn als Führungsgrösse der Station A die zu übertragende Wirkleistung verwendet wird. In diesem Fall liefert ein Wirkleistungsregler z.B. den Sollwert i$_{dA}^*$ entsprechend dem auf die Energiebilanz des Netzes NA abgestimmten Wirkleistungssollwert P$_A^*$.

Auch der Stromrichter 4B der Station B bestimmt durch seinen Steuerwinkel $\alpha_B$ die Ausgangsgleichspannung U$_{dB}$. Da der Gleichstrom i$_{dB}$, der als Wirk- und Blindstrom in das Netz N$_B$ eingespeist wird, von der Station A aus eingeprägt ist, kann die Steuer- und Regeleinrichtung 4B die Blindleistungsabgabe in das Netz NB entsprechend einem Blindleistungssollwert Q$_B^*$ regeln, der als Führungsgrösse zur Netzspannungsstabilisierung verwendet werden kann. Dadurch bestimmt die Station B, welche Spannungspegel sich in der HGÜ einstellt. Der Strom i$_{dB}$ und der im Netz fliessende Strom stellt sich dabei frei ein; er entspricht (bis auf geringe Stromverluste der Leitung) dem von der Streckenlaufzeit eingeprägten Strom i$_{dA}$.

Da — insbesondere für einen hohen Wirkstromanteil der Leistungsübertragung — im Normalfall ein Steuerwinkel nahe der Wechselrichtervollaussteuerung ($\alpha_B$ nahe 180°) angestrebt wird, ist bei einer Kommutierung die Dauer von einer Zündung des Folgeventils (Zündwinkel $\alpha_B$) bis zur vollständigen Stromlosigkeit des abkommutierenden Ventils (d.h. bis zum «Löschwinkel» $\gamma_B$) verhältnismässig lange und nimmt mit zunehmendem Strom i$_{dB}$ zu. Während der Kommutierungszeit bricht die Spannung U$_{dB}$ um den sogenannten «induktiven Gleichspannungsabfall» ein.

Der vom Gleichstrom i$_{dB}$ (bzw. dem eingeprägten Strom i$_{dA}$) bewirkte induktive Gleichspannungsabfall wirkt also als Störgrösse für den Stromrichter B.

Dies ist vor allem wichtig, da der Löschwinkel einen von der Freiwerdezeit der Stromrichterventile abhängigen Maximalwert («Wechselrichtertrittgrenze») nicht überschreiten darf, damit es nicht zum Wechselrichterkippen mit einem Kurzschluss der Spannung U$_{dB}$ kommt. Ein Anstieg des eingeprägten Stromes i$_{dA}$ bewirkt — nach der HGÜ-Laufzeit — in der Station B einen Anstieg der Kommutierungsdauer und des induktiven Gleichspannungsabfalls, auf den mit einer Vorverlegung des Zündzeitpunktes der Station B (Verkleinerung von $\alpha_B$) geantwortet werden muss, wenn der maximale Löschwinkel oder ein als Führungsgrösse der Station B vorgegebener Löschwinkel $\gamma^*$ eingehalten werden soll.

Wegen dieser gegenseitigen Störgrössen müssen also die Regelungen der über die HGÜ miteinander verkoppelten Stromrichter in ihrem Betrieb aufeinander abgestimmt werden. In der Regel werden dabei Informationen über den Betriebszustand des einen Stromrichters (z.B. ein aus der jeweiligen Führungsgrösse abgeleitetes Marginalstrom-Signal oder ein Störungssignal) mittels Fernwirkleitungen zur anderen Station übertragen. Wegen der Totzeit der HGÜ sowie der Verarbeitungszeit dieser Informationsübertragung kann dabei ein stabiler Betrieb der HGÜ nur erreicht werden, wenn die Regler beider Stationen relativ träge eingestellt sind (An- und Ausregelzeiten von z.B. 200 ms).

Die HGÜ kann somit bei schnellen Störungen die jeweiligen Wechselspannungsnetze nur beschränkt stabilisieren. Ausserdem ist insbesondere ein schnelles Anfahren der HGÜ, z.B. bei einer vorübergehenden Störung in einer Station und daher einem vorübergehenden Ausfall der HGÜ, nicht möglich. Z.B. durch einen ausreichenden Sicherheitsabstand von der Wechselrichtertrittgrenze sollte auf Kosten der Wirkleistungsübertragung vorrangig ein Wechselrichterkippen vermieden werden.

Das im folgenden beschriebene Betriebsverfahren verringert diese Schwierigkeiten. Es ermöglicht bei ausreichendem Schutz vor Wechselrichterkippen eine hochdynamische Regelung und ein schnelles Anfahren nach Störungen.

So wird zunächst die Bildung und Übertragung der erwähnten Informationen vereinfacht und durch geeigneten Eingriff — nämlich eine Vorsteuerung des Steuerwinkels einer Station mit der jeweils zu berücksichtigenden Störgrösse bzw. einem Modellwert — eine wesentliche Verkürzung der Anregelzeiten erreicht. Soweit es sich um eine Kurzkupplung handelt, bei der wegen der räumlichen Nähe beider Stationen die Informationen über den Betriebszustand der gegenseitigen Station ohne grössere Übertragungszeiten vorhanden sind, kann dabei auf einen Gleichspannungsdetektor für die HGÜ-Spannung verzichtet werden.

Bei einer HGÜ-Fernübertragung werden in der einen Station die nötigen Informationen über die andere Station praktisch nur aus Betriebsgrössen (insbesondere Ist- und Sollwerten) der einen Station gebildet. Dadurch entfallen Fernwirkleitungen und die Information steht zum frühest möglichen Zeitpunkt zur Verfügung, nämlich sobald sich die Zustandsänderung der anderen Station in der einen Station bemerkbar macht. Die Vorsteuerung führt dabei zu sehr schnellen Regelkreisen, wobei Anregelzeiten unter 50 ms (z.B. 20 ms) möglich werden.

Sollte eine durch die verwendete Modell-Störgrösse bedingte Betriebsunsicherheit gelegentlich zu einem Wechselrichterkippen oder zu einer anderen Stromrichterstörung führen, so können die wirtschaftlichen Folgen einer derartigen Störung klein gehalten werden, da die verwendete Vorsteuerung ein rasches Wiederanfahren der HGÜ nach einer Störung erlaubt.

So kann das Betriebsverfahren vorrangig auf eine optimale Ausnutzung der HGÜ abgestimmt werden. Insbesondere kann die HGÜ auch zum Ausregeln dynamischer Vorgänge (z.B. Ausgleichsvorgängen in den Netzen) vorrangig im Hinblick auf eine Stabilisierung der Netzspannung ausgelegt werden. Besondere Massnahmen ermöglichen diese Ausnutzung der HGÜ sogar in dem Fall, dass wegen einer Gleichrichter- oder Wechselrichterstörung die Wirkleistungsübertragung unterbrochen ist.

### Der induktive Gleichspannungsabfall als Störgrösse

Das erfindungsgemässe Verfahren geht aus von einer Untersuchung des Einflusses, den die Gleichspannungsgrössen eines Stromrichters auf dessen Betrieb ausüben.

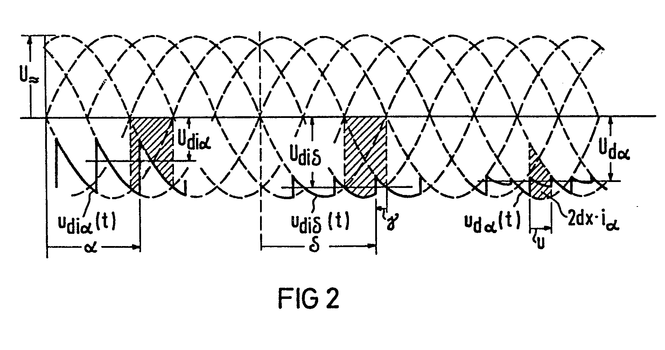

In Fig. 2 ist gestrichelt der Verlauf der Spannungen an den einzelnen Phasen eines Wechselspannungsnetzes (Netzspannung $U_{\approx}$) gezeigt. Unter der Annahme, dass der Strom im Stromrichter bei einer Ventilzündung sofort und vollständig kommutiert wird, entsteht an den Gleichspannungsanschlüssen die vom Zündwinkel $\alpha$ abhängige Spannung $U_{di\alpha}(t)$,

die als Augenblickswerte der «ideellen ungeglätteten Leerlaufgleichspannung» bezeichnet wird.

Die idealisierende Annahme, dass der Strom sofort kommutiert (die Kommutierungsdauer also Null ist), liegt nur im Leerlauf vor, bei dem der Gleichstrom selbst zu Null wird. Bei Vollaussteuerung ergibt sich unter diesen idealisierenden Voraussetzungen für den Mittelwert der ideellen Leerlaufgleichspannung die Spannung $U_{di}$, die über einen für den jeweiligen Stromrichtertyp durch einen reinen Zahlenwert angebbaren Proportionalitätsfaktor proportional der momentanen Netzspannungsamplitude $U_{\approx}$ bzw. der effektiven Netzspannung ist:

$$U_{di} = const \cdot U_{\approx} \qquad (2)$$

d.h. $U_{diA} = const \cdot U_A, \quad U_{diB} = - const \cdot U_B.$

Der Vorzeichenwechsel für die Station B berücksichtigt dabei die gegenüber der Zählrichtung der Spannung $U_{dB}$ umgekehrte Stromführungsrichtung der Ventile des Stromrichters 1B. $U_{di}$ entspricht der Spannungszeitfläche der gleichgerichteten Netzspannung.

Zu zwei Zündwinkeln $\alpha$ und $\delta$ gehören die jeweiligen ideellen ungeglätteten Leerlaufgleichspannungen $u_{di\alpha}(t)$ und $u_{di\delta}(t)$, deren schraffiert dargestellte Spannungszeitflächen als «geglättete ideelle Leerlaufgleichspannungen» durch

$$U_{di\alpha} = U_{di} \cos\alpha, \quad U_{di\delta} = U_{di} \cos\delta \qquad (3)$$

gegeben sind.

Um nun zu realen Verhältnissen zu gelangen, sei angenommen, dass der Stromrichter mit dem Zündwinkel $\alpha$ gezündet wird und der tatsächlich über die Ventile in die Gleichspannungsanschlüsse fliessende Strom $i_d$ zum Abkommutieren von dem zuvor gezündeten Ventil eine bestimmte Kommutierungszeit (entsprechend einem «Überlappungswinkel» u, indem beide Ventile stromführend sind) benötigt. Das Ende der Kommutierungszeit sei durch den Winkel $\delta$, d.h. den Löschwinkel $\gamma = 180° - \delta$ gegeben, so dass gilt:

$$180° - \gamma = \alpha + u, \qquad (4)$$

wobei die Lage des Löschwinkels $\gamma$, d.h. die Grösse des Überlappungswinkels u, von der Höhe des kommutierenden Stromes $i_d$ abhängt. Die beim Zündwinkel $\alpha$ tatsächlich auftretende ungeglättete Gleichspannung $u_{d\alpha}(t)$ ist in Fig. 2 ebenfalls dargestellt. Sie ist praktisch der Mittelwert $1/2 \cdot (u_{di\alpha}(t) + u_{di\delta}(t))$, der die rechts schraffiert dargestellte «Spannungs-Kommutierungszeit-Fläche» in zwei Hälften teilt. Somit ergibt sich für den tatsächlichen Mittelwert $U_{d\alpha}$ der Gleichspannung

$$U_{d\alpha} = \frac{1}{2}(U_{di\alpha} + U_{di\delta}) = U_{di\alpha} - \frac{1}{2}(U_{di\alpha} - U_{di\delta}), \quad (5)$$

d.h. die tatsächliche Gleichspannung weicht von der zum Zündwinkel $\alpha$ gehörenden ideellen Leerlaufgleichspannung $U_{di\alpha} = U_{di} \cdot \cos\alpha$ um eine Spannungsdifferenz ab. Dieser sogenannte «induktive Gleichspannungsabfall» ist über einen stromrichterspezifischen Parameter dx porportional zum tatsächlichen Gleichstrom $i_d$:

$$\frac{1}{2} (U_{di\alpha} - U_{di\delta}) = dx \cdot i_d =$$

$$\frac{1}{2} U_{di} (\cos\alpha + \cos\gamma), \qquad (6)$$

so dass daraus die Beziehungen folgen:

$$U_{d\alpha} = const \cdot U_\approx \cos\alpha - dx \cdot i_d,$$

d.h. bei geeigneten normierten Messwerten $U_A$ und $U_B$ für die Wechselspannungsamplituden beider Stationen folgt für die HGÜ-Spannungen $U_{dA}$ und $U_{dB}$:

$$U_{dA} = U_A \cdot \cos\alpha_A - dx_A \cdot i_{dA} \qquad (7)$$

$$U_{dB} = - U_B \cdot \cos\alpha_B - dx_B \cdot i_{dB}.$$

Da sich wegen der vorhandenen Induktivitäten der Gleichstrom während einer Kommutierung praktisch nicht ändert, gestatten die Beziehungen (4), (6) somit, zu jedem Zündzeitpunkt aus dem Zündwinkel und den Messwerten für die Wechselspannung und den Gleichstrom bereits im voraus zu berechnen, welche Werte der Überlappungswinkel, der Löschwinkel und Gleichspannung bei der Zündung annehmen wird.

*Der vorgesteuerte Normalbetrieb*

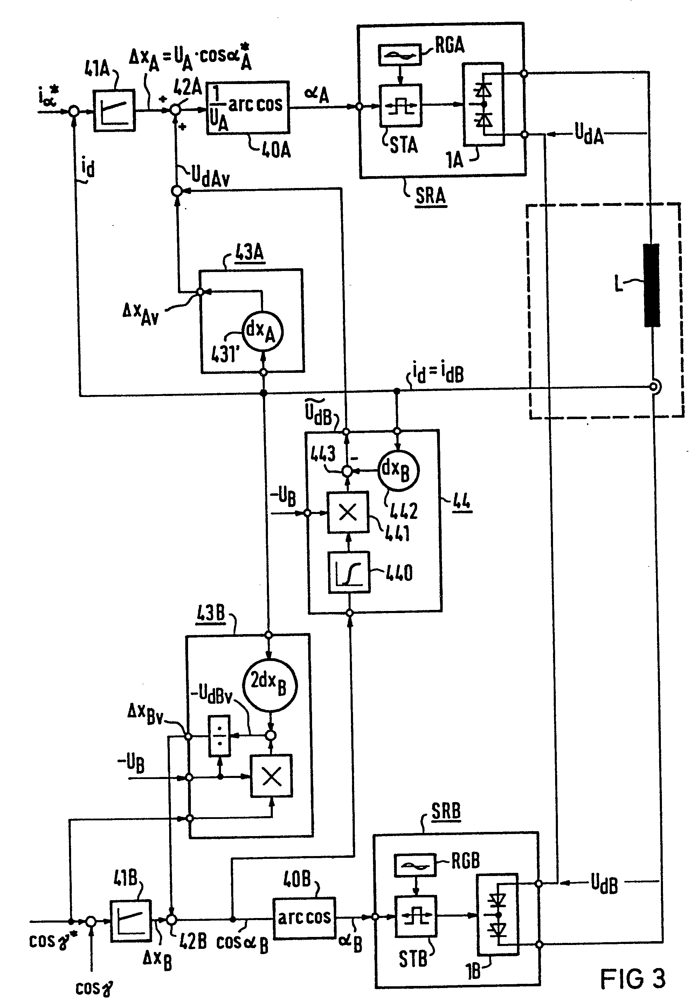

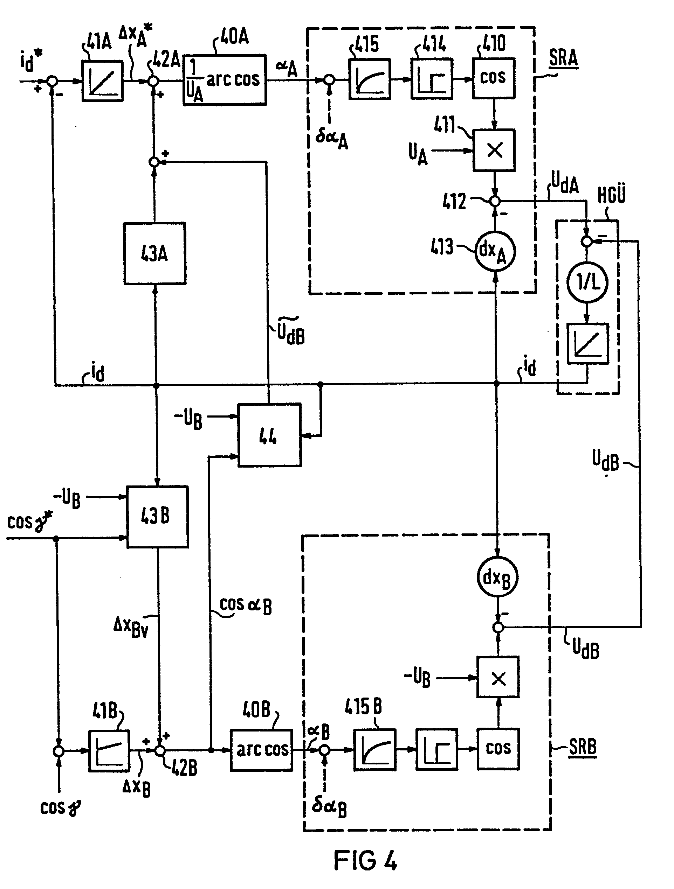

Eine erste Anwendung dieser Zusammenhänge ist in Fig. 3 dargestellt für den Fall einer Kurzkupplung — d.h. die HGÜ besteht in diesem Fall nur aus einer Induktivität $L = LA + LB$, die ohne Filterkreise zwischen den beiden Stromrichtern 1 und 2 angeordnet ist. Fig. 4 zeigt die Struktur dieser Anordnung, wobei die Induktivität L der HGÜ analog zur Gleichung (1) durch einen Integrator (Integrationskonstante L) mit der Eingangsgrösse $U_{dA} - U_{dB}$ und der Ausgangsgrösse $i_d \approx i_{dA} \approx i_{dB}$ dargestellt ist.

Die Wirkung des Stromrichters 1A des Steuersatzes STA und des Referenzspannungsgenerators RGA, die als stromeinprägende Baugruppe SRA dargestellt sind, ergibt sich dabei dadurch, dass der eingestellte Zündwinkel $\alpha_A$ bei unvollkommener Synchronisation des Referenzspannungsgenerators auf die tatsächliche Phase der Wechselspannung NA bis auf einen Fehlwinkel $\delta\alpha_A$ die Spannung $U_{di\alpha A}/U_A = \cos(\alpha_A + \delta\alpha_A)$ bestimmt (cos-Bildner 410 im Strukturbild). Daraus folgt unter Renormierung (Multiplizierer 411) und Berücksichtigung des induktiven Spannungsabfalles $dx_A \cdot i_d$ dieses Stromrichters (Proportionalglied 413, Subtraktionsglied 412) schliesslich $U_{dA} = U_{di\alpha} - i_d \, dx_A$.

Die Totzeit der Stromeinprägung ist durch ein Totzeitglied 414 symbolisiert, während ein Dynamikglied 415 die Glättung des Steuerwinkels im Steuersatz bzw. in einer in der Regel vorteilhaften eigenen Steuersatzglättung darstellt.

Daraus ergibt sich, dass der induktive Spannungsabfall des Stromrichters 1A nach dem Prinzip der Vorsteuerung durch Addition einer entsprechenden Modell-Störspannung $dx_A \cdot i_d$ auf die Steuergrösse für $U_A$ (in diesem Fall den von einem Stromregler 41A gelieferten Signal $U_A \cdot \cos\alpha_A^*$) kompensiert

werden kann. In vielen Fällen, z.B. wenn dem Regler 41A ein auf $U_A$ normierter arcos-Geber 40a zur Linearisierung der Steuerkennlinie nachgeschaltet ist, ist nicht einmal eine der Normierung der Steuergrösse entsprechende Normierung der Vorsteuerspannung (Modell-Störgrösse) notwendig, so dass eine Rechenschaltung 43A z.B. lediglich ein Proportionalglied 431' zu enthalten braucht, um aus dem vorliegenden Strom-Messwert $i_{dA}$ (in diesem Fall $i_{dA} \approx i_d \approx i_{dB}$) also einer am Ort der Station A verfügbaren Grösse, die Modell-Störgrösse $i_{dA} \cdot dx_A$ als Vorsteuerspannung zu bilden.

Schaltet man an der Vorsteuereinrichtung (Additionsglied 42A) zusätzlich oder alternativ die Spannung $U_{dB}$ auf, so wird auch der vom Stromrichter 1B ausgehende Einfluss auf die Stromregelung kompensiert. Die Station A gleicht also Sprünge in der von der Station B ausgehenden Störgrösse praktisch verzögerungsfrei aus und der Regler kann schneller eingestellt werden, da dadurch der verzögernde Einfluss der HGÜ-Induktivität wegfällt. Entsprechend kann der Regler ohne Rücksicht auf die Zeitkonstanten, die der Übertragungsleitung und dem Betrieb der Station B zuzuordnen sind, allein auf das Zeitverhalten der Stromeinprägung (Istwert- und Sollwertbildung sowie Glättung und Verzögerung des Stromrichters) optimiert werden.

Der dafür an sich erforderliche Hochspannungs-Gleichstromwandler kann aber gemäss der Erfindung entfallen, wenn der Istwert $U_{dB}$ für die Vorsteuerung durch eine Modell-Störgrösse $\tilde{U}_{dB}$ ersetzt wird, die eine Rechenschaltung 44 aus dem Messwert $i_d$, d.h. dem HGÜ-Strom bzw. dem Eingangsgleichstrom des Stromrichters 1B gemäss der Beziehung (7):

$$\tilde{U}_{dB} = - U_B \cdot \cos\alpha_B - dx_B \cdot i_{dB}$$

aus dem Istwert $i_{dB}$, der Netzspannung $U_B$ und dem Zündwinkel (Steuerwinkel) $\alpha_B$ berechnet. Dazu dienen z.B. nach dem Schaltsymbol (Fig. 3) ein Proportionalglied 442, ein Multiplizierer 441 und ein Summationsglied 443.

Dabei ist aber das Zeitverhalten der beiden Umrichter mit ihren Steuersätzen und der HGÜ selbst zu berücksichtigen. Dies geschieht durch ein Dynamikglied 440, das vorteilhafterweise als Hintereinanderschaltung mehrerer Glättungsglieder ausgebildet ist und daher insbesondere auch die auftretenden Totzeiten ausreichend zu berücksichtigen gestattet.

Der Stromrichter 1A wird also letztlich mit einem Steuerwinkel $\alpha_A$ betrieben, der zu einer Steuerspannung $U_{STA} = U_A \cdot \cos\alpha_A^* + U_{dAv}$ gehört, wobei die Vorsteuerspannung $U_{dAv}$ den induktiven Gleichspannungsabfall $\triangle x_{Av} = i_{dA} \cdot dx_A$ berücksichtigen kann, vor allem aber die aus Gleichung (1) folgende Störspannung $U_{dLA}$ (bei Kurzkupplung: $U_{dB}$ bzw. $\tilde{U}_{dB}$) enthält.

In der Station B ist ebenfalls zu berücksichtigen, dass auf die durch den Steuerwinkel $\alpha_B$ bestimmte Spannung $U_{d\alpha}$ ebenfalls (neben einer durch eine Fehlsynchronisation $\delta\alpha_B$ bedingten Störspannung) der induktive Gleichspannungsabfall als Störgrösse wirkt, die von dem Führungsgrössenregler ausgeregelt werden muss.

Die Station B enthält die gleichen Strukturelemente für den Block SRB mit einer (gegebenenfalls als eigenes Glättungsglied ausgebildeten) Steuersatzglättung 415B und einer Vorsteuereinrichtung, die aus einem Additionsglied 42B und — je nach der Natur des Signals $\triangle x_B$ und des Vorsteuersignals $\triangle x_{Bv}$ — einem Linearisierungsglied 40B besteht.

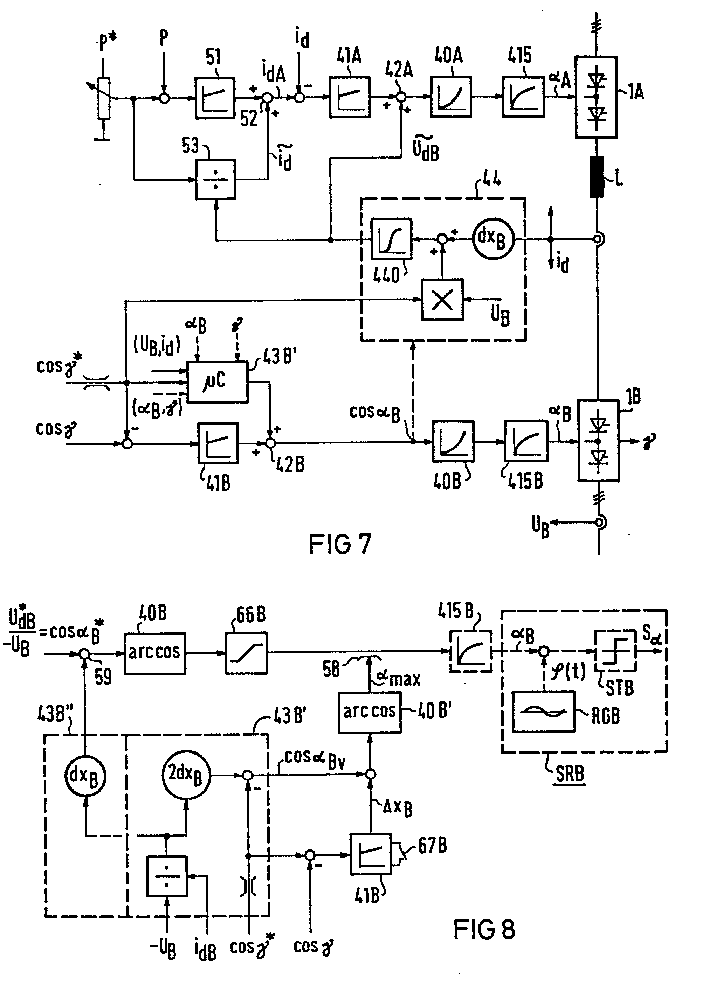

Wie Fig. 8 zeigt, kann dabei zunächst ein Signal, das über einen Vorgabewinkel $\alpha_B^*$ einen Sollwert der HGÜ-Spannung $U_{dB}^* = - U_B \cdot \cos\alpha_B^*$ bestimmt, einer Steuereinrichtung entnommen werden, die diesen Spannungssollwert aus einer Führungsgrösse oder anderen Betriebsgrössen der Station B rechnerisch bestimmt (gesteuerter Betrieb). Insbesondere kann aber $\alpha_B^*$ (oder $\cos\alpha_B^*$, falls noch ein Linearisierungsglied 40B nachgeschaltet ist) auch als Ausgangssignal eines Führungsgrössenreglers abgegriffen werden.

Die entsprechende Modell-Störgrösse wird dann an der Vorsteuereinrichtung (Additionsstelle 59, Fig. 8) als induktiver Gleichspannungsabfall $dx_B \cdot i_{dB}$ (bzw. als entsprechender «Vorsteuerwinkel») diesem Vorgabewinkel so aufgeschaltet, dass der Steuerwinkel $\alpha_B$ gegeben ist durch $\alpha_B = \alpha_B^* + \alpha_{Bv}$ mit

$$\cos\alpha_B = \frac{U_{dB}^* + dx_B \cdot i_{dB}}{-U_B}.$$ Im Schaltungsblock SRB wird der Steuerbefehl für die Wechselrichterventile dann bei einem Referenzwinkel $\varphi(t)$ der vom Referenzspannungsgenerator RG$_B$ erzeugten Referenzspannung erzeugt, der durch die Bedingung

$$\frac{U_{dB}^* + dx_B \cdot i_{dB}}{-U_B} = \cos (\alpha_B^* + \alpha_{Bv}) = \cos \varphi(t)$$

bzw. $\alpha_B^* + \alpha_{Bv} - \varphi(t) = 0$

gegeben ist. Dadurch kann ein Sprung in der Störgrösse weitgehend und praktisch verzögerungsfrei kompensiert werden, selbst wenn der die Störgrösse erzeugende Führungsgrössenregler 41A sehr schnell (Zeitkonstante unter 50 ms, insbesondere etwa 10 ms oder weniger) eingestellt ist. Auch hier gilt, dass der Regler allein auf das Zeitverhalten der eigenen Station ohne Berücksichtigung der Zeitkonstanten, die der HGÜ und der anderen Station zuzuordnen sind, optimiert werden kann.

Dies ermöglicht zwar einen stabilen stationären Betrieb mit schnellen Regelungen, stellt aber die Einhaltung eines der Wechselrichtertrittgrenze entsprechenden minimalen Löschwinkels («Schonwinkel») nicht sicher.

Um aber ein Wechselrichterkippen zu vermeiden, muss die Kommutierung jeweils bei einem bestimmten (minimalen) Löschwinkel $\gamma^*$ beendet sein. Daher müssen die Ventile jeweils bei einer Phasenlage $\varphi(t)$ des Wechselrichters gezündet werden, die durch

$$\varphi(t) = 180° - \gamma^* - u$$

gegeben ist. Im Idealfall, dass die Ventilzündung ohne Schaltverzug und bei idealer Synchronisation mit der Phasenlage $\varphi(t) = \alpha_B$ erfolgt und der induktive Spannungsabfall durch den Modellwert $\dfrac{dx_B \cdot i_{dB}}{U_B}$

exakt erfasst ist, muss also der Steuerwinkel $\alpha_B$ auf $(\alpha_B)_{max} = 180° - \gamma^* - u = $ arcos

$$(- \cos\gamma^* - \frac{2\, dx_B \cdot i_{dB}}{U_B})\ \text{begrenzt werden.}$$

In den Betriebszuständen, in denen eine derartige Zündwinkelbegrenzung eingreift, gilt im Steuersatz demnach die Zündbedingung $\varphi(t) = 180° - \gamma^* - u$,

d.h. $180° - \gamma^* - u - \varphi(t) = \arccos(-\cos\gamma^* - \dfrac{2dx_B \cdot i_{dB}}{U_B})$

$- \varphi(t) = 0$ oder $- \cos\gamma^* - \dfrac{2dx_B \cdot i_{dB}}{U_B} - \cos\varphi(t) = 0$,

wobei $\gamma^*$ bzw. $\cos\gamma^*$ ein Wert für den Löschwinkel ist, der vorgegeben wird. Diese Vorgabe des maximalen Steuerwinkels $\alpha_{Bmax}$ kann über eine Begrenzungseinrichtung 58 (Fig. 8) am Eingangskanal für den Steuerwinkel $\alpha_B$ des Steuersatzes erfolgen, wobei $\alpha_B$ gesteuert oder geregelt vorgegeben wird und, wie soeben erläutert wurde, vorgesteuert sein kann. Die Begrenzung wirkt dabei ebenfalls wie eine Vorsteuerung mit einem aus $\gamma^*$ errechneten Vorsteuerwinkel $\alpha_{Bv} = (\alpha_B)_{max}$.

Gilt Formel (7) streng und wird aus einem Spannungssollwert $U_{dB}^*$ und $U_B \cos\gamma^* = - U_{dB}^* + dx_B \cdot i_{dB}$ ein Soll-Winkel $\gamma^*$ ausgerechnet und auf $\gamma_{min}$ begrenzt, so liefert der in der Rechenstufe 43B' (Fig. 8) gebildete Winkel $\alpha_{Bv} = \arccos (- \cos\gamma^* - 2\, dx_B \cdot i_{dB}/U_B)$ oder — falls keine Linearisierung vorgenommen wird — die entsprechende Spannung $U_{dBv} = - U_B \cdot \cos\gamma^* - 2dx_B \cdot i_{dB}$ einen Grenzwert für den auf beliebige Weise (z.B. durch einen Blindleistungsregler oder einen anderen «Führungsgrössenregler») vorgebbaren Winkel $\alpha_B^*$ bzw. eine entsprechende Steuerspannung.

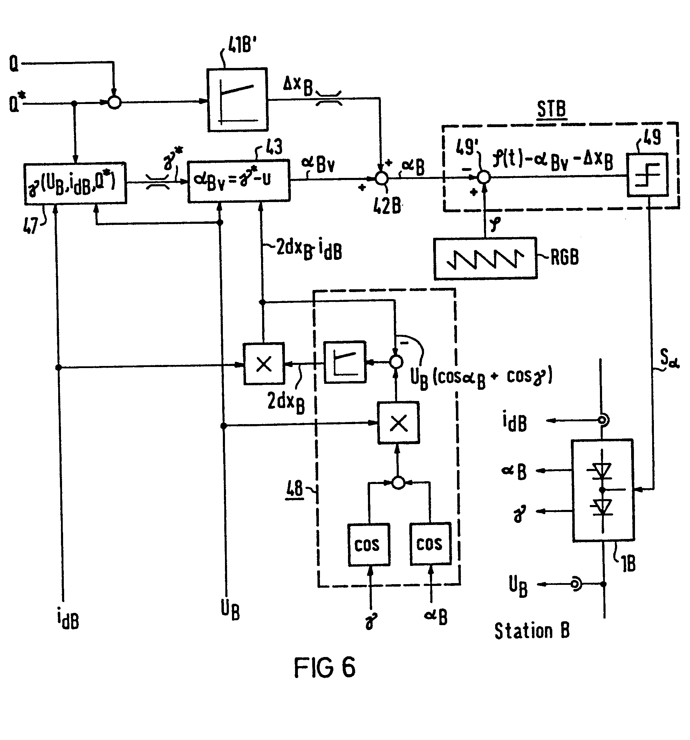

Ein derartiger Führungsgrössenregler kann dann lediglich bewirken, dass gegenüber dem «Vorsteuerwinkel» $\alpha_{Bv}$ der Steuerwinkel $\alpha_B$ und damit die Spannung $U_{dB}$ zurückgenommen wird, während bei gegebenem $U_B$ und $i_{dB}$ die Werte $U_{dB}^*$ und $\gamma_{min}$ nicht überschritten werden. Ist aus dem Führungsgrössen-Sollwert der Winkel $\gamma^*$ errechenbar, wie dies im Rechenelement 47 der Fig. 6 oder 7 erfolgt, so kann in einer gesteuerten Anordnung der Winkel $\alpha_{Bv} = 180° - \gamma^* - u$ auch ohne weitere Regelung direkt dem Steuersatz aufgeschaltet werden.

Im Steuersatz gilt dabei stets:
$\alpha_{Bmax} = 180° - \gamma^* - u$, wobei $u$ der aus $\gamma^*$ und dem induktiven Gleichspannungsabfall (Modell-Störgrösse) berechnete Überlappungswinkel ist.

Der Modellwert $\dfrac{2\, dx_B \cdot i_d}{U_B}$ kann dabei bei jeder Phasenlage des Netzes aus Momentanwerten für $i_d$ und $U_B$ bestimmt werden. Das bedeutet, dass zu jeder momentanen Phasenlage des Netzes bereits der zugehörige induktive Spannungsabfall und damit der Überlappungswinkel vorausberechnet wird. Durch Überwachung der genannten Zündbedingung wird also dann eine Ventilzündung vorgenommen, wenn gemäss dem vorausberechneten Überlappungswinkel die bis zum (durch $\gamma^*$ vorgegebenen) Soll-Zeitpunkt einer Ventillöschung noch verbleibende Zeitspanne zur Vollendung der Kommutierung ausreicht.

Im realen Stromrichterbetrieb bewirkt ein den Steuerwinkel steuerndes Signal $\alpha_{Bv}$, das aus einem Soll-Löschwinkel $\gamma^*$ gemäss $180° - \gamma^* = \alpha_{Bv} + u$ berechnet wird, beim Referenzwinkel $\varphi(t)$ eine Ventilzündung, die aber bei der realen Phasenlage $\varphi_0(t) = \varphi(t) + \delta\varphi\alpha$ des Wechselspannungsnetzes erfolgt und wegen einer möglichen Ungenauigkeit $\delta u$ des errechneten Überlappungswinkels zum Istwert $180° - \gamma = \varphi(t) + \delta\varphi\alpha + u + \delta u$ führt. Es ergibt sich also eine Soll-/Istwert-Differenz $\triangle\gamma = \alpha_{Bv} - \varphi(t) - u - \delta\varphi\alpha$.

Daher wird die Differenz $\triangle\gamma$ vorteilhaft unter Verwendung eines Löschwinkelreglers 41B (Fig. 8) ausgeregelt, zu dessen Ausgangssignal $\triangle x_B$ der vorausberechnete «Vorsteuerwinkel» $\alpha_{Bv}$ addiert wird, so dass sich für den Steuersatz die Bedingung

$$\triangle x_B + \alpha_{Bv} = \varphi(t) \text{ mit } \alpha_{Bv} = \arccos$$

$$(- \cos\gamma^* - \frac{2\,dx_B \cdot i_{dB}}{B\ U})$$

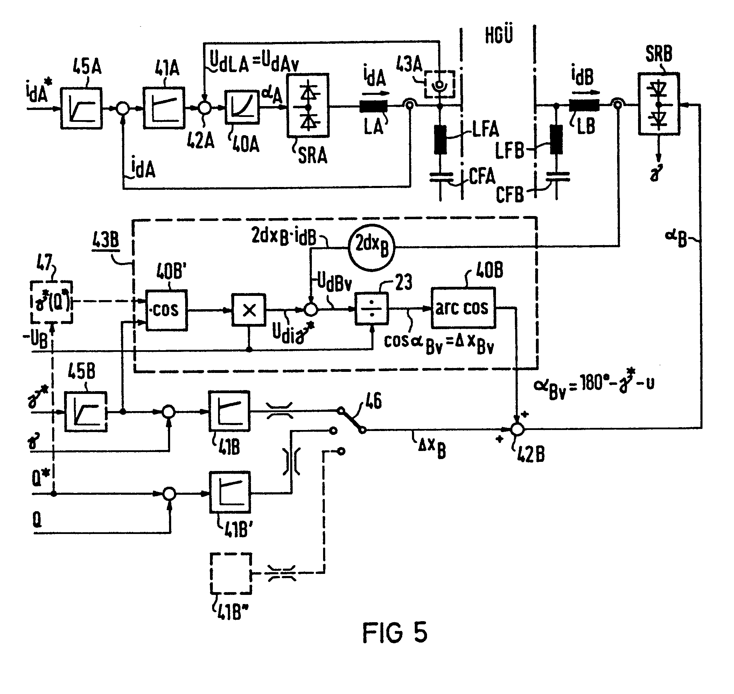

ergibt. Es kann aber auch ein Regler für eine andere Führungsgrösse verwendet werden, wobei dann der Soll-Löschwinkel $\gamma^*$ zur Berechnung von $\alpha_{Bv}$ aus dem Führungsgrössensollwert bestimmt wird (vgl. Position 47 in Fig. 5 oder 6) und das Reglerausgangssignal $\triangle x_B$ zur Einhaltung des Führungsgrössensollwertes den Löschwinkel korrigiert.

Auch hier wird der zu $\gamma^*$ gehörende Überlappungswinkel bzw. der induktive Gleichspannungsabfall aus Momentanwerten für $i_{dB}$ und $U_B$ bei jeder Phasenlage $\varphi(t)$ im voraus berechnet.

Man gelangt so zu einer geregelten Vorgabe des Löschwinkels, die in Fig. 8 zur Begrenzung des — geregelt oder gesteuert vorgegebenen — Vorgabewinkels $\alpha_B^*$ verwendet ist. Im bevorzugten Ausführungsbeispiel der Fig. 3 und Fig. 4 wird der geregelt vorgegebene Vorsteuersteuerwinkel $\alpha_{Bv}$ als Modell-Störgrösse $\triangle x_{Bv}$ direkt dem Ausgang des Führungsgrössenreglers 41B aufgeschaltet, dessen Ausgangsgrösse $\triangle x_B$ dazu dient, den als Führungsgrösse vorgegebenen Löschwinkel auf $\cos\gamma^* - \cos\gamma = 0$ zu regeln. Der Vorsteuereinrichtung 42B, 40B ist in diesem Fall also zur Bildung von $\alpha_B = 180° - \gamma^* - u + \triangle x_B$ die Vorsteuerspannung $\triangle x_{BV} = - \cos\gamma^* - 2 \cdot i_{dB} \cdot dx_B/U_B$ aufgeschaltet. Diese Vorsteuerspannung dient somit zur Berücksichtigung des induktiven Gleichspannungsabfalls und wird von der Rechenschaltung 43B berechnet, wozu z.B. die in deren Schaltsymbol dargestellten Rechenbausteine mit der dargestellten Rechenverknüpfung dienen können.

Die Berücksichtigung der hier angegebenen Zusammenhänge kann selbstverständlich auch nach daraus abgeleiteten Beziehungen in veränderten Rechenschaltungen erfolgen, die der Fachmann je nach Bedarf zusammenstellen kann.

Man gelangt daher im Fall einer Kurzkupplung zu einer auf ein rasches Ausregeln von Betriebszustandsänderungen beider Stromrichter abgestimmten Anordnung, die mit einfachen Mitteln auskommt und insbesondere im Hochspannungsteil als Detektor nur einen Stromwandler benötigt.

In Fig. 5 sind die Beziehungen auf eine Anlage angewendet, bei der die Stromrichter jeweils über Stromrichterdrosseln LA und LB und Filterkreise LFA, CFA sowie LFB, CFB an die HGÜ (Kurzkupplung oder Fernübertragungsleitung) angeschlossen ist.

Dabei ist auf eine Kompensation der geringen Steuerwinkelverschiebung, die von dem induktiven Gleichspannungsabfall des Stromrichters 1A hervorgerufen wird, verzichtet. Ferner ist zur Berücksichtigung der von der Station B ausgehenden Störung anstelle der Modell-Störgrösse $U_{dB}$ die HGÜ-Eingangsspannung $U_{dLA}$ als Vorsteuerspannung $U_{dAv}$ in der Station A verwendet.

Die Station A bedarf im Normalbetrieb keiner Fernwirksignale, die in ihren Betrieb als über Fernwirkleitungen übertragene Information über den Zustand der Station B eingreifen. Vielmehr stehen in der Station A alle für den Normalbetrieb benötigten Grössen als Ist- oder Sollwerte zur Verfügung. Das gleiche gilt für die Station B. Die Vorsteuerung beider Stationen berücksichtigt dabei die gegenseitige Verkopplung beider Stationen derart, dass ein stabiler Betrieb mit kurzen Regelzeiten erreicht wird.

Bei der Ausführungsform nach Fig. 5 ist das Linearisierungsglied 40B in die Rechenschaltung 43B integriert, da als Führungsgrössenregler 41B ein Löschwinkelregler verwendet wird, dessen Ausgangssignal $\triangle x_B$ bereits einen Winkel darstellt. Der in der Rechenschaltung 43B dann benötigte $\cos\gamma^*$ wird mittels eines Funktionsgebers 40B' gebildet.

Ferner ist vorgesehen, bei sprunghaften Änderungen der jeweiligen Führungsgrössen in den beiden Stationen die jeweilige Änderungsgeschwindigkeit des Führungsgrössensollwerts mittels eines Hochlaufgebers 45A bzw. 45B zu begrenzen. Die weiteren, bereits aus früheren Figuren bekannten Bauteile tragen die alten Bezugszeichen.

In der Station B kann wahlweise der Löschwinkel $\gamma$, die Blindleistung Q oder eine andere, zur Spannungskonstanthaltung, zur Dämpfung von Ausgleichsvorgängen oder zu anderen dynamischen Regelungen geeignete Führungsgrösse vorgesehen sein. Dies ist durch den Umschalter 46 angedeutet, durch den der Eingang der Vorsteuereinrichtung 42B zwischen dem Löschwinkelregler 41B und anderen Führungsgrössenreglern 41B', 41B'' umgeschaltet werden kann. Für diese Umschaltung ist vorgesehen, dass eine Hilfsrechenschaltung 47 aus den jeweils in Eingriff gebrachten Führungsgrössen-Sollwerten den zugehörigen Löschwinkel-Sollwert $\gamma^*$ bzw. dessen am Funktionsgeber 40B abgreifbaren $\cos\gamma^*$ liefert.

Der für die Bildung der Modell-Störgrösse benötigte, dem induktiven Spannungsabfall des Stromrichters entsprechende Stromrichterparameter $dx_A$ bzw. $dx_B$ kann in den jeweiligen Rechenschaltungen selbsttätig nachgestellt werden, in dem jeweils bei jeder Ventillöschung aus dem gemessenen Zünd- und Löschwinkel der tatsächlich aufgetretene induktive Spannungsabfall bestimmt und mit dem errechneten Wert verglichen wird, entsprechend der Beziehung: $U_B (\cos\alpha_B - \cos\gamma) = 2\,dx_B \cdot i_{dB}$. Entsprechend diesem Vergleichsergebnis kann dann der Parameter $2dx_B$ nachgeregelt werden, wie dies durch die Parameter-Nachführungseinrichtung 48 in Fig. 6 angedeutet ist.

Ferner ist in Fig. 6 symbolisch angedeutet, dass der Steuersatz STB die Steuersignale $S_\alpha$ durch Überwachung der oben aufgeführten Zündbedingung bildet.

Die Vorausberechnung des Überlappungswinkels, der jeweils bei der momentanen Phasenlage $\varphi(t)$ des Netzes zum Soll-Löschwinkel $\gamma^*$ sowie den Momentanwerten von $i_{dB}$ und $U_B$ gehört, kann z.B. im Millisekundentakt in einem Mikrocomputer 43B geschehen, wie für den Fall einer Kurzkupplung (Induktivität L) in Fig. 7 dargestellt ist. Auch hier ist von der Modell-Störgrösse $\tilde{U}_{dB}$ als Vorsteuerspannung $U_{dAv}$ der Station A Gebrauch gemacht, wobei sich die Rechenschaltung 44 noch wesentlich vereinfachen lässt, wenn nicht vom Steuerwinkel $\alpha_B$ selbst, sondern vom vorgegebenen Löschwinkel $\gamma^*$ oder verwandten, z.B. im Mikrocomputer selbst gebildeten Grössen ausgegangen wird. Insbesondere kann z.B. anstelle von $\tilde{U}_{dB}$ auch die Grösse $U_B \cos\gamma^* - dx_B \cdot i_{dB}$ über ein Dynamikglied, das das Übertragungsverhalten von Stromrichtern und HGÜ nachbildet, der Vorsteuereinrichtung 42A aufgeschaltet werden.

Ferner zeigt Fig. 7, dass als Führungsgrösse der Station A vorteilhaft die Wirkleistung P der HGÜ verwendet wird. Aus der Regeldifferenz $P^* - P$ bildet dabei ein überlagerter Wirkleistungsregler 51 den Sollwert $i_d^*$ des Stromreglers 41A. Auch dieser Sollwert $i_d^*$ kann vorteilhaft mit einer Störgrösse $\tilde{i}_d$ am Additionsglied 52 vorgesteuert werden, wobei $\tilde{i}_d = P^*/U_{dB}$ vom Dividierer 53 bereitgestellt wird.

Fig. 8 zeigt eine Ausführungsform der Station B, bei der der Hochlaufgeber 66B zunächst eine Steuergrösse liefert, die (gegebenenfalls über ein Steuersatz-Glättungsglied 415B) den Steuerwinkel $\alpha_B$ des Stromrichters gesteuert vorgibt. Die Grösse $\alpha_B^*$ kann von einem nicht dargestellten Führungsgrössenregler (z.B. einem Wirkleistungsregler oder einem Regler für die HGÜ-Spannung $U_{dB}$) vorgegeben oder entsprechend dem bereits geschilderten gesteuerten Betrieb rechnerisch vorgegeben sein. Mit 59 ist dabei eine Vorsteuereinrichtung angedeutet, die den auf den Soll-Winkel $\alpha_B^*$ wirkenden induktiven Gleichspannungsabfall kompensiert, der von einem Rechenzusatz 43B'' bereitgestellt wird. Der bereits in Fig. 7 enthaltene Mikrocomputer 43B' ermittelt ferner den Cosinus eines Vorsteuerwinkels $\alpha_{Bv}$, der sowohl die vom induktiven Gleichspannungsabfall hervorgerufene Spannungsdifferenz zwischen der ideellen zu $\gamma^*$ gehörenden ideellen, Leerlaufgleichspannung und der Spannung $U_B$ wie auch die ebenfalls vom induktiven Gleichspannungsabfall hervorgerufene Winkelverschiebung berücksichtigt, die zwischen dem Winkel $\alpha_B$ und dem zur Spannung $U_B$ gehörenden ideellen Zündwinkel besteht.

Das Linearisierungsglied 40B' stellt dabei für eine Begrenzungsschaltung 58 einen maximalen Löschwinkel $\alpha_{max}$ bereit, der sich aus $180° - (\gamma^* - U + \triangle x_B)$ ergibt), wobei $\triangle x_B$ als Ausgangssignal eines Löschwinkelreglers 67B bereitgestellt ist.

Solange die Begrenzungsschaltung 58 also nicht in Betrieb ist, ist der Stromrichter durch Vorgabe von $\alpha_B^*$ gesteuert betrieben. Wenn jedoch der kompensierte Winkel $\alpha_B^*$ den vorgegebenen Grenzwinkel $\alpha_{max}$ erreicht, greift die Löschwinkelregelung ein und der Stromrichter wird mit geregeltem Löschwinkel betrieben. Ist der Löschwinkelregler 41B inaktiviert

(z.B. durch einen Kurzschlussschalter 67B), so bestimmt allein der Vorsteuerwinkel $\alpha_{Bv}$ den Grenzwinkel $\alpha_{max}$. Durch den Eingriff der Winkelbegrenzung 58 wird dann die Station A mit einem gesteuerten Löschwinkel betrieben.

In der Regel sorgt die beschriebene Berücksichtigung des induktiven Gleichspannungsabfalls dafür, dass die Wechselrichtertrittgrenze eingehalten wird, solange sich $i_{dB}$ und $U_B$ während eines Kommutierungsvorgangs nicht allzusehr ändern und daher der vorausberechnete Übertragungswinkel u mit dem tatsächlichen Überlappungswinkel hinreichend übereinstimmt. Dadurch ist ein Betrieb mit maximalem Zündwinkel (maximaler Wirkleistungsübertragung bzw. minimaler Blindleistung) möglich. Ein grösserer Sicherheitsabstand zur Wechselrichtertrittgrenze ist dabei nicht erforderlich, solange sichergestellt ist, dass auch im Extremfall, in dem plötzliche Änderungen von $i_d$ oder $U_b$ zum Kippen des Wechselrichters führen, der Stromrichter auf einen Störungsbetrieb umgeschaltet wird nach Beendigung einer Störung rasch wieder den Normalbetrieb aufnehmen kann.

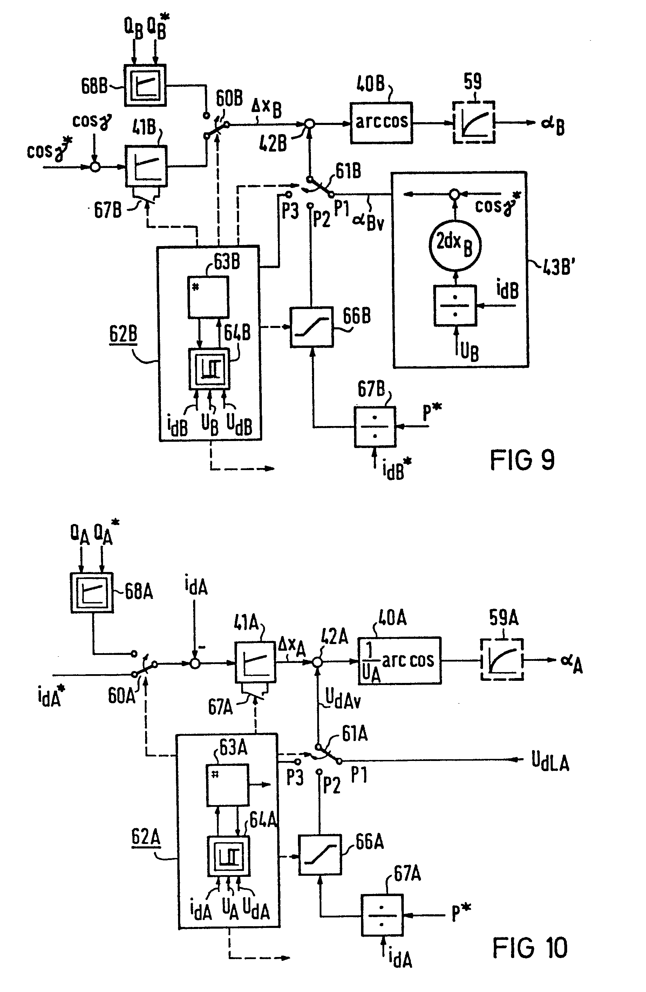

Hierzu ist in der bevorzugten Ausführungsform der Steuer- und Regeleinrichtung 4B nach Fig. 9 eine Überwachungs- und Programmschaltung 62B vorgesehen, die eine Speicherschaltung 63B (z.B. einen programmierten Mikroprozessor) und eine Überwachungseinrichtung 64B enthält und noch besprochen werden wird.

Die Einrichtung 62B betätigt zwei Umschalter 60B und 61B, deren in Fig. 9 gezeigte Schalterstellung dem Normalbetrieb entspricht. In diesem Normalbetrieb wird also die vom Mikrocomputer 43B' bereitgestellte Vorsteuerspannung (Vorsteuerwinkel $\alpha_{BV}$) über die Schalterstellung P1 der Vorsteuereinrichtung 42B zugeführt und zur Steuergrösse $\triangle x_B$ des Zündwinkels $\alpha_B$ addiert, die von einem Führungsgrössenregler, insbesondere einem Löschwinkelregler 41B bereitgestellt wird. Eine im einzelnen nicht dargestellte Regeleinrichtung 68B kann dabei durch Umlegen des Schalters 60B auf die Vorsteuereinrichtung so umgeschaltet werden, dass z.B. bei einem Notbetrieb der Steuerwinkel entsprechend den Bedürfnissen des Netzes $N_B$, (z.B. entsprechend einem zur näherungsweisen Spannungskonstanthaltung erforderlichen Blindleistungssollwert $Q_B^*$) bereitgestellt wird.

In der Schalterstellung P2 wird dem Eingang der Vorsteuereinrichtung 42B anstelle des Modellwertes für die Modell-Störgrösse $\alpha_{BV}$ ein anderer Modellwert zugeführt, der von einem Hochlaufgeber 66B geliefert wird. Der Endwert dieses Hochlaufgebers ist durch Werte bestimmt, die für die normale Leistungsübertragung der HGÜ im störungsfreien Betrieb vorgegeben sind, z.B. entsprechend einem Normalwert $U_B^*$ für die HGÜ-Spannung, der von einem Dividierer 67B als Quotient der Nenn-Wirkleistung $P^*$ und des Nenn-HGÜ-Stromes $i_{dB}^*$ für den Normalbetrieb errechnet wird.

Die Schalterstellung P3 ist dem Fall vorbehalten, dass (z.B. zur Stillsetzung der HGÜ oder zum Übergang in den Normalbetrieb) der Steuerwinkel $\alpha_B$ durch pulsartige Aufschaltung eines Zusatzsollwertes vorübergehend verschoben werden muss.

Die Station A ist weitgehend gleichartig aufgebaut, gleiche Bauteile tragen daher die gleichen, jetzt mit dem Buchstaben A versehenen Ziffern (Fig. 10).

Abgesehen von einer möglicherweise etwas anderen Funktion des Linearisierungsgliedes 40A ist in der Station A vorgesehen, dass der Umschalter 60A den für den Normalbetrieb vorgesehenen Stromsollwert $i_{dA}^*$ für den Stromregler 41A auf einen Stromsollwert umschaltet, der von einer übergeordneten Regeleinrichtung 68A entsprechend den Bedürfnissen des Netzes NA im Störungsfall geliefert wird. Ferner ist in der Position P1 des Umschalters 61A als Modell-Störgrösse $U_{dAV}$ im Normalbetrieb die Spannung $U_{dLA}$, also die bei Verwendung von Filterkreisen zwischen den Filterkreisen und dem HGÜ-Anschluss der Station A abgegriffene Gleichspannung, der Vorsteuereinrichtung 42A aufgeschaltet.

In beiden Stationen können ferner die Hochlaufgeber 66A, 66B sowie die Führungsgrössenregler 41A und 41B von der Steuer- und Programmschaltung inaktiviert werden. Ausserdem ist vorgesehen, dass im Störungsfall die Einrichtungen 62A und 62B entsprechende Störungssignale zur Stillsetzung der Stromrichter, z.B. durch Ansteuern der Blockierschaltungen BS aus Fig. 1, abgeben.

*Überwachung von Störfällen*

Bei dem geschilderten Normalbetrieb entstehen keine Komplikationen, die von den Totzeiten und Verarbeitungszeiten von Fernwirksignalen herrühren und häufig eine träge Regelung des HGÜ-Betriebes erzwingen.

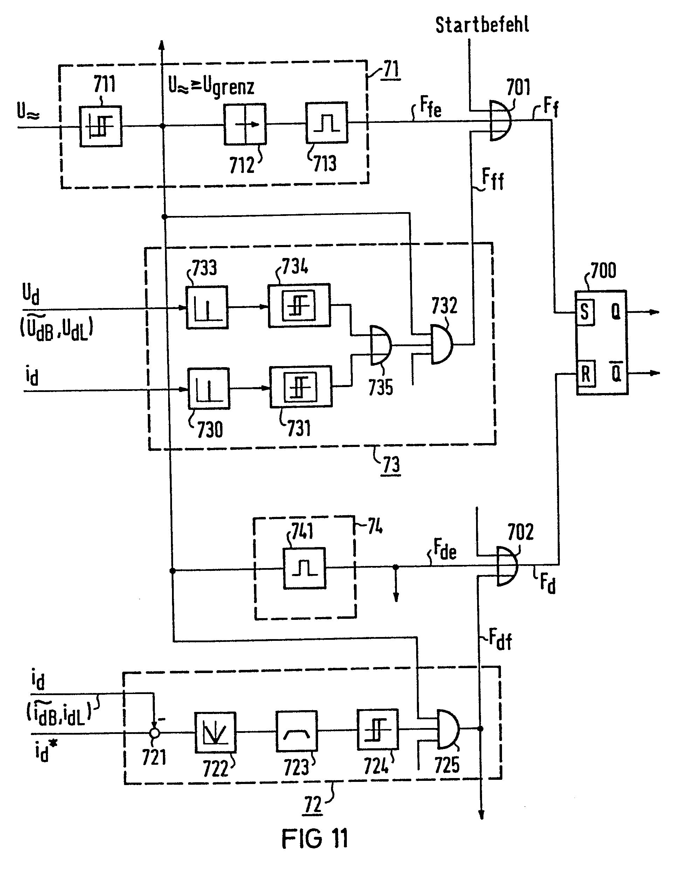

Der normale Betrieb der Stationen ist aber nur dann möglich, wenn beide Netze NA und NB und beide Stromrichter intakt sind. Bei einem Ausfall eines Netzes oder eines Stromrichters muss in einen Notbetrieb übergegangen werden. Daher ist in beiden Stationen jeweils eine Überwachungsvorrichtung nötig, die den ordnungsgemässen Betrieb in beiden Stationen überwacht. Eine derartige Überwachungseinrichtung ist in Fig. 11 dargestellt und sei zunächst für den Stromrichter A erläutert.

Diese Überwachung und der wechselweise Übergang zwischen Normalbetrieb und Notbetrieb bei Störung soll ebenfalls möglichst ohne Fernwirksignale auskommen. Vielmehr sollen nach einem weiteren Grundgedanken der Erfindung jeweils die nötigen Informationen über den in der fremden Station unterbrochenen oder wieder aufgenommenen Normalbetrieb an den Auswirkungen dieses Betriebes in der eigenen Station erkannt werden. Dabei kann es zum Erzeugen eindeutig erkennbarer Signale vorteilhaft sein, dass der Übergang in der fremden Station in einer bestimmten Weise vorgenommen wird. Während diese Massnahmen zum Übergang vom und in den Normalbetrieb später besprochen wird, sei anhand der Fig. 11 bis 14 zunächst der Aufbau der Überwachungseinrichtung erläutert.

In diesen Figuren ist jeweils nur der Aufbau der Überwachungseinrichtung einer Station dargestellt. Die andere Station enthält eine identische Einrichtung und die in einer derartigen Einrichtung erzeugten Signale $F_{de}$, $F_{ef}$, ... sind, wenn nötig, durch den Buchstaben derjenigen Station zu ergänzen, in der sie gebildet werden (z.B. $F_{deA}$, $F_{dfA}$, ... in der Station A).

Der Vorteil dieser Überwachungseinrichtung wird in dem Verzicht auf Fernwirksignal-Leitungen gesehen. Ein Beginn oder Ende einer Störung der fremden Station wird an den gleichstromseitigen Eingängen der eigenen Station zum frühest möglichen Zeitpunkt erkannt. Sollten aus Sicherheitsgründen trotzdem eigene Signalleitungen die beiden Stationen verbinden, so lösen die damit übertragenen Signale normalerweise nicht unmittelbar Massnahmen zum Stillsetzen oder Anfahren der eigenen Station aus. Vielmehr werden diese Massnahmen letztlich von den HGÜ-Strömen (z.B. in der Station A vor Messwerten $i_{dA}$ und/oder $i_{dLA}$) und den HGÜ-Spannungen (z.B. $U_{dA}$ bzw. $U_{dLA}$) und Verknüpfungen der Messgrössen (insbesondere Verknüpfungen mit Messwerten für Amplitude und gegebenenfalls Phasenlage des eigenen Wechselspannungsnetzes) ausgelöst.

Die Überwachungseinrichtung ist darüber hinaus auch in der Lage, den störungsfreien bzw. gestörten Zustand der eigenen Station zu melden und die jeweilige Meldung zu speichern.

Die Neztspannungsamplitude $U_{\approx}$ (im Fall der Station A also die Spannung $U_A$) wird mittels eines Grenzwertmelders 711 darauf überwacht, ob ein gewisser für den ungestörten Betrieb vorgegebener Minimalwert überschritten ist; das Ausgangssignal $G_{711}$ = «1» zeigt somit ein intaktes Wechselspannungsnetz an.

Das Überwachungssignal $G_{711}$ kann insbesondere dazu verwendet werden, um das Ausgangssignal Q eines Störungsgedächtnisses 700 auf das zum ungestörten Normalbetrieb gehörende Signal Q = 1 zu setzen. Das Gedächtnis ist z.B. als ein Flip-Flop ausgebildet, dessen Setzeingang über ein ODER-Gatter 701 durch ein den Normalbetrieb freigebendes Freigabesignal $F_f$ gesetzt wird. Dieses Freigabesignal wird zunächst bei Beendigung einer Störung des eigenen Netzes dadurch erzeugt, dass das Wiedererreichen des Grenzwertes $U_{grenz}$ über ein Verzögerungsglied 712 (Zeitkonstante $T_{syn}$) eine Zeitstufe 713 anstösst, die somit nach einer durch die Verzögerungszeit $T_{syn}$ vorgegebenen Verzögerung einen Impuls («Selbstfreigabeimpuls» $F_{fe}$) vorgegebener Länge bildet. Die Verzögerungszeit $T_{syn}$ berücksichtigt, dass nach Wiederkehr der eigenen Netzspannung noch eine bestimmte Zeit erforderlich ist, bis der eigene Referenzspannungsgenerator aus der wiederkehrenden Netzspannung eine für den Normalbetrieb des eigenen Stromrichters erforderliche netzsynchrone Referenzspannung erzeugt.

Unterschreitet jedoch bei einer Netzstörung die eigene Netzspannung den Grenzwert, so wird aus $G_{711}$ = «0» über eine Baugruppe 74, die als wichtigstes Element eine weitere Zeitstufe 741 enthält, ein Impuls $F_{de}$ («Selbststörungs-Meldeimpuls») gebildet, der über ein ODER-Gatter 702 den Rücksetzeingang des Störungsgedächtnisses 700 mit dem entsprechenden Störungssignal $F_d$ = 1 beaufschlagt. Die ODER-Gatter 701 und 702 können über weitere Eingänge auch andere, geeignete Störungs- bzw. Freigabemeldungen erhalten, wobei auch andere kritische Grössen des eigenen Wechselspannungsnetzes (z.B. unzulässige Änderungenvon Frequenz oder Phase) überwacht werden. Der Grenzwertmelder 711 und die anderen Überwachungsglieder zur Erfassung und Überwachung der eigenen Wechselspannung können dabei insbesondere im Referenzspannungsgenerator unter Ausnutzung der dort ohnehin erzeugten Signale untergebracht sein. Z.B. kann auch der störungsfreie Betrieb des eigenen Stromrichters überwacht oder mittels eines Startbefehls die Inbetriebnahme aus dem Stillstand ermöglicht werden.

Der Signalzustand $Q = 1$, der durch das Freigabesignal $F_f$ gesetzt ist, zeigt nicht nur den störungsfreien Zustand der eigenen Station, sondern der gesamten Anlage an. Entsprechend zeigt der Signalzustand $\overline{Q} = 1$ eine Störung an und wird durch das «Störungssignal» («Defektsignal») $F_d$ gesetzt.

Hierzu werden die Ausgänge der Baugruppen 71 und 74, die die eigene Station überwachen, mit einem «Fremdfreigabeimpuls» $F_{ff}$ bzw. einem «Fremdstörungs-Meldeimpuls» $F_{df}$ über die ODER-Gatter 701 und 702 zum «Freigabesignal» $F_f$ bzw. zum «Störungssignal» $F_d$ verknüpft. Diese Impulse $F_{ff}$ und $F_{df}$ werden von den in der eigenen Station angeordneten Baugruppen 73 bzw. 72 erzeugt und melden durch Überwachung der elektrischen Grössen an den Gleichspannungsanschlüssen der eigenen Station, dass die jeweils andere («fremde») Station den Normalbetrieb bzw. einen störungsbedingten Notbetrieb aufgenommen hat. Sofern das eigene Netz ungestört ist, lösen die Impulse $F_{ff}$ und $F_{df}$ also einen dem jeweiligen — ungestörten oder gestörten — Zustand der anderen Station entsprechenden Betrieb der eigenen Station aus.

Eine Fremdstörung liegt z.B. immer dann vor, wenn in der fremden Station ein Kurzschluss des Netzes oder des Stromrichters auftritt und daher der Gleichstrom als Fehlerstrom über diesen Kurzschluss fliesst. Ein derartiger Fehlerstrom macht sich mit einer durch die Laufzeit der HGÜ bedingten Verzögerung in der eigenen Station dadurch bemerkbar, dass der Gleichstrom $i_d$ erheblich vom für den Normalbetrieb vorgesehenen Stromsollwert abweicht: Die Abweichung $i_d^* - i_d$ übersteigt kritische Werte. Dies tritt auch dann auf, wenn bei längerdauernder Störung die Leitung stromlos ist und daher der Strom an den gleichspannungsseitigen Anschlüssen der eigenen Station nicht mehr auf die Regelung reagiert.

Daher ist in der die Fremdstörung erfassenden Baugruppe 72 ein Substraktionsglied 721 zur Bildung der Differenz $i_d^* - i_d$ in der eigenen Station und ein nachgeschalteter Gleichrichter 722 vorgesehen. Ein nachgeschaltetes Bandpassfilter sorgt dafür, dass kurzzeitige, insbesondere während der Kommutierungszeiten des eigenen Stromrichters auftretende Stromabweichungen ebenso unterdrückt werden, wie ständige oder verhältnismässig langdauernde Abweichungen. Solche anhaltenden Abweichungen entstehen z.B. beim Hochfahren auf den Normalbetrieb, wobei die HGÜ nach einer Störung den vollen Gleichstrom $i_d^*$ übertragen kann. Ein plötzlich einsetzendes und einige Millisekunden dauerndes Ansteigen oder Absinken des Gleichstromes wird am Ausgang des Filters 723 gemeldet und mittels eines Grenzwertmelders 734 erfasst. Da eine derartige Störung aber auch auftritt, wenn die eigene Station gestört ist, wird das Ausgangssignal des Grenzwertmelders 724 an einem UND-Gatter 725 nur dann freigegeben, wenn (z.B. mittels des Grenzwertmelders 711) der ordnungsgemässe Zustand der eigenen Station gemeldet ist.

Hat dagegen die fremde Station den Normalbetrieb nach Beseitigung einer Fremdstörung wieder aufgenommen, so macht sich dies in der eigenen Station — wiederum nach einer durch die Laufzeit der HGÜ bedingten Verzögerung — in einer sprungshaften Änderung von Spannung und/oder Strom an den Gleichstromanschlüssen bemerkbar. Daher wird z.B. die Eingangsgleichspannung $U_d$ bzw. $U_{dL}$ (z.B. $U_d = U_{dA}$, $U_{dL} = U_{dLA}$) mittels eines Differenziergliedes 730 differenziert, um anschliessend in einer Grenzwertmeldestufe 731 einen Fremdfreigabe-Meldeimpuls zu erzeugen, sobald die Änderung der Spannung einen bestimmten Grenzwert überschreitet. Das Ausgangssignal dieser Grenzwertmeldestufe 731 kann wiederum an einem UND-Gatter 732 verriegelt werden, wenn die Baugruppe 71 eine Störung des eigenen Netzes meldet.

Es kann dabei vorteilhaft sein, den entsprechenden Fremdfreigabe-Meldeimpuls $F_{ff}$ auch durch entsprechende Überwachung des Stromes zu bilden (Elemente 733, 734, 735).

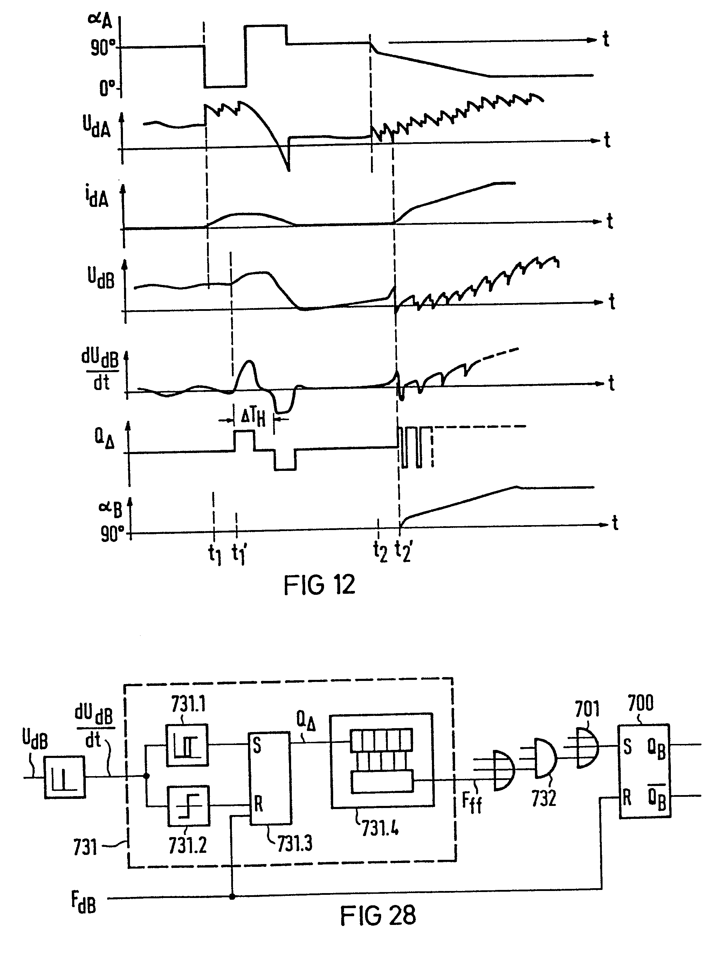

Die Grenzwertmeldestufe 731 kann zur Erhöhung der Sicherheit für die Erkennung des wiederaufgenommenen Betriebes in der Fremdstation entsprechend Fig. 12 aufgebaut sein. Die von der fremden Station (im Beispiel der Fig. 12: Station A) bei der Wiederaufnahme des Normalbetriebes hervorgerufenen Änderungen der elektrischen Grössen (z.B. $U_{dB}$) an den Gleichspannungsanschlüssen der eigenen Station (Station B) weisen einen typischen Kurvenverlauf auf, aus dem der Impuls $F_{ff}$ abgeleitet wird.

In Fig. 12 ist angenommen, dass die Strecke während einer Störung stromlos ist und der Stromrichter 1A daher gesperrt oder auf die Gleichspannung Null ($\alpha_A = 90°$) gesteuert ist. Um in Station B den in der Station A gestarteten Normalbetrieb zu erkennen, wird die Aufnahme des Gleichrichterbetriebes durch eine impulsartige Verschiebung von Steuerwinkel $\alpha_A$ zum Zeitpunkt $t_1$ eingeleitet. Zum Zeitpunkt $t_2$ wird ein rampenförmiger Hochlauf des Steuerwinkels auf einen betriebsmässigen Wert nahe Vollaussteuerung vorgenommen. Dies führt zum dargestellten Verlauf von $U_{dA}$ und $i_{dA}$, wobei $t_2$ insbesondere so vorgegeben werden kann, dass $i_{dA} > 0$ erhalten bleibt.

Mit einer durch die Streckenlaufzeit bedingten Verzögerung ergibt sich ein typischer Spannungsverlauf $U_{dB}$ in der Station B, dessen Differential in der Überwachungseinrichtung der Station B auf Überschreiten eines positiven und eines negativen Grenzwertes überwacht wird. Die hierzu vorgesehenen Grenzwertmelder 731.1 und 731.2 setzen daher für die Dauer $\triangle T_H$ ein Flip-Flop 731.3, das seit dem Beginn der Störung (Störungssignal $F_{dB}$) rückgesetzt ist. Im Glied 731.4 wird die Dauer $\triangle T_H$ auf ihre Signifikanz überwacht, z.B. indem man das Ausgangssignal des Flip-Flops in ein Schieberegister eingibt, das einen Fremd-Freigabeimpuls $F_{ff}$ erzeugt, wenn das Ausgangssignal $Q_D$ die eingespeicherte typische Dauer $\triangle T_H$ zeigt. Die Station B nimmt dann nach einer vorgegebenen Verzögerungszeit ebenfalls mit einem rampenförmigen Hochlauf des Steuerwinkels $\alpha_B$ ihrerseits zum Zeitpunkt $t_2'$ den Normalbetrieb wieder auf.

Ebenso können auch weitere Überwachungen und Verriegelungen der jeweiligen Freigabesignale bzw. Störsignale vorgesehen sein, um speziell auftretende Betriebsfälle eindeutig zu erfassen. Einsatz und Aufbau derartiger Verriegelungen kann der Fachmann jederzeit selbständig bei der Schaltung nach Fig. 11 ergänzend anbringen, sobald er bei der Untersuchung der möglichen Betriebszustände und Betrtiebsausfälle mögliche Unklarheiten bei der Erzeugung des Fremdfreigabesignals, des Fremdstörungssignals, des Selbstfreigabesignals und Selbststörungssignals erkennt.

Die in Fig. 11 gezeigte, besonders einfache Überwachungseinrichtung kann durch weitere Überwachungselemente erweitert oder ergänzt werden, die eine genauere Erkennung der Betriebszustände der fremden Station zulassen, wobei die an den HGÜ-Anschlüssen abgegriffene Information über die Betriebsgrössen der fremden Station auch zur Regelung der eigenen Station im Normal- und Notbetrieb verwendet werden können.

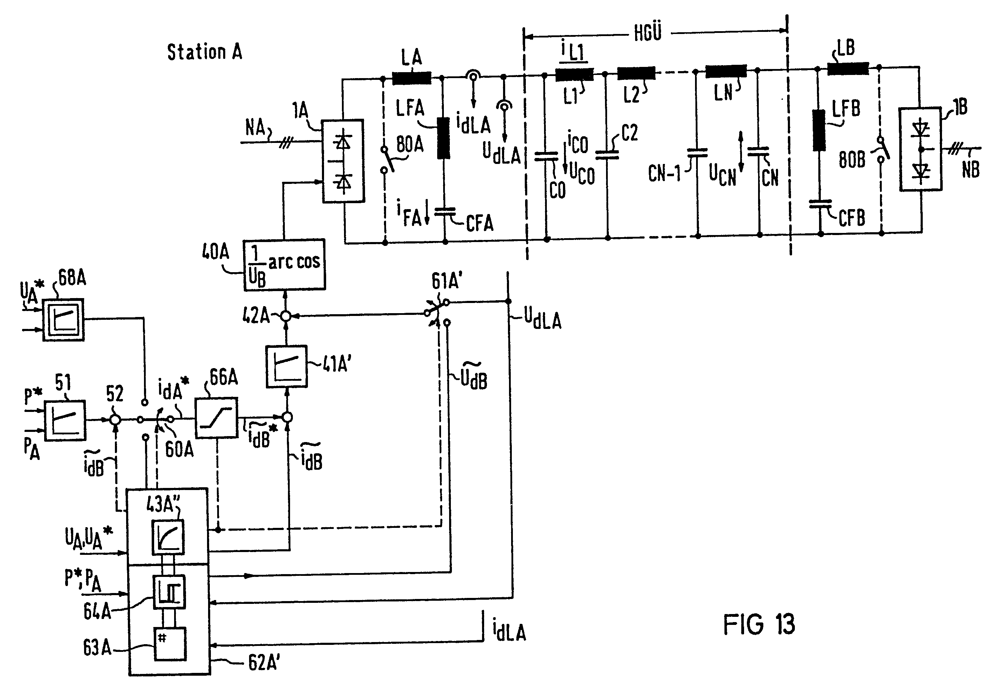

Dies ist anhand der Station A in Fig. 13 bei einer HGÜ erläutert, deren Stromrichter 1A und 1B jeweils über Stromrichterdrosseln und Filterkreise gemäss Fig. 1 an die HGÜ angeschlossen sind. Die HGÜ selbst ist im Ersatzschaltbild als Hintereinanderschaltung von Längsinduktivitäten L1, ..., LN und Querkapazitäten C0, ..., CN dargestellt.

In der Station A ist wieder die Vorsteuereinrichtung mit Additionsglied 42A und Linearisierungseinrichtung 40A erkennbar, der neben dem Ausgangssignal des Führungsgrössenreglers 41A' über einen Umschalter 61A' als Vorsteuerspannung $U_{dAv}$ die Störspannung (HGÜ-Spannung $U_{dLA}$) oder ein Modellwert $\tilde{U}_{dB}$ für die Störspannung aufschaltbar ist.

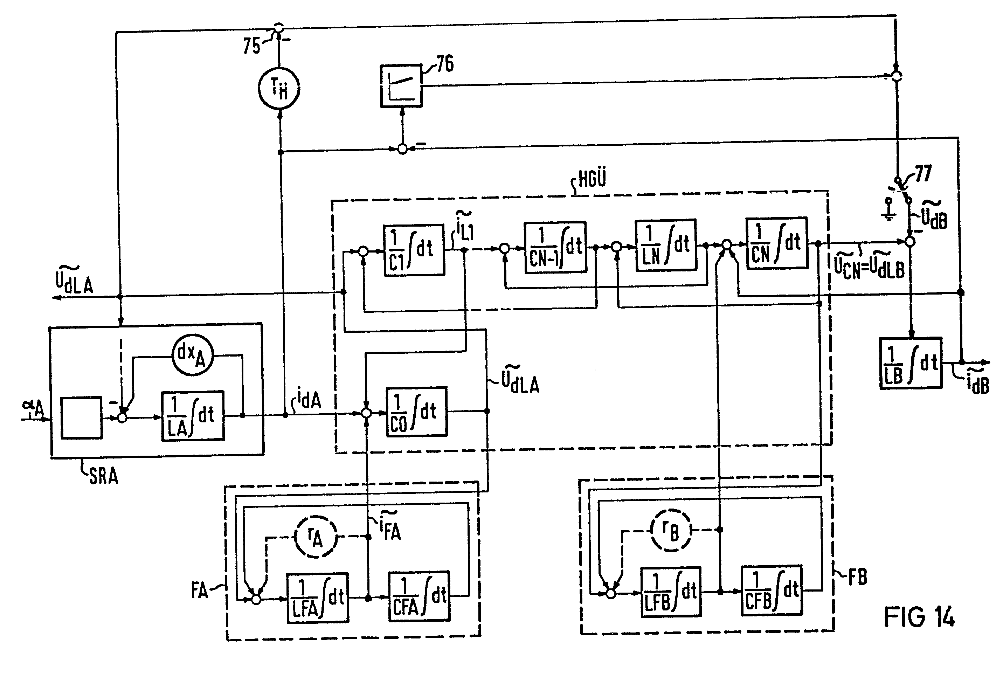

Die Rechenschaltung zur Erzeugung des Modellwertes $\tilde{U}_{dB}$ ist hier in die Überwachungs- und Programmschaltung 62A' als ein zusätzlicher Rechenbaustein 43A'' eingebaut, der teilweise auch Überwachungsfunktion hat, wie Fig. 14 erläutern wird. Er liefert gleichzeitig auch einen Modellwert $\tilde{i}_{dB}$ für den HGÜ-Strom $i_{dB}$ der fremden Station, der als Ersatz-Istwert für den Führungsgrössenregler 41A' dient. Der zugehörige Sollwert $\tilde{i}_{dB}^*$ ist vom Hochlaufgeber 66A geliefert, dem wahlweise (Umschalter 60A) das Ausgangssignal eines für den Notbetrieb vorgesehenen übergeordneten Reglers 68A (z.B. für die Amplitude $U_A$ des Wechselspannungsnetzes NA) oder das Ausgangssignal eines für den Normalbetrieb vorgesehenen übergeordneten Reglers 51 aufgeschaltet ist. Für den Regler 51 kann insbesondere die gleiche Vorsteuerung vorgesehen sein wie nach Fig. 7.

Im Rechenbaustein 43A'' ist die Struktur der HGÜ z.B. auf die in Fg. 14 angegebene Weise nachgebildet. Am Block SRA ist hierfür der Istwert des Stromrichter-Ausgangsgleichstroms $i_{dA}$ abgegriffen und der die HGÜ nachbildenden Schaltung zugeführt. Die Filterkreise der beiden Stationen sind durch die Schaltungen FA und FB nachgebildet.

Mit den Bezeichnungen der Fig. 1 und 13 werden dadurch Modellwerte $\tilde{i}_{FA}$, $\tilde{U}_{dLA}$ und $\tilde{U}_{CN} = \tilde{U}_{dLB}$ für die elektrischen Grössen $i_{fA}$, $U_{dLA}$ und $U_{dLB}$ der HGÜ gebildet. Vom Filterkreis der Station B braucht nur die Stromrichterdrossel LB als Integrator nachgebildet zu werden, die aus $U_{dLB}$ und einem Modellwert $\tilde{U}_{dB}$ den Modell-Strom $\tilde{i}_{dB}$ liefert.

Zur Bildung von $U_{dB}$ kann zunächst mittels des Subtraktionsgliedes 75 vom Modellwert $\tilde{U}_{dLA}$ der ohmsche Spannungsabfall $r_H \cdot i_{dA}$ (entsprechend dem Widerstand $r_H$ der HGÜ) subtrahiert werden. Ferner muss aber berücksichtigt werden, dass der fremde Stromrichter seine HGÜ-Spannung $U_{dB}$ durch Stromentnahme aus der HGÜ regelt. Dieser Strom $i_{dB}$ ist aber durch den — vor der HGÜ-Laufzeit eingeprägten — Strom $i_{dA}$ bestimmt.

Deshalb kann die Regeldifferenz $i_{dA} - \tilde{i}_{dB}$ durch einen Nachführregler 76 ausgeregelt werden, dessen Ausgangssignal korrigierend auf $U_{dB}$ wirkt und letztlich dafür sorgt, dass der Modellstrom $\tilde{i}_{dB}$ im Normalbetrieb dem tatsächlichen Strom $i_{dB}$ der fremden Station entspricht.

An der Differenz $U_{dLA} - \tilde{U}_{dLA}$ oder der Reglerdifferenz $i_{dA} - \tilde{i}_{dB}$ kann nun ebensogut wie am Vergleichsglied 721 der Überwachungseinrichtung der Fig. 11 ein Kippen des fremden Stromrichters erkannt werden. Bei einer derartigen Störung ist nämlich die Gleichspannung $U_{dB}$ kurzgeschlossen und die HGÜ entlädt sich über den Kurzschluss. Bei zunächst unverändertem Steuerwinkel $\alpha_A$ in der eigenen Station steigt daher der Strom $i_{dA}$ nach einer durch die HGÜ-Laufzeit bedingten Verzögerung. Da die Nachbildung nach Fig. 14 aber diesen Kurzschluss noch nicht berücksichtigt, nimmt die Differenz $i_{dA} - \tilde{i}_{dB}$ hohe Werte an.

Wird in der Modellschaltung der Fig. 14 nach einer derartigen Störungsmeldung über den Umschalter 77 jetzt die Spannung $\tilde{U}_{dB}$ kurzgeschlossen, so wird auch der Störfall der kurzgeschlossenen fremden Station (gekippter Wechselrichter) nachgebildet. In diesem Zustand ist die Modellschaltung in der Lage, an einer erneuten plötzlichen Änderung von $i_{dA} - \tilde{i}_{dB}$ zu erkennen, wenn der fremde Stromrichter seinen Normalbetrieb wieder aufnimmt und der HGÜ eine Spannung $U_{dB} \neq 0$ einprägt. Der Umschalter 77 wird dann erneut umgelegt und es erfolgt die Simulierung des wiederaufgenommenen Normalbetriebes.

Es handelt sich bei der Modellschaltung nach Fig. 14 demnach um eine erste Form eines «Netzbeobachters», der simulierte Werte für die elektrischen Grössen der fremden Station allein aus den in seiner eigenen Station vorhandenen elektrischen Grössen ermittelt. Fernwirksignal-Leitungen werden auch hierbei nicht benötigt und die Information über den Betriebszustand der fremden Station steht mit der kürzestmöglichsten Verzögerung, nämlich der Laufzeit der HGÜ selbst, zur Verfügung.

Selbstverständlich kann dieses Prinzip, wonach die fremde Station durch Nachbildung der HGÜ und einiger Schaltungsteile der fremden Station in der eigenen Station überwacht wird, noch verbessert und abgeändert werden, wenn es der Bedarf erfordert. Vorteilhaft ist dabei, dass mit $\tilde{i}_{dB}$ und $\tilde{U}_{dB}$ Modellwerte für elektrische Grössen der anderen Station sowohl für den gestörten wie den ungestörten Betrieb zur Verfügung stehen.

So kann insbesondere, wie bereits dargestellt, der Modell-Strom $i_{dB}$ als Ersatz-Istwert für den Stromregler 41A′ in Fig. 13 verwendet werden, der es damit möglich macht, auch im Störungsfall den über die kurzgeschlossene fremde Station fliessenden Strom zu regeln.

Dieses Prinzip der Netzüberwachung ermöglicht auch, nach einem Störfall das Ende der Störung zu erkennen und — je nach der Art der Störung — innerhalb weniger Millisekunden (z.B. etwa 10 ms) in einen Normalbetrieb mit hoher Leistungsübertragung überzugehen.

*Übergang in den Normalbetrieb: Ventilauswahl und netzgetaktete Zündung*

Bei dem geschilderten Normalbetrieb kann die HGÜ wegen der Möglichkeit einer schnellen Regelung der Leistungsübertragung auch zur Dämpfung von Ausgleichsvorgängen, zur Blindlaststellung der Netze und zu anderen Aufgaben herangezogen werden. Daher ist es für die Benutzer derartiger Anlagen vorteilhaft, wenn nach einem Ausfall der HGÜ der Normalbetrieb möglichst rasch wieder aufgenommen wird.

Hierbei sind verschiedene Störfälle zu unterscheiden.

Tritt in der als Gleichrichter betriebenen ersten Station ein Zusammenbruch des Netzes NA oder ein Stromrichterfehler auf, so kommt es zu einem Kurzschluss der Gleichspannung $U_{dA}$. Hat sich die HGÜ während der ersten Station über einen Kurzschlusspfad oder z.B. auch über den Stromrichter der zweiten Station vollkommen entladen und ist die zweite Station zur Vermeidung einer Energiefluss-Umkehr abgeschaltet, ohne dass aber in der zweiten Station eine Störung im Wechselspannungsnetz oder im Stromrichter vorliegt («gesunde» Station B), so liegt nach Ende der Störung die Aufgabe darin, bei Wiederkehr der Netzspannung $U_A$ von der nunmehr «wieder gesundeten» Station A aus die stromlose HGÜ hochzufahren.

Die gleiche Aufgabe liegt auch vor, wenn nach der Erstinstallation oder nach Wartungsarbeiten die HGÜ in Betrieb genommen wird.

Die Erfindung sieht auch den Fall vor, dass nach einer Gleichrichterstörung die HGÜ nicht vollständig entladen ist. Z.B. kann der Gleichrichterbetrieb nur sehr kurz unterbrochen sein oder es kann der Stromrichter 1A auch durch einen Bypass-Pfad überbrückt sein, ohne dass der Stromrichter 1B stillgesetzt ist. Bei diesem Bypass-Betrieb wirkt die HGÜ dann nur als Blindlast für das Netz NB und bleibt geladen. Der über den Bypasspfad fliessende Strom wirkt dann als Blindstrom für die gesunde Station.

Ein derartiger Bypass-Betrieb hat den Vorteil, dass die HGÜ nicht vom entladenen Zustand aus hochgefahren werden muss, vielmehr muss der Strom nur auf den für den normalen Energietransport vorgesehenen Wert erhöht werden, wodurch sich die Anlaufzeit verkürzt. Ausserdem kann die HGÜ auch während der Störung noch zur Stabilisierung des Netzes in der gesunden Station ausgenutzt werden.

Der Bypass-Pfad kann dabei über einen eigenen Bypass-Schalter (Schalter 80A in Fig. 13) der Station A geschlossen werden; vorteilhaft ist aber der Bypasspfad über in Reihe liegende Ventile des Stromrichters 1A (z.B. die Ventile $R^{+\prime}$, $R^{-\prime}$, $R^{+\prime\prime}$, $R^{-\prime\prime}$ der Fig. 1) geführt. In beiden Fällen gilt zwar $U_{dA} = 0$, jedoch bewirkt der Bypass $i_{dA} \neq 0$, $U_{dLA} \neq 0$ und $U_{dB} \neq 0$.

In diesem Fall muss also berücksichtigt werden, dass die gesunde Station B stromführend ist und dass der bei der Wiederaufnahme des Normalbetriebes anwachsende HGÜ-Strom dort nicht zu einem Wechselrichterkippen führen darf.

In der Station B führt ein Einbruch der Wechselspannung $U_B$ dazu, dass der ins Netz fliessende Strom plötzlich ansteigt und dessen Kommutierung über den für die Wechselrichtertrittgrenze massgebenden maximalen Löschwinkel (Schonwinkel) andauert. Der Wechselrichter kippt daher und schliesst die Spannung $U_{dA}$ kurz. Auch hier kann vorgesehen sein, durch eine Störungsmeldung den Stromrichter 1A der gesunden Station abzuschalten, so dass sich die HGÜ über die kurzgeschlossene Station B entlädt. Vorteilhaft ist aber auch hier, die Station A weiterzubetreiben und die HGÜ nachzuladen, wobei die Station B durch einen Bypasspfad kurzgeschlossen wird. Auch für diesen Bypass-Pfad können ein Bypass-Schalter (80B nach Fig. 13) oder bestimmte, durch Vorprogrammierung ausgewählte, in Reihe liegende Ventile des Stromrichters 1B verwendet werden, oder gleich die Ventile des Stromrichters 1B, die entsprechend der Phasenlage des Wechselspannungsnetzes NB («Wechselrichtertakt») bei der Störung zufällig Strom führen und das Kippen auslösen. Wegen der bereits geschilderten Vorteile des Bypass-Betriebes kann ein Bypass-Pfad in der Station B selbst dann erwünscht sein, wenn an sich je nach Art der auftretenden Störung kein zwangsläufiges Wechselrichterkippen auftritt oder die Benutzer auch ein rechtzeitiges Stillsetzen des Stromrichters 1B zulassen.

Vor allen in dem Fall, dass der Bypasspfad der Station B über die beim Kippen zufällig stromführenden Ventile geführt wird, müssen die Ventile, mit denen der Normalbetrieb netzgetaktet wieder aufgenommen werden soll, einerseits in Abhängigkeit vom Netztakt, d.h. von der Phasenlage der wiederkehrenden Wechselspannung $U_B$, und andererseits in Abhängigkeit von den im Bypass-Betrieb bereits stromführenden Ventilen vorgenommen werden.

Die für den netzgetakteten Anlauf erforderliche Phasenlage der in der «wiedergesundeten» Station wiederkehrenden Wechselspannung kann aber vom Referenzspannungsgenerator zunächst nur unvollkommen erfasst werden, da diese Wechselspannung in der Regel von einem Gegenspannungs- und Oberschwingungs-System überlagert ist, das erst allmählich abklingt. Die Erfindung lässt Synchronisationsfehler bis zu 30° zu und ermöglicht, bereits nach wenigen Millisekunden den Normalbetrieb in der wiedergesundeten Station so aufzunehmen, dass die gesunde Station diesen Betriebszustand rasch erkennen und ihrerseits mit der Aufnahme des Normalbetriebes beantworten kann.

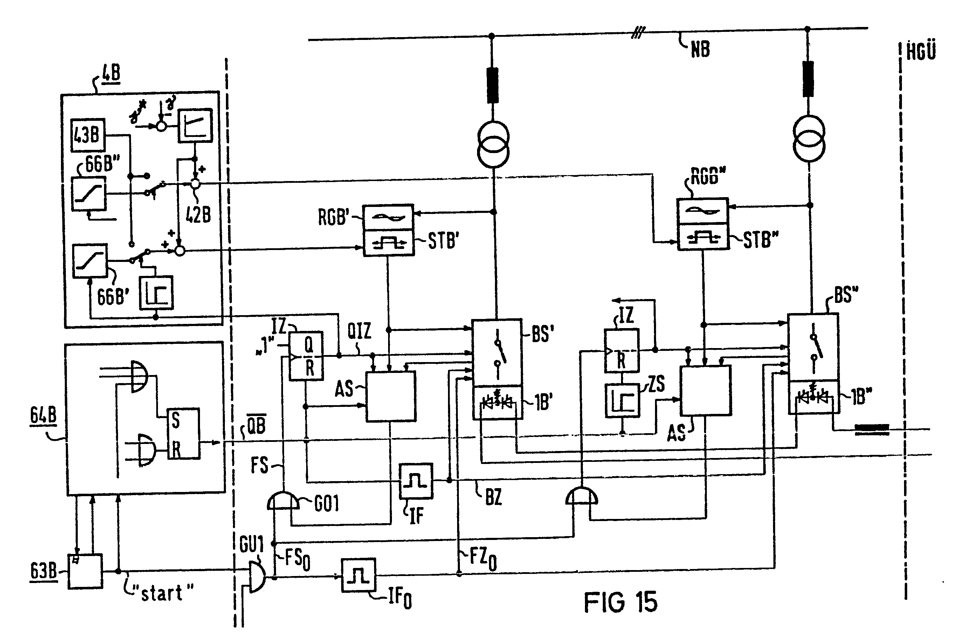

Für die erfindungsgemässe Aufnahme des Normalbetriebes ist es wesentlich, dass die wiedergesundete Station bei Wegfall der Störung über die HGÜ ein Signal schickt, das in der gesunden Station eindeutig erkennbar ist. Vorteilhaft prägt die wiedergesundete Station der HGÜ einen Spannungsimpuls ein. Da diese Einprägung des Spannungsimpulses besonders nach einer Störung im Wechselrichter Schwierigkeiten macht, sei zunächst die Einprägung des Spannungsimpulses in der Station B anhand der Fig. 15 bis 22 beschrieben, wobei sich dann die in der Station A nötigen Vorrichtungsteile lediglich als Vereinfachung der für die Station B bereits beschriebenen Vorrichtung ergibt.

Im linken Teil der Fig. 15 ist zunächst die bereits bekannte Konfiguration aus der Steuer- und Regeleinrichtung 4B, der Überwachungseinrichtung 64B und der Speicherschaltung 63B dargestellt. Da sich diese Figur auf einen aus Teilstromrichtern aufgebauten Stromrichter 1B entsprechend Fig. 1 bezieht, ist vorgesehen, bei der aus Fig. 8 bekannten Struktur der Einrichtung 4B den Hochlaufgeber 66B mit zwei Hochlaufgebern 66B' und 66B'' aufzubauen, die zu getrennten Zeiten gestartet werden können (Zündimpuls-Freigabesignale QIZ) gestartet und mit einer Zeitversetzung, die mittels eines Verzögerungsgliedes ZS eingestellt wird auf die Vorsteuereinrichtungen 42B geschaltet werden können.

Die Überwachungseinrichtung 64B ist nur durch das Störungsgedächtnis 700 und die Gatter 701 und 725 symbolisiert, wobei das Gatter 701 das Freigabesignal $F_{FB}$ auch dann auf das Störgedächtnis 700 gibt, wenn ein (z.B. an der Speicherschaltung 63B abgegriffener) Startimpuls «Start» eingegeben wird.

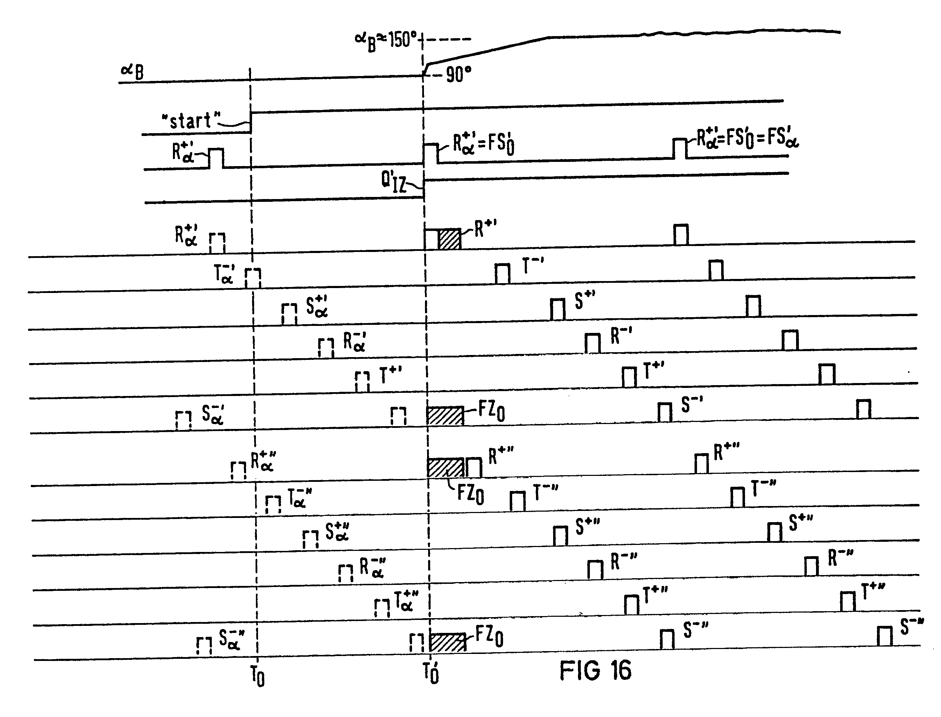

Die Erläuterung der Schaltung sei mit dem Fall begonnen, dass mit einem derartigen Startbefehl die HGÜ aus dem stromlosen Zustand, bei dem über die Blockierschaltungen alle Ventile gesperrt gehalten werden, angefahren wird. In Fig. 16 ist im linken Teil dieser gesperrte Zustand dargestellt. Für $T_0$ sind die Steuerwinkel $\alpha_{B'} = \alpha_{B''} = 90°$, entsprechend der Ausgangsspannung Null des Stromrichters, vorgegeben. Der Steuersatz STB' liefert dann z.B. einen entsprechend $\alpha_B = 90°$ netzsynchronen Zündbefehl $R^{+'}_\alpha$, der zusammen mit dem Startbefehl einem UND-Gatter GU1 (Fig. 15) zugeführt ist und dort erst zum Zeitpunkt $T'_0$ ein Ausgangssignal $FS_0$ erzeugt. Der Zündbefehl $R^{+'}_\alpha$ ist aus dem Zündbefehls-Satz $S'_\alpha$ entsprechend der für den Fall fest vorprogrammierten Betriebsart ausgewählt, da der netzgetaktete Zündzyklus des Stromrichters 1A' mit den Ventilen $R^{+'}$ und $S^{-'}$ beginnen soll.

Das Signal $FS_0$ wird über ein ODER-Gatter GO1 als synchrones Anlauf-Freigabe-Signal FS auf den dynamischen Eingang eines dynamischen Flip-Flops IZ gegeben. Er erzeugt dort das Zündimpuls-Freigabesignal QIZ + 1, mit dem der Hochlaufgeber angestossen wird, wenn keine Netzstörung vorliegt ($\overline{QB} = 0$).

In Fig. 16 sind ferner die vom Steuersatz STB' gebildeten Zündbefehle $R^{+'}_\alpha$, ... $S^{-'}_\alpha$ für den Teilstromrichter 1B' sowie auch die von STB'' gebildeten Befehle $R^{+''}_\alpha$, ... $S^{-''}_\alpha$ für den Teilstromrichter 1B'' gezeigt, wobei zur Vereinfachung $\alpha_{B'} = \alpha_{B''}$ angenommen sei. Diese von den Steuersätzen gebildeten Zündbefehle sind aber vor dem Zeitpunkt $T'_0$ gesperrt und daher nur gestrichelt gezeichnet.

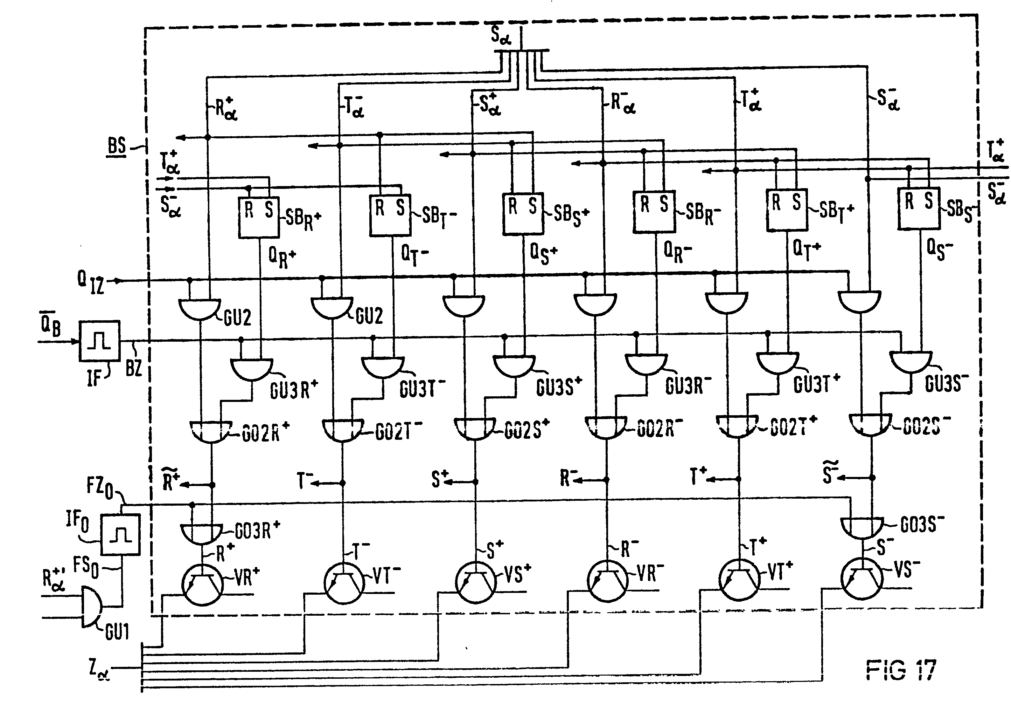

Diese Sperrung geschieht in der von QIZ angesteuerten Blockierschaltung BS', BS'' durch UND-Gatter GU2 gemäss Fig. 17. Durch die Koinzidenz des Startsignals und des Zündbefehls $R^{+'}_\alpha$ an GU1 wird also letztlich QIZ = 1 gesetzt und die Sperrung der Zündbefehle aufgehoben, so dass nunmehr die Zündbefehle auf den entsprechenden Verstärker $VR^+$, ... $VS^-$ durchgeschaltet werden, also in den Teilstromrichtern jeweils die Ventile $R^+$ und $S^-$ zünden.

Diese Ventilzündungen erfolgen zuverlässig, da das Signal $FS_0$ gleichzeitig auch über einen Impulsbildner $IF_0$ einen Impuls $FZ_0$ bildet, der über ODER-Gatter $GO3R^+$, $GO3S^-$ die Verstärker $VR^+$ und $VS^-$ ansteuert. Dies führt dazu, dass der Zündimpuls $R^{+'}$ gegenüber dem vom Steuersatz abgegebenen Zündbefehl $R^{+'}_\alpha$ um die in Fig. 16 schraffiert dargestellte Fläche verlängert wird, während die schraffierten Flächen für die Zündimpulse $S^{-'}_\alpha$, $R^{+''}_\alpha$ und $S^{-''}_\alpha$ die über $GO3R^+$ und $GO3S^-$ eingekoppelten Impulse $FZ_0$ darstellen.

Wird dem jeweiligen Teilstromrichter ein Steuerwinkel $\alpha \leq 90°$ vorgegeben, so zünden daher die Ventile $R^+$, $S^-$ und legen an die HGÜ-Pole 2, 3 eine Spannung (Station A: $U_{dA} \geq 0$, Station B: $U_{dB} \leq 0$ entsprechend dem festgelegten Vorzeichen), die anschliessend durch eine Steuerwinkeländerung auf den für den Normalbetrieb vorgesehenen Betriebswert hochgefahren wird, im Beispiel der Fig. 16 durch Hochlauf des Steuerwinkels auf $\alpha_B = 150°$ in der Station B.

Dies gilt selbst dann, wenn dem gegenüber der Referenzspannung des Referenzspannungsgenerators vorgegebenen Steuerwinkel $\alpha$ wegen eines Fehlwinkels $\delta A < 30°$ des Referenzspannungsgenerators gegenüber der tatsächlichen Phasenlage des Netzes ein tatsächlicher Zündwinkel von maximal 120° entspricht. Denn erst bei diesem Grenzwinkel wird die durch $R^+$, $S^-$ einzukoppelnde verkettete Netzspannung $U_{RS}$ negativ und die eingekoppelten Zündimpulse $R^+$, $S^-$ bleiben wirkungslos.

Dies ändert sich auch dann nicht, wenn zum Zeitpunkt $T'_0$ die Ventilkombination $R^+$, $R^-$ und/oder $S^+$, $S^-$ bereits stromführend ist, wie dies z.B. für einen Bypass-Betrieb bei Netzstörung vorgesehen sein kann. Denn auch dann führen $R^+$ und $S^-$ dazu, dass der Strom auf die Ventilkombination $R^+$, $S^-$ kommutiert.

Enthält die Kombination der Bypass-Ventile auch die Ventile $T^+$, $T^-$, so führt der Zündimpuls zu einem Strom über $R^+$, $T^-$ und der eingekoppelte Impuls $S^-$ bleibt ebenso wirkungslos, wie der nächste Impuls $T^-$, der in dem vom Zündimpuls-Freigabe-Signal QIZ = 1 zum Zeitpunkt $T'_0$ freigegebenen normalen Zündzyklus auf den Impuls $R^+$ folgt. Erst der übernächste Zündimpuls des Zündzyklus, d.h. $S^+$, bewirkt dann die normale Stromführung über $S^+$, $T^-$. Die bis dahin durch die Aufnahme des netzgetakteten Normalbetriebes an die HGÜ angelegte Spannung stellt daher einen Spannungsimpuls dar, der einem vorübergehenden Gleichrichterbetrieb mit $U_{dA} \geq 0$ bzw. $U_{dB} \leq 0$ entspricht.

Der bisher beschriebene Teil der Schaltung kann daher nicht nur für die Inbetriebnahme der stromlosen HGÜ mittels des Startbefehls verwendet werden, sondern auch für die Aufnahme des netzgetakteten Stromrichterbetriebes bei anderen Betriebszuständen. Ist z.B. nach einer Selbststörung durch ein entsprechendes Ausgangssignal $\overline{QB} = 1$ des Stö-

rungsgedächtnisses 700 über den Rücksetzeingang des dynamischen Flip-Flops IZ auf das Ausgangssignal $QIZ = 0$ gesetzt, so ist der Stromrichter gesperrt. Ist bei länger dauernder Störung die HGÜ-Spannung abgeklungen, so kann ein Freigabesignal $F_{fe}$ nunmehr den Signalzustand $\overline{QB} = 0$ hervorrufen, so dass das dynamische Flip-Flop IZ' erneut mit einem Startbefehl und einem daraus abgeleiteten Impuls $FS_0 = 1$ anlaufen kann.

Es kann aber bei einer Selbststörung auch vorgesehen sein, bei abgeklungenem Strom $i_{dB}$ in der Station B einen Bypasspfad zu schliessen, in dem z.B. die Ventile $T^+$ und $T^-$ gezündet werden.

Diese Ventilzündung erfolgt, wenn das durch die Selbststörung gesetzte Signal $\overline{QB}$ die Speicher SBT– und SBT+, die bei dieser Bypass-Ventil-Kombination auf « 1 » gesetzt sind, mittels eines von einem Impulsformer IF gebildeten Bypass-Zusatzimpulses BZ über die UND-Gatter GU3T– und GU3T+ ein Zündimpuls auf VT– und VT+ eingekoppelt wird. Wird nun der Bypass-Betrieb durch einen Befehl «Start» beendet, so gibt wiederum beim Auftreten des Zündbefehls $R^+_\alpha$ das Gatter GU1 ein Signal $FS_0$ ab, das über das Flip-Flop IZ die Zündbefehlssperre in der Blockierschaltung BS der Fig. 17 aufhebt und ausserdem über den Impulsbildner $IF_0$ entsprechende Zündimpulse auf VR+ und VS– einkoppelt.

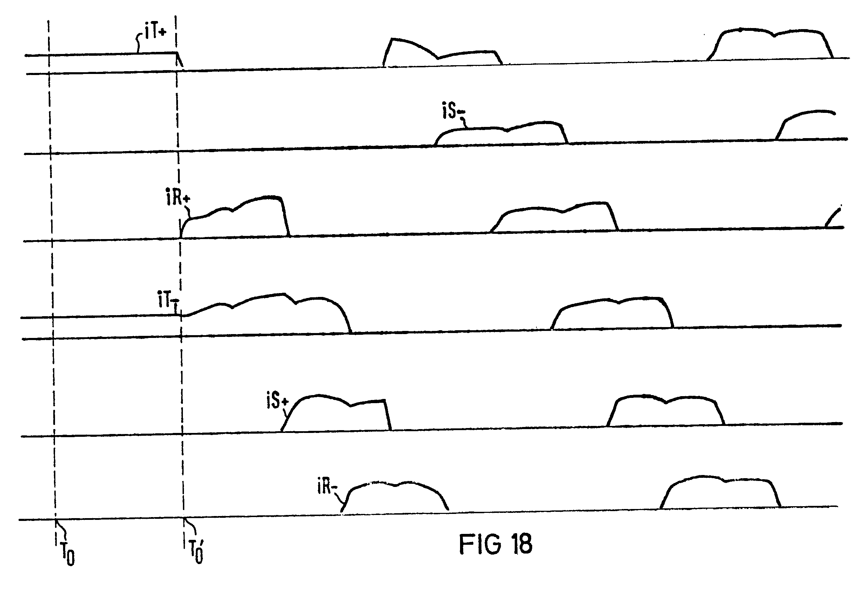

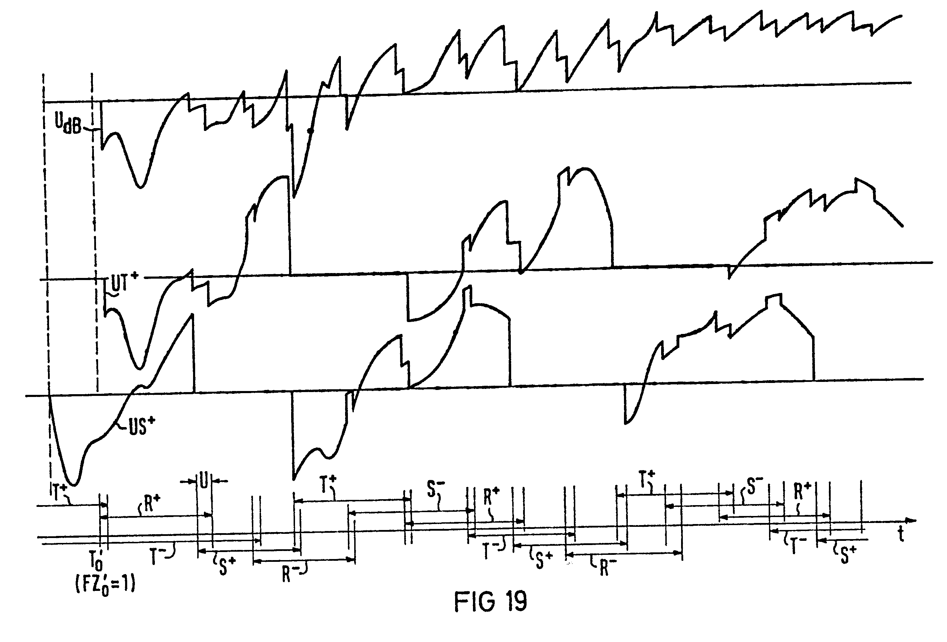

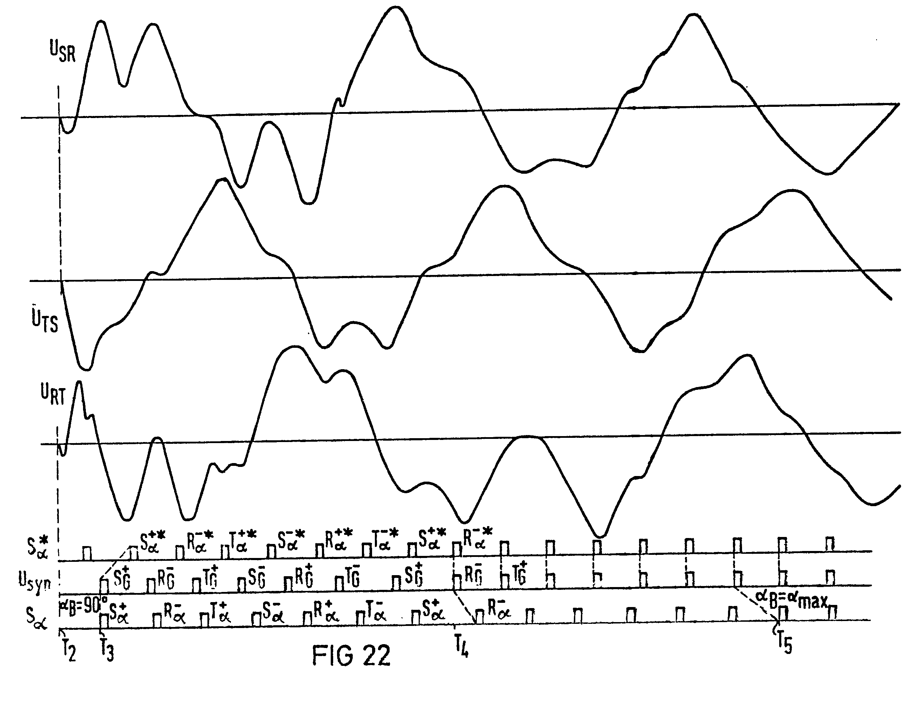

Fig. 18 zeigt den Verlauf der Ventilströme $IR^+$, ..., $iT^-$, wobei während des Bypass-Betriebes zunächst $iT^+$ und $iT^-$ fliessen, bis durch die beschriebene, von $FZ_0$ ausgelöste normale Zündimpulsfolge $R^+$, $T^-$, $S^+$, $R^-$, ... die oben beschriebenen Stromkommutierungen ablaufen. Fig. 19 zeigt am Beispiel eines bei Netzwiederkehr stark oberwellenhaltigen und unsymmetrischen Netzes, dessen Verlauf in Fig. 22 im einzelnen dargestellt ist, die dabei auftretenden Ventilspannungen $UT^+$ und $US^+$ für die Ventile $T^+$, $S^+$ und die resultierende HGÜ-Spannung und die Stromführungsdauern, die durch Pfeile angegeben sind. Dabei ist der eingeprägte Spannungsimpuls schraffiert dargestellt, der bei der gewählten Vorzeichenwahl negativ ist entsprechend einem vorübergehenden Gleichrichterbetrieb der Station B.

Soll der vorübergehende Spannungsimpuls ausgeprägter sein, so kann dies leicht dadurch erreicht werden, dass in der jeweiligen Station der Steuerwinkel vorübergehend in den Gleichrichterbetrieb verschoben wird, wobei diese Verschiebung dem z.B. in Fig. 16 gezeigten Hochlauf des Steuerwinkels vorgelagert oder dem Start des Hochlaufs überlagert sein kann.

Für die Ansteuerung des zweiten Teilstromrichters 1B'' gilt das gleiche, wobei lediglich durch ein Verzögerungsglied ZS erreicht wird, dass durch $\overline{QB}$ das entsprechende dynamische Flip-Flop IZ mit einer gewissen Zeitverzögerung angesteuert, also der Anlauf des zweiten Teilstromrichters mit einer gewissen Zeitverzögerung erfolgt. Der Aufbau der weiteren, durch einen Doppelstrich gekennzeichneten Bauteile ist identisch mit dem für den Teilstromrichter 1B' erläuterten Vorrichtungsteil, so dass im folgenden beide Teilstromrichter weitgehend als ein einziger Stromrichter aufgefasst und erläutert wurden.

Bei dieser Variante ist für Übergang vom Bypass-Betrieb in den Normalbetrieb vorausgesetzt, dass der HGÜ-Strom $i_d$ vor Schliessen des Bypass-Pfades abgeklungen war und der Bypass-Pfad über eine vorprogrammierte Auswahl von in Reihe liegenden Ventilen geschlossen wurde. Die Speicher SBT+, SBTkönnen dabei in der Speicherschaltung enthalten sein.

Bei einem Wechselrichterkippen sind ebenfalls in Reihe liegende Ventile stromführend, jedoch hängt es von der zufälligen Phasenlage des Netzes während des Kippens ab, welche dieser Ventile diesen Kurzschlusspfad bilden. Um nun rasch in den Bypass-Betrieb übergehen zu können, können diese Ventile als Bypass-Ventile beibehalten werden, sofern ihre Kombination festgestellt wird und dann unter den Ventilen des Stromrichters entsprechend dieser Kombination diejenigen Ventile ausgewählt werden, die für den Wiederanlauf des Normalbetriebes geeignet sind.

Hierzu dienen die in Fig. 17 dargestellten Speicher $SBR^+$, ... $SBS^-$, die ebenfalls von den Zündbefehlen $S_\alpha$ angesteuert werden und bei jeder Phasenlage des Netzes, also zu jedem Zeitpunkt innerhalb des Zyklus der Steuerbefehle $S\alpha$ feststellen, über welche Stromrichterventile jeweils ein Wechselrichterkippen erfolgen könnte. Es ist dies zumindest jeweils die Ventilgruppe, die infolge Überschreitung des maximalen Löschwinkels im Gegensatz zur normalen Kommutierungsfolge noch stromführend ist, und die dazu in Reihe liegenden Ventilgruppen.

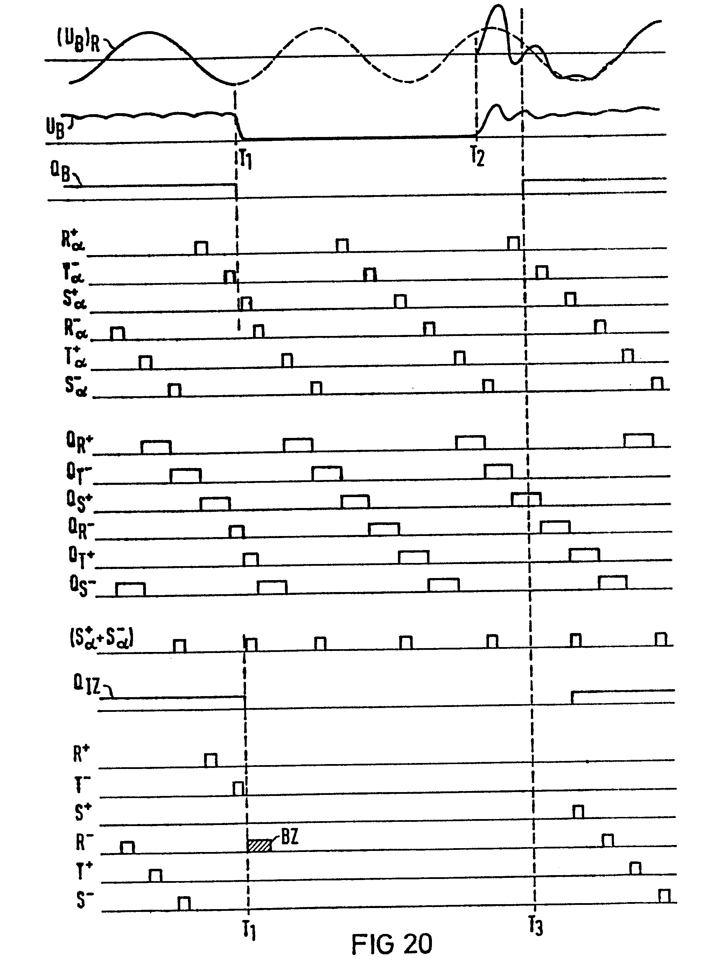

In Fig. 20 ist angenommen, dass der vom Kippen ausgelöste Selbststörungs-Meldeimpuls auftritt, bevor der Steuersatz den nächsten Zündbefehl $S^+$ abgibt (Zeitpunkt $T_1$), also bei leitendem Ventil $R^+$ zuletzt das Ventil $T^-$ angesteuert wurde. Daher ist ein durch $S^+_\alpha$ rücksetzbarer Speicher $SBR^-$ mit dem Befehl $T_\alpha^-$ auf den Wert « 1 » gesetzt und gibt an, dass das Ventil $R^+$ am Wechselrichter-Kurzschluss beteiligt ist. Während durch $QIZ = 0$ an GU2 der «reguläre» Befehl $S^+$, der vom Steuersatz erzeugt wird, gesperrt ist, wird an GU3R– über den Speicher $SBR^-$ und den Befehl BZ der in Fig. 20 schraffierte Bypass-Zusatzimpuls auf das Ventil $R^-$ gegeben, das zusammen mit dem jetzt nicht gelöschten Ventil $R^+$ ein sicheres Schliessen des Bypass-Pfades $R^+$, $R^-$ bewirkt.

Tritt das Kippen nach einem anderen Zündbefehl auf, so bewirken die Speicher $SBR^+$, ... und Gatter GU3R+ ... eine entsprechende Auswahl, Speicherung und Ansteuerung der möglichen Bypass-Ventil-Kombination. Es kann aber auch — insbesondere in der Station A — vorgesehen sein, die Auswahl der Bypass-Ventile nicht derart betriebsabhängig vorzugeben, sondern stets eine vorprogrammierte Kombination (gegebenenfalls auch mehrere oder alle in Reihe liegende Stromrichter-Ventilgruppen) in der Speicherschaltung vorzugeben und über eine Ansteuerung der Gatter GU3 bzw. GO2 im Kurzschlussfall einzukoppeln.

Zur Erzeugung des gewünschten Spannungsimpulses beim Vorgehen nach Fig. 16 ist es aber erforderlich, den für die Aufnahme des netzgetakteten Betriebes erforderlichen Anfangstakt entsprechend der betriebsabhängig vorgegebenen Bypass-Ventil-Kombination zu wählen. Für die Bypass-Ventile $R^+$,

R⁻ soll die netzgetaktete Zündung also jetzt mit einer Kommutierung auf die Ventile S⁺ oder S⁻ beginnen, wozu die Auswahlschaltung AS der Fig. 15 vorgesehen ist.

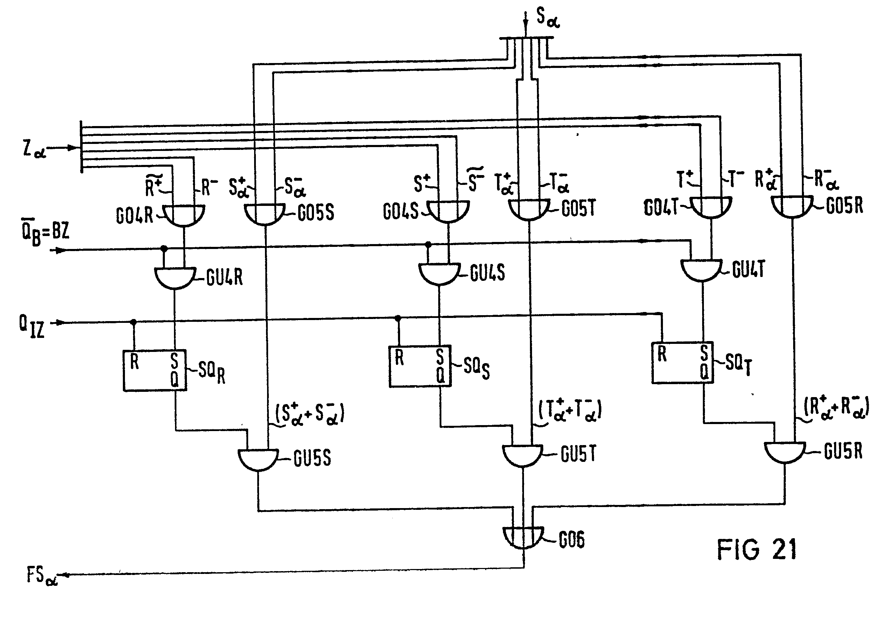

Daher werden nach Fig. 21 in der Folge SZ der hinter den Verriegelungen GO2 abgegriffenen, unabhängig vom Normal- oder Bypass-Betrieb abgegebenen Zündimpulse jeweils ein Impuls (z.B. der Impuls S⁺ + S⁻) gebildet, der zwei in Reihe liegenden und ein potentielles Bypass-Paar bildenden Ventilen zugeordnet ist (ODER-Gatter GO4R, GO4S, GO4T). Diese potentielle Bypass-Kombination wird an UND-Gattern GU4R, ... gesperrt, bis im Störfall über den Bypass-Zusatzimpuls BZ die Bypass-Ventilzündungen tatsächlich vorgenommen werden und die Bypass-Kombination in den Speichern SQR, ..., die jeweils am Ende einer Störung mit dem Zündimpuls-Freigabe-Signal QIZ rücksetzbar sind, gespeichert wird.

Während also die Speicher SBR⁺, ... der Blockierschaltung aus der Zündbefehlsfolge des Steuersatzes jeweils die möglichen Bypass-Ventile bestimmen und im Störungsfall deren Zündung bewirken, wählen die Gatter GO4 aus den tatsächlich abgegebenen Zündimpulsen die möglichen Bypass-Ventile, die nur im Störungsfall gespeichert werden.

Weitere ODER-Gatter GO5S, GO5R, GO5T vereinigen die in der Zündbefehlsfolge S_α enthaltenen, jeweils zum Abkommutieren des Stromes von einem der ausgewählten Bypass-Ventile benötigten Zündbefehle (für die Bypass-Kombination R⁺, R⁻ , also die Zündbefehlskombination S_α⁺, S_α⁻), die dann bei Koinzidenz mit der gespeicherten Kombination, die durch Gatter GU5S, GU5R, GU5T und GO6 festgestellt wird, zu einem Synchronsignal FS_α führen.

Das Gatter GO1 gibt dann als Anlauf-Freigabe-Signal das Synchronsignal FS anstelle des früher besprochenen Startsignals «Start», das am Flip-Flop IZ das Zündimpuls-Freigabe-Signal QIZ erzeugt, wenn IZ nach Beendigung der Netzstörung (QB = 0) freigegeben wird.

Dadurch startet dann der gewünschte Anlauf des netzgetakteten Normalbetriebes selbsttätig nach Ende der Netzstörung.

Zusammengefasst zeigt die Fig. 20 also: Im Normalbetrieb geben die Signale QR⁺, ... QS⁻ jeweils ein Ventil an, das im Falle einer Kommutierungsstörung bei der nächsten Zündung als Bypass-Ventil in Frage kommt und durch den Bypass-Zündimpuls FZ₀ gezündet werden sollte, um den Bypass zu schliessen. Die Netzstörung führt dazu, dass die Netzspannung U_B zum Zeitpunkt T₁ unter einen vorgegebenen Grenzwert absinkt und über QIZ = 0 zur Sperrung der normalen Zündbefehle S_α bzw. Z_α und zur Einkopplung des schraffierten Bypass-Zusatzimpulses auf R⁻ führt. Während der Störung ist dann nur die Ventilkombination R⁺ + R⁻ stromführend und diese Ventilkombination ist in der Auswahlschaltung gespeichert. Nach Wiedereinsetzen der Netzspannung (Zeitpunkt T₂) und Auftreten des Freigabesignals (Zeitpunkt T₂, Setzen des Störungsgedächtnisses auf Q_B = 1) wählen die Speicher SQR, SQS, SQT der Auswahlschaltung ein Ventil für die Aufnahme des Normalbetriebes aus und die Auswahlschaltung erzeugt dann das Anlauf-Freigabesignal, wenn der mit dem Steuerwinkel betriebene netzgetaktete Stromrichter den zu diesem ausgewählten Ventil gehörenden Zündbefehl abgibt. Mit dem Anlauf-Freigabesignal FS wird dann der normale Zündzyklus freigegeben, der mit der Zündung dieses Ventils beginnt und zum Abkommutieren des Stromes von einem der Bypass-Ventile führt.

Das Wechselspannungsnetz setzt, wie Fig. 20 für die Phasenspannung (UB)_R und die Spannungsamplitude UB zeigt, sehr unregelmässig ein. Das Störungsgedächtnis liefert das Signal QB = 1 erst nach einer bestimmten Zeit, die der Referenzspannungsgenerator zur Ermittlung einer einigermassen zuverlässigen Phasenlage des Netzes benötigt. Ein rasch arbeitender Referenzspannungsgenerator ist in der DE-A-3 346 291 beschrieben und stellt sicher, dass dann die Phasenlage des Netzes bis auf weniger als 30° genau bestimmt ist. Ein im Impulsbildner 713 in Fig. 11 enthaltenes Verzögerungsglied kann sicherstellen, dass in Station B der Selbstfreigabeimpuls Ffe und damit das Freigabesignal und QB = 1 erst nach der für die Synchronisierung erforderlichen Mindestzeit erzeugt wird.

In Fig. 22 ist für einen typischen Verlauf der wiederkehrenden verketteten Phasenspannungen USR, UTS, URT des Wechselspannungsnetzes die Überlagerung der sinusförmigen Grundschwingung mit einem Gegenspannungssystem und mit Oberschwingungssystemen dargestellt. Mit S_α* ist ein hypothetischer Satz von Zündimpulsen dargestellt, der zum Aussteuerungsgrad 0 (Steuerwinkel αB = 90°) und zur Grundschwingung des wiederkehrenden Netzes gehört.

Dieser Satz S_α* ist hypothetisch, d.h. nicht realisierbar, da die Grundschwingung zum Zeitpunkt T₂ noch nicht erfassbar ist. Vielmehr bildet der Referenzspannungsgenerator eine Referenzspannung U_Bsyn, zu der bei einem hypothetischen Steuerwinkel αB = 90° die ebenfalls hypothetische Zündimpulsfolge S⁺G, R⁻G, ... gehört. Diese Impulsfolge ist ebenfalls nur hypothetisch, da im Steuersatz zur Durchführung des erfindungsgemässen Verfahrens kein konstanter Steuerwinkel αB = 90° vorgegeben wird. Jedoch zeigt der Vergleich der beiden hypothetischen Impulse S_α⁺* und S⁺G, dass zum Zeitpunkt T₃ die Referenzspannung U_Bsyn von der (nicht erfassbaren) Grundschwingung um eine Phasendifferenz abweichen kann, die bis zu 30° beträgt. Erst zum Zeitpunkt T₄ (typisch: T4 – T3 8 msec) ist der Referenzspannungsgenerator so weit eingeschwungen, dass die Referenzspannung U_Bsyn praktisch synchron mit der Grundschwingung des (noch immer von Oberschwingungen überlagerten) Netzes ist und R_α⁻* = R⁻G gilt.

Um den Normalbetrieb möglichst umgehend nach Netzwiederkehr aufzunehmen, ist nicht vorgesehen, mit der Freigabe der Zündimpulse bis zum Zeitpunkt T₄ zu warten. Vielmehr genügt es bereits, wenn die Fehlsynchronisierung der Referenzspannung weniger als 30° beträgt, d.h. die Zündimpulse werden bereits zum Zeitpunkt T₃ freigegeben.

In Fig. 22 ist angenommen, dass für den Anlauf des Normalbetriebes mit dem Steuerwinkel αB = 90° (d.h. Aussteuerung 0, entsprechend einem Gleichspannungssollwert U_dB* = 0) begonnen und innerhalb von etwa zwei Netzperioden auf einen Ma-

ximalwert $\alpha_B = \alpha_{max}$ hochgefahren wird, der einem für den Normalbetrieb vorgesehenen Nennwert entspricht. Entsprechend wird also das Ventil S+ zum Zeitpunkt $T_3$ mit dem Zündimpuls $S_\alpha^+ = S^+G$ gezündet, während etwa beim Zeitpunkt $T_4$ der tatsächliche Zündbefehl $R_\alpha^-$ gegenüber dem hypothetischen, zu $\alpha_B = 90°$ gehörenden $R^-G$ bereits um $(\alpha_{max} - 90°)/2$ verschoben ist. Zum Zeitpunkt $T_5$ ist $\alpha_{max} \approx 150°$ erreicht.

*Übergang in den Normalbetrieb: Vorgabe des Steuerwinkels*

Entsprechend den bisherigen Erläuterungen ist es also möglich, dass die eine Station nach Wegfall einer Störung auf die HGÜ einen Impuls gibt, insbesondere einen Spannungsimpuls, der auf der anderen Seite erfassbar ist und einen Selbstfreigabeimpuls auslöst, mit dem dort die Aufnahme des Normalbetriebs ebenfalls eingeleitet wird. Die in Fig. 15 als Hardware gezeigte Anordnung kann teilweise auch in Software ausgeführt und mit der Speicherschaltung 63B vereinigt werden. Die Speicherschaltung 63B hat im wesentlichen nur festzulegen, welche der für den Störungsfall möglichen Notbetriebe (z.B. Bypass-Betrieb oder Stillsetzung der Strecke) ausgewählt werden. Die im folgenden für die einzelnen Notbetriebe beschriebenen Massnahmen für die Aufnahme des Normalbetriebes geben dem Fachmann ausreichende Hinweise, wie die einzelnen Signale der Überwachungseinrichtung in der Speicherschaltung für den Einzelfall zu verknüpfen sind, um das jeweilige Anfahrprogramm im Zusammenwirken mit dem Aufbau der Stationen nach den Fig. 8, 9, 10 und 13 durchzuführen.

Im folgenden wird stets diejenige Station, deren Störung die Unterbrechung des Normalbetriebes verursacht hat, als «die eine Station» bezeichnet. Im Fall einer Gleichrichterstörung ist dies die Station A und im Fall einer Wechselrichterstörung die Station B. Dabei kann — je nach Wahl der Energieflussrichtung für den Normalbetrieb — auch vorgesehen sein, dass eine am einen Ende der HGÜ angeordnete Station einmal die Rolle der Station A und ein anderes Mal die Rolle der Station B übernimmt, da die Aufgaben und der Aufbau der Überwachungseinrichtung und der Speicherschaltung sowohl für den Gleichrichterbetrieb wie für den Wechselrichterbetrieb weitgehend gleich sind und beide Stationen daher möglichst identisch aufgebaut sind.

Nach Wegfall der Störung in der einen Station erzeugt dort die zugehörige Überwachungsstation (als «die eine Überwachungsstation» bezeichnet) den Selbstfreigabe-Impuls, der in dieser einen Station zum (als «führendes Freigabesignal» bezeichneten) Freigabesignal führt, mit dem der Anlauf ausgelöst wird.

Dieser Anlauf wird nach der HGÜ-Laufzeit an den gleichspannungsseitigen Anschlüssen der anderen (ungestörten) Station bzw. des anderen Stromrichters erfasst und löst somit in der anderen Überwachungseinrichtung einen Fremdfreigabe-Impuls aus, der zum «abgeleiteten» Freigabesignal führt.

Grundgedanke für den Anlauf ist also, dass bei ungestörtem («wiedergesundetem») Zustand der vorher gestörten einen Station dort ein führendes Freigabesignal erzeugt und die Aufnahme des netzgetakteten Normalbetriebes des einen Stromrichters ausgelöst wird. In der anderen Station dagegen werden an den gleichspannungsseitigen Anschlüssen die dadurch hervorgerufenen Auswirkungen in ein abgeleitetes Freigabesignal umgesetzt, das dort ebenfalls den netzgetakteten Normalbetrieb auslöst, die somit mit der kürzestmöglichen Verzögerung nach Wiedergesundung der einen Station erfolgt. Fernwirksignal-Leitungen sind nicht erforderlich.

Dies setzt einerseits voraus, dass die von der einen Station hervorgerufenen elektrischen Vorgänge in der anderen Station eindeutig erkannt werden, andererseits müssen die Vorgänge in beiden Stationen aufeinander abgestimmt sein.

Beide Voraussetzungen werden dadurch erfüllt, dass in der einen Station zunächst der HGÜ ein Spannungsstoss eingeprägt wird und der Steuerwinkel des einen Stromrichters nach einer vorprogrammierten Hochlauffunktion etwa auf den für den Normalbetrieb vorgesehenen Wert hochgefahren wird, wobei, wie Fig. 22 zeigt, der Spannungsstoss zwangsläufig durch das Hochlaufen des Steuerwinkels erzeugt oder im Bedarfsfall durch eine gesonderte und vorübergehende pulsartige Verschiebung des Steuerwinkels erzeugt werden kann. In der anderen Station wird der Steuerwinkel dann — von einem ungefähr dem Aussteuerungsgrad Null entsprechenden Winkel nahe 90° ausgehend — ebenfalls nach einer vorprogrammierten Hochlauffunktion auf den für den Normalbetrieb vorgesehen Wert hochgefahren.

Die beiden Hochlauffunktionen sind dabei aufeinander abgestimmt. Vorteilhaft beträgt ihre Hochlaufzeit etwa zwei Wechselspannungsperioden.

Während der Störung ist der gestörte eine Stromrichter entweder ganz abgeschaltet oder über den Bypass-Pfad kurzgeschlossen. Daher erübrigt sich während des Notbetriebes zumindest die Aufschaltung der Modell-Störspannung an der Vorsteuereinrichtung im Steuerkanal des einen Steuersatzes. Andererseits muss der während der Aufnahme des Normalbetriebes hochlaufende Steuerwinkel am Ende des Anlaufvorgangs den für den stationären Betrieb vorgesehenen Wert des Steuerwinkels erreichen bzw. möglichst ohne grössere Sprünge in diesen stationären Wert übergehen. Würde daher der rampenförmige Hochlauf durch einen Hochlaufgeber am Eingang für den Vorgabewinkel erzeugt werden, so müsste dieser Vorgabewinkel, der in der Regel von einem überlagerten Führungsgrössenregler (z.B. dem Stromregler 41A bzw. dem Löschwinkelregler 41B) gebildet wird, in dem Masse zurückgenommen werden, in dem nunmehr die vorsteuernde Modell-Störgrösse den Steuerwinkel bestimmt.

Deshalb ist vorteilhaft vorgesehen, den die Hochlauffunktion erzeugenden Hochlaufgeber 66A zumindest in der Station A (Fig. 10) am Eingang für die Vorsteuerspannung der Vorsteuereinrichtung anzuordnen und mittels des Umschalters 61A während des Störbetriebes und des Hochlaufvorgangs als Ersatzwert der Modell-Störgrösse das Ausgangssignal des Hochlaufgebers aufzuschalten. Erst nach Erreichen des Hochlauf-Endwertes wird dann durch Umlegen des Umschalters 61A auf den Messwert $U_{dLA}$ (bzw. die entsprechende Modellgrösse $\tilde{U}_{dB}$) umge-

schaltet. Spätestens wenn damit der stationäre Normalbetrieb erreicht ist, wird auch der Vorgabewinkel wieder am für den Normalbetrieb vorgesehenen Stromregler 41A abgegriffen, der während der Störung intaktiviert sein kann.

In der Station B dient die Modell-Störgrösse zur Vorgabe des Löschwinkels und zur Einhaltung der Wechselrichtertrittgrenze. Ist während des Störbetriebs auf die Vorsteuerung mit dem entsprechenden Vorsteuerwinkel $\alpha_{Bv}$ verzichtet, so entsteht trotzdem keine Gefahr eines Wechselrichterkippens, da selbst im Falle eines Beipassbetriebes der Steuerwinkel weit von der Wechselrichtertrittgrenze entfernt ist. Dies gilt auch noch, wenn nach einer Gleichrichterstörung die Station A den Strom zu erhöhen beginnt. Nimmt daher nach einem abgeleiteten Freigabesignal die Station B den Wechselrichterbetrieb wieder auf, so bildet die dort vorgegebene Hochlauffunktion einen gesteuerten Modell-Ersatzwert für die Modell-Störgrösse, der ebenfalls die aus dem tatsächlichen induktiven Gleichspannungsabfall ermittelte Modell-Störgrösse ersetzen kann und zur Begrenzung des Löschwinkels führt. Deshalb kann auch hier der Hochlaufgeber am Vorsteuerwinkel-Eingang der Vorsteuereinrichtung angeordnet werden und mittels eines Umschalters zwischen dem durch dem Hochlaufgeber gesteuert vorgegebenen Modellwert und dem aus dem induktiven Gleichspannungsabfall errechneten Wert der Modell-Störgrösse umgeschaltet werden, wenn oder nachdem ungefähr der Hochlaufendwert erreicht ist.

Die beiden Hochlauffunktionen stellen somit Ersatzwerte für die jeweiligen Vorsteuergrössen dar. Es erscheint daher zunächst notwendig, dass beide Hochlauffunktionen gleichlaufend d.h. bezüglich ihrer Kurvenform und ihres Plateaus identisch sind. Eine derartig starre Abstimmung der beiden Hochlauffunktionen ist jedoch nicht erforderlich. Z.B. kann der Hochlaufendwert des Hochlaufgebers der Station A durchaus etwas höher liegen und zu einem HGÜ-Strom führen, der im Hinblick auf den von der Hochlauffunktion in der Station B vorgegebenen Steuerwinkel zu einem jenseits der Wechselrichtertrittgrenze liegenden Löschwinkel führen könnte. Der Löschwinkelregler der Station B ist nämlich in der Lage, den Steuerwinkel $\alpha_B$ entsprechend der Wechselrichtertrittgrenze zurückzunehmen.

Für die verschiedenen Arten des Notbetriebes ergeben sich verschiedene mögliche Varianten.

a) Anlauf aus stromloser Strecke

In diesem Fall sind nach Eintritt der Störung beide Stromrichter gesperrt, wobei die Entladung der Strecke z.B. während eines Kurzschlusses der Spannung $U_{dB}$ über den Kurzschluss in dieser einen Station erfolgt sein kann oder auch, z.B. bei einer Gleichrichterstörung in der Station A, durch eine vorübergehende Zündwinkelverschiebung in der anderen, gesunden Station erzwungen werden kann.

Bei Wiederkehr des gestörten Netzes löst dann der entsprechende Selbstfreigabe-Impuls in der einen Überwachungsstation das führende Freigabesignal aus. Der in der einen Station wieder aufgenommene Normalbetrieb löst in der anderen Station das abgeleitete Freigabesignal aus, das auch dort den Anlauf nach der vorprogrammierten Hochlauffunktion anstösst. Beide Hochlauffunktionen beginnen etwa beim Aussteuerungsgrad Null (Steuerwinkel ungefähr 90°).

Ergänzend kann vorgesehen sein, dass der Steuerwinkel der einen Station aus der Hochlauffunktion und einer vorübergehenden Zusatzverschiebung in Richtung der Gleichrichter-Vollaussteuerung bestimmt ist, wobei diese Zusatzverschiebung dem Start der Hochlauffunktion vorgelagert oder überlagert sein kann.

Bei einer Störung des Wechselrichterbetriebes in der Station B bedeutet das, dass der bereits beschriebene negative Spannungsimpuls, der bei der Aufnahme des Normalbetriebes eingeprägt wird, verstärkt ist. Dies erleichtert sowohl die Bildung des abgeleiteten Freigabeimpulses wie den Start des Gleichrichterbetriebes in der Station A. Auch nach einer Störung des Gleichrichterbetriebes in der Station A ist ein derartiger Impuls vorteilhaft, der dazu führt, dass Strom $i_{dA}$ und Spannung $U_{dA}$ schnell ansteigen und die HGÜ aufladen, so dass sowohl der Hochlauf der Leistungsübertragung in den für den stationären Normalbetrieb vorgesehenen Wert schneller erfolgen wie das abgeleitete Freigabesignal der Station B leichter gebildet werden kann.

b) Notbetrieb mit Bypass-Pfad

Bei längerer Störung ist ein Betrieb mit Bypass-Pfad vorgesehen, bei dem in der gestörten einen Station beim Auftreten des Selbststörungs-Meldeimpulses die netzgetakteten Zündbefehle des einen Stromrichters gesperrt und der Beipasspfad geschlossen wird. Wie bereits erläutert, kann dieser Bypass-Pfad vorteilhaft durch Zündung ausgewählter, in Reihe liegender Stromrichterventile geschlossen werden. In der anderen Station wird mittels des Fremdstörungs-Meldeimpulses der Steuerwinkel so weit in den Gleichrichterbetrieb verschoben, wie es zur Einspeisung eines den Bedürfnissen des anderen Netzes erforderlichen Bypass-Stromes in die HGÜ erforderlich ist.

Der Übergang von diesem Bypass-Betrieb in den Normalbetrieb erfolgt nun, wenn das Netz dieser einen Station wieder gesundet ist und das führende Freigabesignal erzeugt, das die Aufnahme des netzgetakteten Stromrichterbetriebes mit dem auf dem betriebsmässigen Aussteuerungsgrad hochlaufenden Steuerwinkel auslöst. Gleichzeitig wird der Bypass-Pfad gelöscht, wozu es in der Regel dann keiner eigenen Massnahme bedarf, wenn als Bypass-Pfad kein eigener Bypass-Schalter oder kein eigenes Bypass-Ventil sondern in Reihe liegende, für den Normalbetrieb erforderliche Stromrichterventile verwendet werden.

In der anderen Station löst dann das abgeleitete Freigabesignal die Wiederaufnahme des Normalbetriebes aus, wobei der Steuerwinkel von dem vom Bypass-Strom bestimmten Steuerwinkel ausgehend nach der Hochlauffunktion auf den stationären Wert des Steuerwinkels hochläuft.

Handelt es sich dabei um einen Bypass-Betrieb nach einer Störung der Station A, so ist es nicht erforderlich hierbei eine eigene impulsförmige Verschiebung des Steuerwinkels zu Beginn des Hochlaufvorgangs vorzunehmen und die netzgetaktete Zündung zu Beginn des Anlaufvorgangs, d.h. die Einleitung des normalen Gleichrichterbetriebes, bereitet keine Schwierigkeiten. Vielmehr kann entsprechend Fig. 16 der Gleichrichterbetrieb mit der Taktung bestimmter, hierfür fest vorprogrammierter Ventile beginnen. Auch die Auswahl der Bypass-Ventile ist vorzugsweise vorprogrammiert, wobei der Bypass-Strom nicht nur über einen einzigen, aus in Reihe liegenden Ventilen gebildeten Bypass-Pfad, sondern auch über mehrere oder sogar alle Stromrichterventile geführt werden kann. Dies ist möglich und u.U. vorteilhaft, wenn z.B. in Station A durch geeignete Massnahmen verhindert wird, dass sich nach einer Störung das wiederkehrende Netz NA sofort wieder über den Bypass-Pfad entlädt.

Während eines Beipassbetriebes, bei dem der Bypass-Pfad über in Reihe liegende Ventile des Stromrichters der Station B geschlossen ist, ist die Auswahl der Bypassventile für die Dauer der Störung gespeichert. Entsprechend dieser gespeicherten Ventilkombination wird für die Wiederaufnahme des netzgetakteten Normalbetriebes auf die im Zusammenhang mit der Auswahlschaltung in Fig. 15 beschriebene Weise eines der Ventile ausgewählt, die im Zyklus der netzgetakteten Zündbefehle der Abkommutierung des Stromes von einem der Bypass-Ventile entsprechen.

*Wechselspiel zwischen Normalbetrieb und Notbetrieb*

Der geschilderte Normalbetrieb ermöglicht nach dem Prinzip der Vorsteuerung eine schnelle Regelung der HGÜ, ohne allerdings eine Störung vollkommen ausschliessen zu können. Das Prinzip des ohne Verwendung von Fernwirksignalen angestossenen, programmierten Hochlaufs ermöglicht den Übergang in den Normalbetrieb sowohl bei stromloser HGÜ wie bei einem Bypass-Betrieb innerhalb sehr kurzer Anlaufzeiten. Das im folgenden beschriebene Prizip des Bypass-Betriebes ermöglicht nun, bei einer Störung eines der beiden Stationen die HGÜ auch während der Dauer der Störung als Blindlast für das Wechselspannungsnetz der ungestörten Station zu betreiben und entsprechend den Bedürfnissen dieses ungestörten Netzes zu steuern oder regeln.

Jedes dieser drei Prinzipien kann im Zusammenhang mit anderen Betriebsverfahren einer HGÜ einzeln oder in Verbindung mit einem anderen dieser Prinzipien vorteilhaft verwendet werden. Die im folgenden beschriebene Kombination aller drei Prinzipien ermöglicht es, die HGÜ sowohl im Normalbetrieb wie im Notbetrieb schnell zu regeln, um damit z.B. subsynchrone Resonanzerscheinungen oder andere dynamische Ausgleichsvorgänge in den Netzen zu dämpfen, die wirtschaftlichen Folgen einer Störung, insbesondere eines Spannungseinbruchs in einem der Wechselspannungsnetze gering zu halten und jeweils den Übergang zwischen Normalbetrieb, Bypass-Betrieb und (gegebenenfalls unvermeidlichem) Betrieb mit Entregung der HGÜ in äusserst kurzer Zeit zu vollziehen.

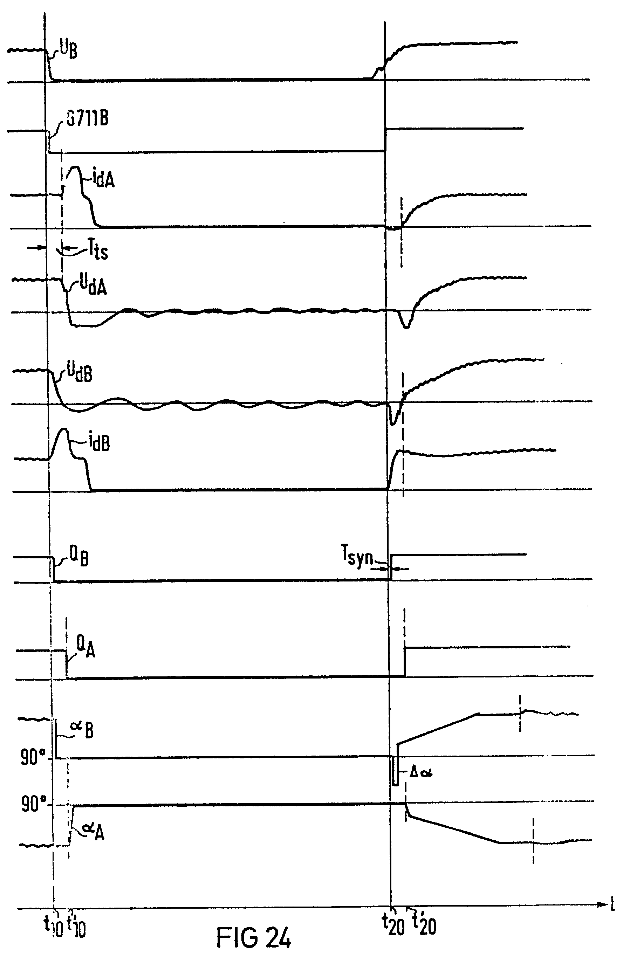

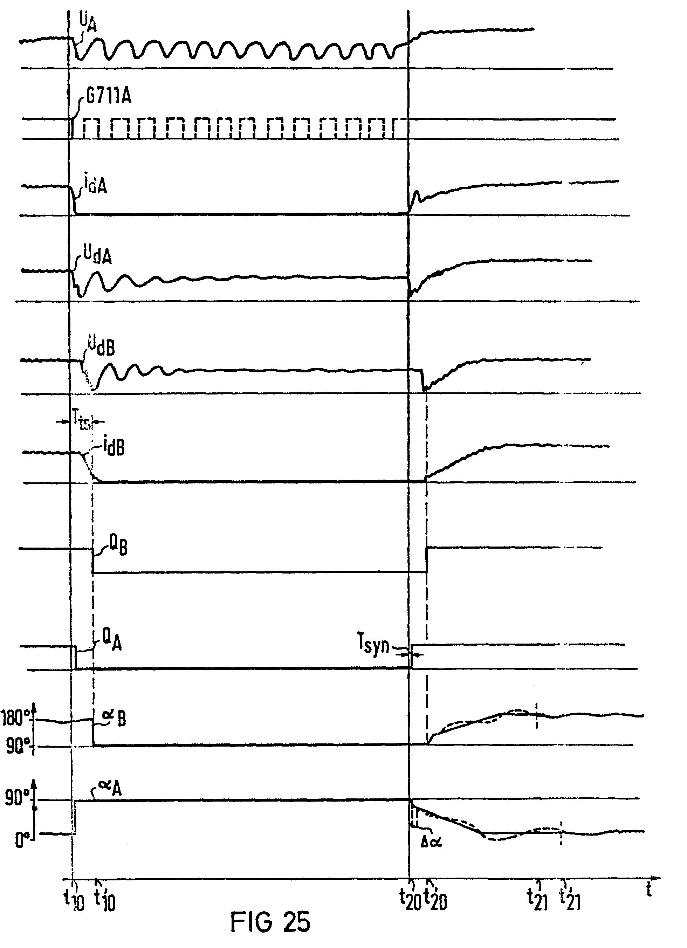

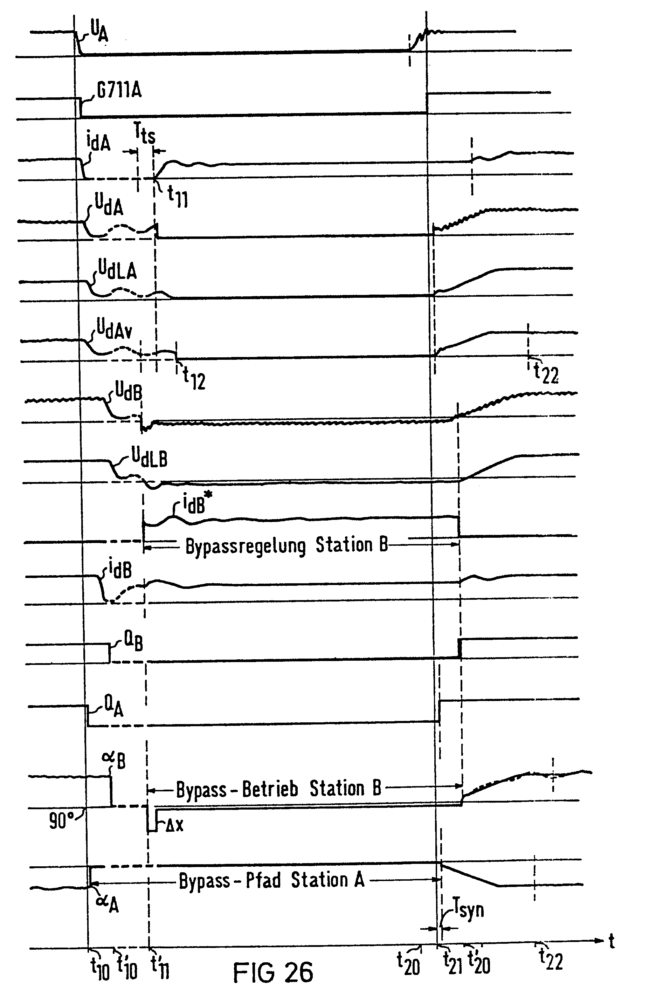

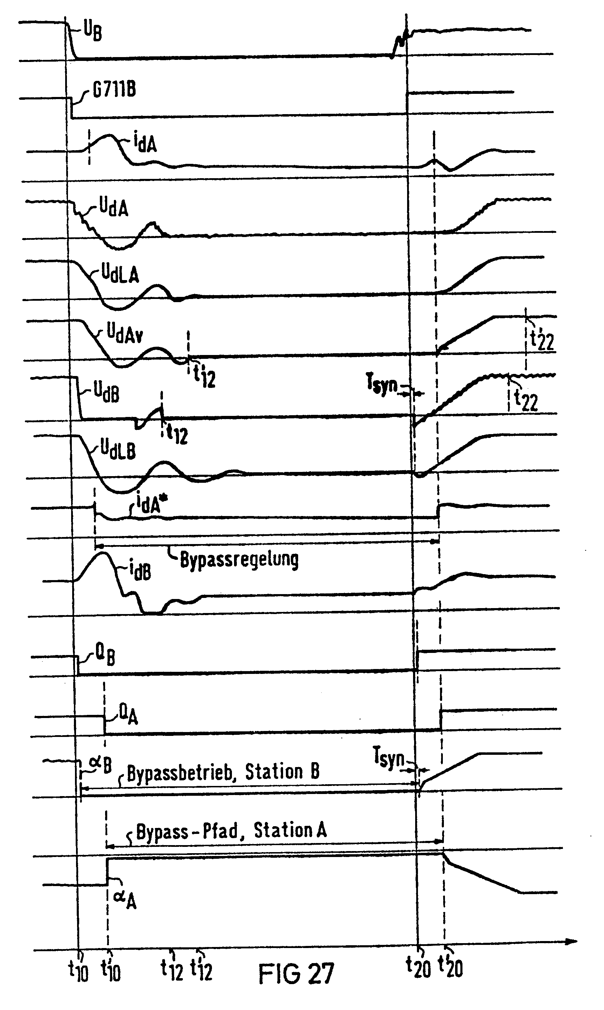

Das Prinzip des Bypass-Betriebes einschliesslich des Übergangs in den Bypass-Betrieb beim Auftreten einer Störung ist anhand der Signalverläufe in den Fig. 26 und 27 und der in den Fig. 9 und 10 gezeigten Ausführungsbeispiele der beiden Stationen näher erläutert. Neben diesem Bypass-Betrieb kann es — je nach Art der Störung — auch erforderlich sein, während der Störung die HGÜ stromlos zu halten; dieser Notbetrieb ist in den Fig. 24 und 25 gezeigt. Für die Aufnahme des Normalbetriebes kann es dabei, wie bereits erwähnt wurde, sowohl bei einer HGÜ-Fernübertragung wie auch bei einer Kurzkupplung wünschenswert sein, dass z.B. der Übergang vom Bypass-Betrieb in den Normalbetrieb so gestaltet wird, dass das gestörte Netz bei Wiederkehr der Spannung vorwiegend mit Blindstrom belastet wird.

Dieser Übergang kann nicht nur von dem hochzusteuernden Gleichstrom selbst, sondern auch von der Anzahl der zur Verfügung stehenden und gleichzeitig am Übergang beteiligten Teilstromrichter beeinflusst werden. Dadurch ergibt sich die Möglichkeit, den angestrebten Gradienten in der Zunahme des Gleichstroms von der Zunahme des Netzblindstroms in diskreten Stufen zu entkoppeln und dadurch die Anforderungen, die an das Netz und an die Stromregelung gestellt werden, in gewissem Umfang entsprechend der Anzahl der getrennt geschalteten Teilstromrichter getrennt voneinander zu erfüllen.

Dies ist in Fig. 15 dadurch ermöglicht, dass das Zeitglied ZS, das am Rücksetzeingang des dynamischen Flip-Flops die Bildung des Zündimpuls-Freigabesignals zur Entriegelung der Blockierschaltung BS'' des Teilstromrichters 1B'' freigibt, die Aufnahme des netzsynchron getakteten Stromrichterbetriebes gegenüber dem Teilstromrichter 1B' verzögert. Die ausgewählte, von der Kombination der Bypass-Ventile abhängige Impulsfreigabe der einzelnen Teilstromrichter erfolgt also in Stufen (zeitlich versetzt), wodurch auch die Zunahme der Netzblindleistung ebenfalls in Stufen erfolgt.

Im folgenden ist für den Anstieg des Steuerwinkels im allgemeinen eine Hochlauffunktion gewählt, die den Steuerwinkel von einem gegebenenfalls etwas von 90° abweichenden Wert linear bis in den stationären Zustand fährt. Obwohl es zunächst zwingend erscheint, dass die beiden Hochlauffunktionen, die ja als gesteuerte Werte den betriebsmässig vorgegebenen Modellwert der Modell-Störspannung beim Übergang in den Normalbetrieb ersetzen, praktisch identisch sind, ist eine derart enge Abstimmung beider Hochlauffunktionen nicht zwingend. Es kann sogar vorteilhaft sein, die beiden Hochlauffunktionen insofern gegenläufig vorzugeben, als z.B. nach einer Störung in Station B der Steuerwinkel des Gleichrichters mit einer zunächst grösseren und später abnehmenden Steigung hochgefahren werden kann, während der Wechselrichter-Steuerwinkel zunächst langsam und später schneller anwächst.

Dadurch soll die gesunde Station möglichst schnell mit Wirkstrom belastet werden, wobei die HGÜ schnell aufgeladen wird. Für die anfangs gestörte Station, deren wiederkehrende Spannung häufig starke Einschaltspitzen aufweist, wirkt die HGÜ dagegen zunächst als spannungssenkrechte Blindlast, wobei gleichzeitig ein sicheres Kommutieren erreicht wird.

a) Beispiel mit unterschiedlichen Hochlauffunktionen

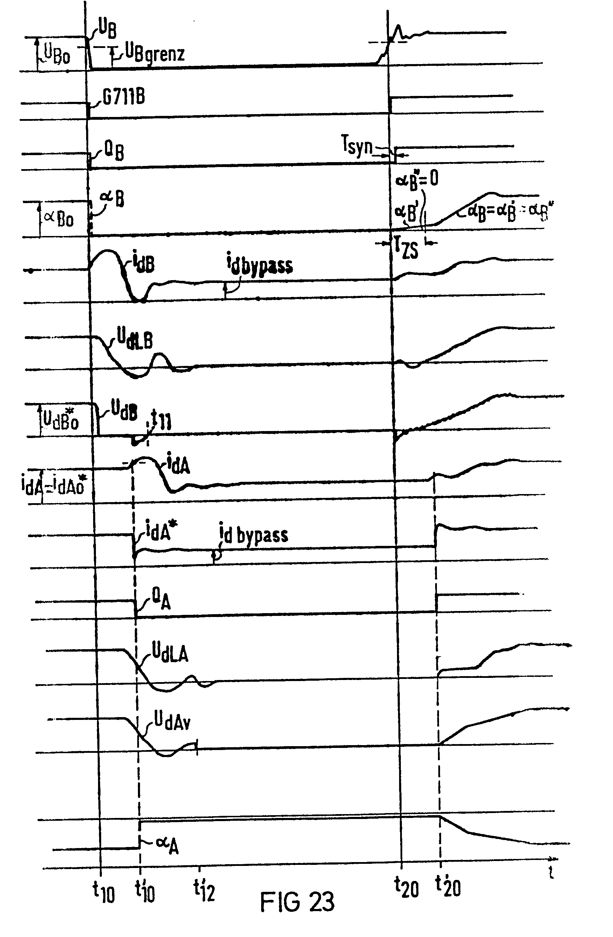

Fig. 23 zeigt diese Variante des Anlaufs am Beispiel eines Netzkurzschlusses in NB und eines Bypass-Betriebes während der Störung.

Zum Zeitpunkt $t_{10}$ bricht die Spannung $U_B$ zusammen und das Grenzwertmelde-Ausgangssignal G711B zeigt das Unterschreiten der Grenzspannung $U_{Bgrenz}$ an und setzt das führende Störsignal QB = 0. Dies löst in der Blockiereinrichtung des Stromrichters 1B eine Kommutierungssperre aus, indem alle regulären Zündbefehle des Steuersatzes unterdrückt und gleichzeitig über einen Bypass-Zusatzimpuls der Bypass-Pfad gezündet wird; dieser Zustand ist durch einen Steuerwinkel $\alpha_B = 90°$ entsprechend der Ausgangsgleichspannung $U_{dB} = 0$ symbolisiert.

Über den Bypass-Pfad wird die HGÜ und das Filter der Station B umgeladen, was durch einen Stromfluss $i_{dB}$ (der den in Fig. 23 übertrieben lang dargestellten Zustand $i_{dB} = 0$ häufig gar nicht erreicht) und die Schwingung der Spannung $U_{dLB}$ an dem dem Stromrichter abgewandten Ende der Stromrichterdrossel LB erkennbar ist. Die während des Normalbetriebes z.B. auf einem Betriebswert $U^*_{dBo}$ gehaltene und während des Stromstosses kurzgeschlossene Spannung $U_{dB}$ nimmt einen negativen Wert an, wenn der Strom $i_{dB}$ infolge der Umladung Null wird und die Bypass-Ventile erlöschen. Der durch die Kommutierungssperre ohnehin bereits wirkungslose Führungsgrössenregler 41B (Fig. 9), der während der Störung der Station B nur irreguläre Werte zeigen würde, wird inaktiviert, um nach Beendigung der Störung von einem definierten Wert $\triangle x_B = 0$ wieder anlaufen zu können.

Ebenso kann der Schalter 61B mit oder nach dem Auftreten des Störungssignals QB = 0 von der die Modellstörgrösse aus Istwerten $i_{dB}$ und $U_B$ errechnenden Schaltung 43B' auf den vorläufig inaktiven Hochlaufgeber 66B umgeschaltet werden.

Der während des Normalbetriebes auf den betriebsmässigen Sollwert $i^*_{dAo}$ (Nennwert) geregelte Strom $i_{dA}$ der Station A zeigt nach der Streckenlaufzeit ebenfalls einen Anstieg, bei dem die Differenz $i^*_{dA} - i_{dA}$ einen Grenzwert erreicht, der zum abgeleiteten Störungssignal QA = 0 führt ($t'_{10}$). Dadurch wird nunmehr der Steuerwinkel nicht mehr auf die normale Weise vorgegeben, bei der vom auf $i^*_{dAo}$ regelnde Stromregler 41A (Fig. 10) der entsprechende Nennwert $\alpha^*_{Ao}$ (z.B. $\alpha^*_{Ao} \approx 150°$) bzw. $\triangle x^*_A$ und von einem Messglied die Störspannung $U_{dLA}$ als Vorsteuergrösse $U_{dAv}$ gebildet werden. Vielmehr wird durch Umlegen des Schalters 60A zum Zeitpunkt $t'_{10}$ vom Sollwert für den betriebsmässigen Strom auf einen Sollwert umgeschaltet, den ein Bypass-Regler, z.B. ein Regler für die Spannung $U_{A'}$ liefert.

Da im betrachteten Fall als Bypass-Pfad nur ein Brückenzweig aus in Reihe liegenden Ventilgruppen des Stromrichters ausgewählt und gezündet wird und einen Dauerstrom führen muss, ist dessen thermische Belastbarkeit geringer als beim normalen netzgetakteten Betrieb. Daher ist der vom Bypass-Regler gelieferte Bypass-Strom-Sollwert gegenüber dem Nennwert $i^*_{dAo}$ zurückgenommen.

Der im wesentlichen vom Bypass-Regler 68A gelieferte Steuerwinkel ist in Fig. 23 symbolisch als konstant angenommen. Er kann bis zum Ende des Bypass-Betriebes von der gemessenen Spannung $U_{dLA}$ oder auch von dem nach Fig. 14 gebildeten Ersatz $\widetilde{U}_{dLA}$ oder $\widetilde{U}_{dB}$ vorgesteuert werden; nach Fig. 23 wird zum Zeitpunkt $t'_{12}$ die Vorsteuerung auf den (zunächst inaktiven) Hochlaufgeber 66A umgeschaltet, um auf den Normal-Start vorzubereiten.

Der von der gesunden Station A jetzt nachgelieferte Gleichstrom $i_{dbypass}$ fliesst nach dem Nulldurchgang (Zeitpunkt $t_{11}$) der Spannung $U_{dB}$ über die Bypass-Ventile, bis zum Zeitpunkt $t_{20}$ die Spannung $U_B$ wiederkehrt, gegebenenfalls mit erheblichen Spannungsspitzen.

Das Grenzwertmelde-Signal G711B liefert mit einer auf die Synchronisierzeit des Referenzspannungsgenerators abgestimmten Verzögerung $T_{syn}$ das führende Freigabesignal QB = 1, mit dem der Teilstromrichter 1B' mit dem Steuerwinkel $\alpha'_B \approx$ 90° gestartet wird und zunächst mit einer niedrigen Steigung um z.B. 10° in den Wechselrichterbetrieb verschoben wird. Mit einer Verzögerung $T_{ZS}$, die vom Zeitglied ZS (Fig. 15) geliefert wird, wird auch der Teilstromrichter 1B'' freigegeben.

Dabei kommt es zunächst, wie bereits besprochen wurde, zu einer negativen Spannungs-Zeit-Fläche in $U_{dB}$ und das Netz NB wird mit Blindstrom belastet, was zu einer erwünschten Spannungsabsenkung und Reduzierung von Spannungsspitzen in $U_B$ führt. Da die Teilstromrichter versetzt zugeschaltet werden, nimmt also auch die Blindlast in Stufen zu.

Vorteilhaft wird dabei der Steuerwinkel $\alpha'_B$ des zuerst gestarteten Teilstromrichters in dem Bereich nahe 90° belassen, in dem der HGÜ-Strom vorwiegend als Blindlast wirkt, und wird erst dann auf die betriebsmässige Wechselrichteraussteuerung hochgefahren, wenn alle anderen Teilstromrichter voll kommutieren. Dabei kann, wie Fig. 15 vorsieht, für jeden Teilstromrichter eine eigene Hochlauffunktion gewählt werden. Nach Fig. 23 genügt aber meistens ein einziger Hochlaufgeber für $\alpha_B$, wobei der Hochlauf von $\alpha_B$ zunächst nur auf 1B' wirkt und mit einer geringen Steigung beginnt, um erst nach dem Zeitpunkt $t_{20} + T_{ZS}$, nachdem der letzte Teilstromrichter mit $\alpha'_{Bo} = \alpha_B$ gestartet ist, mit einer erhöhten Steigung auf den Nennwert $\alpha_{Bo}$ zu fahren.

Der von Station B eingeprägte Spannungsimpuls führt nach der Streckenlaufzeit Tts zu einer Bewegung von $U_{dA}$ (bzw. $U_{dLA}$) und $i_{dA}$ (bzw. $i_{dLA}$), die in Station A detektiert wird und das abgeleitete Freigabesignal QA = 1 auslöst ($t'_{20}$). Dort wird nun der Steuerwinkel $\alpha_A$ auf $\alpha_A \approx 0°$ hochgefahren, wobei vorteilhaft die Steigung zunächst gross ist und später zurückgenommen wird. Da auf die Station A zunächst nur die durch die anfänglich geringe Steigung von $\alpha_B$ eingeprägte Störspannung $U_{dB}$ (bzw. $U_{dLA}$) wirkt, steigt $i_{dA}$ rasch auf den Nennwert $i_{dAo}$ an und der Stromrichter 1A gerät bald in einen Bereich, in dem der das Netz NA belastende Strom $i_{dA}$ vorwiegend einen Wirkstrom darstellt.

Während des Hochlaufs ist durch Umlegen des Schalters 60A auf den betriebsmässigen Sollwert $i^*_{dA}$ umgeschaltet, wobei der Bypass-Regler ausser Kraft ist. Nach dem Start der Hochlauffunktion, in Fig. 23 zum Zeitpunkt $t_{21}$ ist der Führungsgrössen-

regler 41B aktiviert und etwa am Ende der Hochlauffunktion (vom Verzögerungsglied VZ vorgegebene Zeiten $t_{22}$, $t'_{22}$) ist auch jeweils das betriebsmässige Vorsteuersignal aufgeschaltet, so dass der Normalbetrieb wieder hergestellt ist.

Im Normalbetrieb sind also beide Stationen durch die Freigabesignale $QA = 1$, $QB = 1$ freigegeben, während die Schalter 61A und 61B jeweils durch das zuletzt abgegebene Zündimpuls-Freigabesignal QIZ $= 1$ so geschaltet sind, dass die Steuerwinkel $\alpha_A$ und $\alpha_B$ in der Vorsteuereinrichtung durch Addition der jeweils für den Normalbetrieb vorgesehen Modell-Störgrösse und des jeweiligen Vorgabewinkels (d.h. dem durch die Grössen $\triangle x_B$ und $\triangle x_A$ bestimmten Winkel in Fig. 9 und 10) bestimmt sind. Ebenso sind auch die Umschalter 60A und 60B in einer Position gehalten, in der der Vorgabewinkel $\alpha_A^*$ bzw. $\gamma_B^*$ von der für den Normalbetrieb vorgesehenen Führungsgrössenregelung bestimmt wird. Z.B. wird entsprechend Fig. 7 zur Bildung von $\triangle x_A$ der Sollwert $i^*_{dA}$ des Stromreglers 41A in der Station A von einem überlagerten Regler (Wirkleistungsregler 51, Fig. 7) entsprechend der Wirkleistungsbilanz oder anderen Bedürfnissen des ungestörten Netzes NA geliefert. In der Station B wird $\triangle x_B$ entsprechend dem einen Sollwert $\gamma^*$ von einem Löschwinkelregler (41B, Fig. 5) oder von einem Blindleistungsregler (41B') oder Spannungsregler (41B'') geliefert, wobei $\gamma^*$ im Rechenzusatz 47 aus der Forderung des Netzes nach Blindleistung oder Spannungskonstanz abgeleitet sein kann.

Da es für Wartungsarbeiten an der HGÜ selbst erforderlich sein kann, nach einer Störung die HGÜ strom- und spannungslos zu halten, also keinen Bypass-Betrieb vorzunehmen, sei zunächst dieser Fall betrachtet.

b) Beispiele mit Entregung der Strecke

In einem typischen Ablauf nach Fig. 24 ist zunächst der Fall betrachtet, dass in der einen Station B zum Zeitpunkt $T_{10}$ ein Kurzschluss des Netzes NB, d.h. ein Zusammenbruch der Spannung $U_B$ auftritt. In der Überwachungsstation meldet der Grenzwertmelder 711 das entsprechende Signal G711B. Die HGÜ, die Stromrichterdrossel LB sowie die Filterelemente CFB und LFB entladen sich über den Kurzschluss, so dass die Ströme $i_{dB}$ bzw. $i_{dLB}$ zunächst ansteigen und zu einem Wechselrichterkippen führen. Gleichzeitig wird das Störungssignal $QB = 0$ gesetzt und die Zündimpulse des Stromrichters 1B werden gesperrt, was in Fig. 24 durch den Steuerwinkel $\alpha B = 90°$ angedeutet ist.

Dabei bricht die Spannung $U_{dB}$ ein und der HGÜ-Strom erlischt.

In der Station A kommt es nach der durch die HGÜ-Laufzeit bedingten Totzeit Tts ebenfalls zu einem Anstieg des HGÜ-Stroms $i_{dA}$ bzw. $i_{dLA}$, der über den Fremdstörungs-Meldeimpuls zu einem Störungssignal und zu $QA = 0$ führt (Zeitpunkt $t_{10'}$). Dadurch wird auch die andere Station A stillgelegt ($\alpha A = 90°$).

In Fig. 24 ist angenommen, dass sich durch den B-seitigen Kurzschluss die HGÜ bis auf geringe Oszillation in der nunmehr beidseitig gesperrten HGÜ praktisch vollkommen entladen hat. Dabei kann es insbesondere von Vorteil sein, wenn mit $QA = 0$ der andere Stromrichter 1A nicht sofort gesperrt wird, sondern der HGÜ-Strom und die HGÜ-Spannung über den Regler dieser Station A vollständig auf den Wert 0 abgebaut werden. Ein derartiges Vorgehen ist vor allem dann vorteilhaft, wenn z.B. nach einer Kurzunterbrechung die HGÜ möglichst rasch aus dem stromlosen Zustand angefahren werden soll.

Bei diesem Wiederanlauf wird, sobald die Spannung $U_B$ einen bestimmten Grenzwert wieder erreicht hat (Zeitpunkt $t_{20}$) und in der einen Station B der Grenzwertmelder 711 angesprochen hat, nach einer gewissen Verzögerungszeit $T_{syn}$, die zum Synchronisieren des Referenzspannungsgenerators sowie zur Bildung des Zündimpuls-Freigabesignals QIZ erforderlich ist, der Hochlaufgeber 66B angestossen und der Steuerwinkel $\alpha_B$ rampenförmig hochgefahren.

Um hierbei der HGÜ einen definierten Spannungsimpuls einzuprägen, der in der anderen Station A einen Fremdfreigabe-Impuls auslösen kann, ist vorteilhaft vorgesehen, dem rampenförmigen Hochlauf des Steuerwinkels $\alpha_B$ einen Zusatzimpuls $\triangle \alpha$ vorzuschalten oder zu überlagern, durch den der Stromrichter 1B vorübergehend im Gleichrichterbetrieb betrieben wird. Fig. 24 zeigt, dass dadurch der HGÜ-Strom $i_{dB}$ schnell angeregt und die HGÜ-Spannung $U_{dB}$ vorübergehend negativ wird.

Folglich kommt es zum wiederum durch die HGÜ-Laufzeit bestimmten Zeitpunkt $t_{20'}$ auch in der bis dahin gesperrten Station A zu einer negativen Spannungszeitfläche und zum Signal $QA = 1$, mit dem auch dort der während der Störung inaktivierte Hochlaufgeber aktiviert und der Steuerwinkel $\alpha_A$ rampenförmig hochgefahren wird.

In den beiden Stationen liefern die während der Störung inaktivierten Hochlaufgeber während des Hochlaufs zunächst einen Ersatzwert für die Modell-Störgrösse, wobei aber am Verlauf der Steuerwinkel $\alpha_A$ und $\alpha_B$ erkennbar ist, dass der während des Hochlaufs durch die Hochlauffunktion glatt vorgegebene Wert durch die wellige Modell-Störgrösse ersetzt wird, sobald die Umschalter 61A und 61B und auch die Schalter 60A und 60B umgelegt werden und der ungestörte Normalbetrieb wieder erreicht ist.

In Fig. 25 ist der Fall einer Störung in der Station A dargestellt. Dabei ist angenommen, dass im Netz NA zum Zeitpunkt $t_{10}$ nur eine der Phasenspannungen ausfällt, so dass die Spannungsamplitude UA dieses Netzes einen gepulsten Verlauf aufweist. In diesem Fall liefert der Grenzwertmelder 711 der einen Überwachungseinrichtung ebenfalls ein gepulstes Signal, das jedoch in Fig. 25 nur gestrichelt dargestellt ist, da z.B. die Zeitkonstante des Impulsformers 713 so eingestellt sein kann, dass ein diese Oszillation unterdrückendes Dauersignal erzeugt wird. In dem bereits erwähnten Fall, dass zur Bildung des Signals G711B kein eigener Grenzwertmelder vorgesehen ist, sondern die Impulsbildung vom Referenzspannungsgenerator vorgenommen wird, der ohnehin alle Schwankungen des Wechselspannungsnetzes erfasst, kann dort zwangslos ein entsprechendes Dauersignal für die Dauer der Störung erzeugt werden.

Im allgemeinen wird für einen derartigen Störfall

ein anderer Notbetrieb vorgesehen, der nicht Gegenstand der Erfindung ist. Die für eine Störung des Gleichrichters mit Entregung der HGÜ vorgesehene Strategie sei jedoch auch für diesen Fall erläutert.

Das über QA = 0 erzeugte Sperren der Zündimpulse des Stromrichters 1A bewirkt das Erlöschen des HGÜ-Stroms $i_{dA}$, wobei es allerdings zunächst nicht zwangsläufig zu einer Entladung der HGÜ kommt. Eine solche Entladung kann, wie im Zusammenhang mit Fig. 24 bereits erläutert wurde, durch eine vorübergehende Zündwinkelverschiebung in der ungestörten anderen Station B erzwungen werden, worauf aber im Beispiel der Fig. 25 verzichtet ist. Vielmehr wird in der anderen Station B nach der Totzeit Tts von dem einbrechenden HGÜ-Strom $i_{dB}$ bzw. der HGÜ-Spannung $U_{dB}$ die Zündimpulse des Stromrichters 1B gesperrt, so dass auch dort der Strom ausgeht und der Stromrichter stillgesetzt ist. Die HGÜ führt dann zwar keinen Strom, aber noch Spannung.

In diesem Fall ist es häufig nicht erforderlich, nach Wiederkehr des Netzes NA (Zeitpunkt $T_{20}$) den Übergang in den Normalbetrieb mit einem vorübergehenden Zusatzimpuls $\triangle\alpha$ auf den Steuerwinkel zu beginnen. Dies gilt insbesondere, wenn die HGÜ noch eine positive Restspannung, wie in Fig. 25 gezeigt, enthält, die bei der Ventilzündung in 1B einen Stromfluss erzeugt. Der Steuerwinkel kann dann rampenförmig von etwa $\alpha_A$ = 90° hochgefahren werden.

Bei den Fällen der Fig. 24 und 25 ist demnach als Notbetrieb bei einer Störung eine Stillsetzung (Entregung) der HGÜ zumindest so weit vorgesehen, dass der HGÜ-Strom gleich Null ist, was dadurch erreicht wird, dass während der Störung, also vor Aufnahme des Normalbetriebes, durch eine Sperre beider Stromrichter die HGÜ von den Wechselspannungsnetzen getrennt ist. Der dann vorgesehene Übergang in den Normalbetrieb ist daher auch zur Erst-Betriebnahme der HGÜ nach Installation oder nach einer grundlegenden Wartung geeignet.

Die zum Zeitpunkt $t_{20}$ durch die Aufnahme des Normalbetriebes sprunghaft geänderte HGÜ-Spannung wird zum Zeitpunkt $t'_{20}$ in der anderen Station B detektiert, wo es daher zum abgeleiteten Freigabesignal QB = 1 und ebenfalls zur Aufnahme des Normalbetriebes kommt.

Während der Störung sind die Schalter 60, 61 und 67 der Stationen nach Fig. 9 und 10 in einer Stellung, bei der die desaktivierten Regler 41 und Hochlaufgeber 66 den Steuerwinkel 90° entsprechend dem Aussteuerungsgrad Null vorgeben. Das Hochlaufen des Steuerwinkels wird zum Zeitpunkt $t_{20}$ bzw. $t'_{20}$ durch Aktivieren der Hochlaufgeber erreicht, wobei die Position P3 der Schalter 61 ermöglichen, den Zusatzimpuls $\triangle\alpha$ beim netzgetakteten Start dem Steuersatz vorübergehend aufzuschalten. Werden die Regler 41 gleichzeitig mit den Hochlaufgebern 66 aktiviert, so ist der Hochlauf von Einschwingungsvorgängen des Reglers überlagert, während zu den Zeitpunkten $t_{21}$ und $t'_{21}$ aus dem welligen Verlauf der Vorsteuerspannung erkennbar ist, dass nunmehr der Steuerwinkel von der Vorsteuergrösse $U_{dLA}$ bzw. $\alpha_{Bv}$ bestimmt wird, die als Messwert der Störgrösse den vom Hochlaufgeber gebildeten, gesteuerten Modellwert ablöst.

c) Beispiele mit Bypass-Betrieb

Ist für den Fall einer Störung in der einen Station bei ungestörter anderer Station wegen der bereits erwähnten Vorteile ein Bypass-Betrieb vorgeschrieben, so werden in der gestörten Station bei Beginn der Störung mittels des Selbststörungs-Meldeimpulses Fde die für den Bypass-Pfad ausgewählten Bypass-Ventile gezündet und die HGÜ-Anschlüsse dieser Station kurzgeschlossen. In der anderen Station löst der Fremdstörungs-Meldeimpuls Fdf bei dieser Betriebsart einen Gleichrichterbetrieb aus, durch den ein gewünschter Bypass-Strom in die HGÜ eingespeist wird. Dieser Bypass-Strom wird vorteilhaft entsprechend den Bedürfnissen der anderen Station, d.h. aus dort vorliegenden Messwerten des Wechselspannungsnetzes abgeleitet.

Nach Beendigung der Störung wird in der «wieder gesundeten» Station mittels des Selbstfreigabe-Impulses Ffe der Bypass-Pfad wieder unterbrochen und der netzgetaktete Normalbetrieb aufgenommen. Dies führt in der ungestörten anderen Station zu einem Fremdfreigabe-Impuls Fff, durch den die Bypass-Stromeinspeisung beendet und ebenfalls der netzgetaktete Normalbetrieb aufgenommen wird. Die Fig. 26 und 27 zeigen vorteilhafte Ausführungsformen dieses Störbetriebes mit Bypass-Strom.

In Fig. 26 ist eine Störung des Gleichrichterbetriebes (Station A) angenommen.

Die einbrechende Spannung $U_A$ des zum Zeitpunkt $t_{10}$ zusammenbrechenden Netzes NA wird in der Station A wieder durch den Selbststörungs-Meldeimpuls Fde erfasst und löst $Q_A$ = 0 aus. Der Stromrichter 1 wird gesperrt. Dabei geht der Strom $i_{dA}$ aus und die Spannung $U_{dA}$ bzw. $U_{dLA}$ gerät in eine Schwingung, die gestrichelt dargestellt ist und von den weiteren Vorgängen in der Station B abhängt.

Nach der Streckentotzeit $T_{ts}$ (Zeitpunkt $T'_{10}$) kommt es zu einem entsprechenden Einbruch in der Spannung $U_{dB}$ (bzw. $U_{dLB}$) und im Strom $i_{dB}$ an den Gleichspannungsanschlüssen der Station B. Dort wird daher z.B. durch Überwachung des Stromes $i_{dB}$ ein Fremdstörungs-Meldeimpuls Fdf erzeugt, der zu $Q_B$ = 0 führt.

Ist nun für einen derartigen Störungsfall der Bypass-Betrieb vorgesehen, so wird mit dem Fremdstörungs-Meldeimpuls in der ungestörten Station B auf Gleichrichterbetrieb übergegangen, wobei der Steuerwinkel von einem übergeordneten Regler bereitgestellt wird. Soll z.B. der Bypass-Betrieb der Konstanthaltung der Spannung $U_B$ oder der Regelung der Blindlast dienen, so ist als übergeordneter Regler für den Bypass-Betrieb ein Spannungsregler oder Blindleistungsregler vorgesehen. Das Ausgangssignal dieses Bypass-Reglers 68B (Fig. 9) bildet die Grösse $\triangle x_B$, die dem Sollwert $i^*_{dB}$ für den dem umgestörten Netz zu entnehmenden Strom entspricht und dem Steuersatz als Steuerwinkel $\alpha_B$ im Bypass-Betrieb über den Schalter 60B aufgeschaltet wird. Die Rechenstufe 43B' ist dabei abgetrennt, z.B. indem der Schalter 61B auf den Ausgang des (während der Störung inaktivierten) Hochlaufgebers 66B geschaltet ist.

Dabei werden mit QB = 0 zum Zeitpunkt $t'_{10}$ bei einer Variante zunächst die Zündbefehle des Stromrichters gesperrt. Es hängt dann von der Phasenlage des Netzes NB ab, ob und wann der Strom $i_{dB}$ erlischt. Anschliessend wird in der Station B ein Gleichrichter-Betrieb aufgenommen, der entsprechend der Polarität der Stromrichterventile zu einer Spannungsumkehr in der HGÜ führt.

Der Zeitpunkt $t'_{11}$ zur Aufnahme dieses Gleichrichterbetriebes (ggf. unter Abgabe des Impulses $\triangle\alpha$) ist praktisch frei wählbar. Der Vorsteuerwinkel $\alpha_{Bv}$ wird dabei auf den (während der Störung inaktivierten) Hochlaufgeber umgeschaltet, so dass der Steuerwinkel $\alpha_B$ allein vom jetzt aufgeschalteten Bypass-Regler bestimmt wird.

Der nunmehr von der Station B aufgenommene Bypass-Betrieb führt dazu, dass in der gestörten Station A zum Zeitpunkt $t_{11}$ ein Anstieg der Spannung $U_{dA}$ an den Gleichspannungsanschlüssen auftritt, wobei die Speicherschaltung 63A aus dem gleichzeitigen Auftreten des Signals G711A bzw. des Selbststörungs-Meldeimpulses Fde und des aus der Spannungsbewegung abgeleiteten Fremdfreigabesignals Fff den von der ungestörten Station aufgenommenen Bypass-Betrieb erkennen kann. Da zu diesem Zeitpunkt $i_{dA} = 0$ vorliegt, ist es gleichgültig, welche in Reihe liegenden Stromrichter-Ventile der Station A als Bypass-Pfad gezündet werden. So können z.B. mehrere parallele Bypass-Pfade geschlossen werden. Im vorliegenden Fall ist die Auswahl der als Bypass-Pfad dienenden «Bypass-Ventile» unter den für den Normalbetrieb erforderlichen Ventilen des Stromrichters 1A vorprogrammiert und nur ein einziger Bypass-Pfad vorgesehen.

Die Zündbefehle für diesen Bypass-Pfad können gleich beim oder kurz nach Auftreten des Selbststörungs-Meldeimpulses gebildet werden; zur Zündung kommt es aber erst, wenn die Spannung $U_{dA}$ (infolge der Spannungseinprägung durch den Bypass-Gleichrichterbetrieb der Station B) die Polarität gewechselt hat. Dann fliesst über den Stromrichter 1A und die HGÜ ein Strom $i_{dA}$, der jedoch von dem defekten Netz NA getrennt ist.

Das zum Zeitpunkt $t_{20}$ wiederkehrende Netz NA erreicht zum Zeitpunkt $t_{21}$ den vorgegebenen Grenzwert, bei dem der Selbstfreigabeimpuls ausgelöst wird. Nach der für die Bildung der netzsynchronen Referenzspannung des Steuersatzes benötigten Zeit $T_{syn}$ meldet das Störungsgedächtnis QA = 1 und der Stromrichter 1A wird mit dem Steuerwinkel $\alpha_A$ rampenförmig hochgefahren.

Um zu vermeiden, dass über den im Bypass-Betrieb zunächst noch als Gleichrichter arbeitenden Stromrichter 1B und den bereits in den normalen Gleichrichterbetrieb übergegangenen Stromrichter 1A ein Kurzschlussstrom fliesst, kann der Hochlauf des Steuerwinkels $\alpha_A$ gegenüber einem anfänglich eingeprägten Spannungsstoss verzögert werden, damit Station B nach Erkennen dieses Spannungsstosses rechtzeitig in den Wechselrichterbetrieb übergehen kann.

Zum Zeitpunkt $t_{20}$ ist ferner der Schalter 61A so umgelegt, dass das Hochlaufgeber-Ausgangssignal das Vorsteuersignal $U_{dAv}$ bildet. Da dieser Hochlaufgeber während der Störung inaktiviert und erst bei Netzwiederkehr freigegeben wird, ergibt sich für die Spannung $U_{dAv}$ der dargestellte Verlauf, bei dem nach Auftreten des führenden Freigabesignals QA = 1 ein rampenförmiger Anstieg auftritt.

Zu einem, z.B. von der Programmschaltung vorgegebenen Zeitpunkt $t_{22}$ wird durch Umlegen des Schalters 61A wieder die Spannung $U_{dLA}$ als Vorsteuerspannung verwendet. Der Steuerwinkel $\alpha_A A$ ist daher im Normalbetrieb praktisch durch $U_{dAv} = U_{dLA}$ (bzw. $U_{dLB}$) gegeben und durch die Tätigkeit des Stromreglers nur gering modifiziert. Da die Blockierschaltung die aus $\alpha_A$ abgeleiteten Zündbefehle des Steuersatzes STA während des Bypass-Betriebes sperrt, ist es unerheblich, wann im Intervall zwischen $t_{10}$ und $t_{20}$ die Speicherschaltung von $U_{dAv} = U_{dLA}$ auf die durch den Hochlaufgeber vorgegebene Vorsteuerspannung umschaltet. Vorzugsweise ist innerhalb dieser Zeit der Stromregler inaktiv und wird über die Programmschaltung erst nach Wiederkehr des Netzes, vorzugsweise am Ende des rampenförmigen Hochlaufs aktiviert bzw. bei Auftreten (Zeitpunkt $t_{21'}$) der Auswirkungen des von der anderen Station gestarteten Normalbetriebes.

In der Station B bewirkt der von der Station A rampenförmig wiederaufgenommene Gleichrichterbetrieb zum Zeitpunkt $t'_{20}$ einen Anstieg in der Spannung $U_{dB}$ (bzw. $U_{dLB}$) und im Strom $i_{dB}$. Dies löst dort das abgeleitete Freigabesignal QB = 1 aus, mit dem nunmehr von der Bypass-Stromsteuerung auf die normale Regelung, d.h. vom Bypass-Regler 68B auf den Löschwinkelregler 41B in Fig. 9, umgeschaltet wird (Umschalter 60B). Gleichzeitig wird mit diesem Fremdfreigabesignal der Station B dort der Hochlaufgeber aktiviert, der nunmehr anstelle des Elementes 43B' den Vorsteuerwinkel $\alpha_{Bv}$ für die Station B liefert. Foglich wächst auch der Steuerwinkel $\alpha_B$ rampenförmig wieder auf den zum normalen Wechselrichterbetrieb gehörenden Winkel an, bis zum Zeitpunkt $t'_{22}$ der Schalter 61B wieder vom Hochlaufgeber zurück auf die Rechenschaltung 43B' geschaltet wird.

Das gleiche Prinzip lässt sich auch durchführen, wenn in der Station B eine Störung vorliegt; wie für Fig. 27 angenommen ist.

Der Stromrichter 1B in der Station B wird bei Normalbetrieb als Wechselrichter mit einem Steuerwinkel $\alpha_B$ nahe der Wechselrichtertrittgrenze betrieben, der vom Löschwinkelregler (oder einem Regler für die Blindleistung oder eine andere Führungsgrösse) gebildet und mit dem aus dem induktiven Spannungsabfall berechneten Vorsteuerwinkel vorgesteuert wird. Zum Zeitpunkt $t_{10}$ bricht nun die Spannung $U_B$ des Netzes NB zusammen und bewirkt über ein entsprechendes Signal G711B in der Überwachungseinrichtung der Station B, dass dort die normalen Zündimpulse gesperrt werden.

Dieser Kurzschluss führt auch zum Zusammenbruch der Gleichspannung $U_{dB}$ und zu einem stark anwachsenden, in den Kurzschluss fliessenden Gleichstrom $i_{dB}$, so dass der Wechselrichter 1B kippt. Die Kapazitäten der HGÜ am Anschluss der Station B werden dabei in den Kurzschluss entladen, so dass sich eine Umkehrung der Spannung $U_{dLB}$ und schliesslich ein Erlöschen des Gleichstroms $i_{dB}$ ergibt. Unterdessen hat auch das Grenzwertmeldesignal über den Selbststörungs-Meldeimpuls den Zustand QB = 0 ausgelöst, mit dem die normale Kommuttierung des Stromrichters 1B gesperrt und die Zündung der Bypass-Ventile eingeleitet wird.

In der Station A tritt mit der Streckentotzeit ebenfalls ein Anwachsen des Gleichstroms $i_{dA}$ und ein entsprechender Abfall der Gleichspannungen $U_{dA}$ und $U_{dLA}$ auf. Dies führt über den Fremdstörungs-Meldeimpuls der Station A zum Zustand $QA = 0$, bei dem von dem betriebsmässigen Strom-Sollwert $i_{dA}^*$ auf einen niedrigen Sollwert umgeschaltet wird, der von einem überlagerten Bypass-Regler geliefert wird, z.B. vom Blindleistungsregler 68A oder einem Spannungsregler für die Spannung $U_A$ (Umschalter 60A in Fig. 10). Der Stromrichter 1A speist daher nur noch den für den möglichst kontinuierlichen Betrieb des Netzes NA erforderlichen Blindstrom in die HGÜ ein. Ausserdem wird vom Signal $QA = 0$ das Umschalten der Vorsteuerspannung $U_{dAv}$ von dem Messwertausgang für $U_{dLA}$ auf den Ausgang des Hochlaufreglers ausgelöst (Schalter 61A), das z.B. zu einem vorgegebenen späteren Zeitpunkt $t_{12}$ erfolgt.

Da die Station A weiterhin Strom in die HGÜ einspeist, wird in Station B das über den Netzkurzschluss entladene Ende der HGÜ wieder aufgeladen. Die Spannung $U_{dA}$ nimmt somit wieder positive Werte an (Zeitpunkt $t_{12}$), so dass in der Station B bei Erreichen eines vorgegebenen positiven Grenzwertes bestimmte Ventile zünden, die zur Bildung des Bypass-Pfades ausgewählt werden und an denen dann zum Zeitpunkt $t_{12}$ entsprechende Zündspannungen anstehen. Dadurch ist nun der Bypass-Pfad geschlossen und der Bypass-Betrieb in Gang gesetzt, bei dem die HGÜ als Blindwiderstand für das Netz NA betrieben wird.

Bei dem in Fig. 27 gezeigten Fall ist zum Zeitpunkt $t_{10}$ in der gestörten Station B mit $QB = 0$ die Sperrung der normalen, vom Steuersatz gelieferten Zündbefehle erfolgt, wobei der Strom $i_{dB}$ zunächst über die am Wechselrichterkippen beteiligten Ventile des Stromrichters 1B noch weiterfliesst. Erst wenn nach Erlöschen dieser Ventile die unterdessen von der in den Bypass-Betrieb übergegangenen Station A die HGÜ mit einem Strom nachgeladen ist, der zum Zeitpunkt $t_{12}$ zu einem positiven Ansprechwert von $U_{dB}$ führt, liegt an den für den Bypass-Betrieb ausgewählten Ventilen die Spannung an, die zur Zündung der Bypass-Ventile und damit zu einem wiederkehrenden Strom $i_{dB}$ führt. In diesem Fall können die Bypass-Ventile unabhängig von den am Wechselrichterkippen beteiligten Ventilen ausgewählt werden. Da aber in der Station B die am Kippen beteiligten Ventile als Bypass-Ventile betriebsabhängig ausgewählt werden können, braucht ein — häufig unerwünschtes — vollkommenes Erlöschen des Stromes $i_{dB}$ nicht abgewartet zu werden.

Insbesondere kann es bei dem in Fig. 27 gezeigten Fall im Zeitintervall zwischen $t_{10}$ und $t_{12}$ zu erheblichen negativen Werten von $U_{dB}$ kommen, was für den Betrieb einer HGÜ in vielen Fällen von den Anwendern ausgeschlossen werden soll.

Dies kann erreicht werden, wenn der Steuerwinkel $\alpha_A$ der Station A bei Auftreten des abgeleiteten Störungssignals $QA = 0$ nicht sofort auf den zum Bypass-Betrieb gehörenden Wert nahe Null zurückgeführt wird, sondern auf einen Steuerwinkel, der zunächst in Richtung der Gleichrichter-Vollaussteuerung verschoben ist, um die HGÜ möglichst schnell nachzuladen. Dieser Wert kann von der Speicherschaltung 63A über die Position P3 des Schalters 61A nach Fig. 10 vorgegeben werden. Ist jedoch ein Netzbeobachter 43A'' vorhanden, wie er in den Fig. 13 und 14 erläutert ist, so ist es möglich, den Strom $i_{dB}$ ungefähr konstant zu halten, indem der vom Netzbeobachter errechnete Ersatz-Istwert $\widetilde{i_{dB}}$ des Stromreglers 41A' auf einen vom Spannungsregler 68A gelieferten, der Einhaltung einer konstanten Spannung $U_A$ dienenden Sollwert eingeregelt wird. Ist für den Normalbetrieb z.B. ein überlagerter Wirkleistungsregler 51 vorgesehen, so wird durch $QA = 0$ von diesem überlagerten Regler auf den Bypass-Regler (Spannungsregler 68A) umgeschaltet, während im Beobachter das Wechselrichterkippen der gestörten Station B durch Schliessen des Schalters 77 simuliert wird.

Um nun aus dem Bypass-Betrieb bei Wiederkehr des Netzes NB (Zeitpunkt $t_{20}$ in Fig. 7) mit Auftreten des führenden Freigabesignals $QB = 1$ in den netzgetakteten Normalbetrieb überzugehen, werden auf die bereits beschriebene Weise diejenigen Ventile gezündet, die bei einer vorprogrammierten Bypass-Ventil-Kombination vorprogrammiert sind, um den netzgetakteten Betrieb unter Einprägung eines Spannungsstosses einzuleiten, oder es werden entsprechend den betriebsabhängigen gezündeten Bypass-Ventilen die von der Auswahlschaltung betriebsabhängig ausgewählten Ventile gezündet.

Fig. 27 lässt die nach der zur Synchronisierung des Referenzspannungsgenerators nötigen Zeit $T_{syn}$ auftretende Spannung $U_{dB}$ erkennen, die durch den Hochlauf von $\alpha_B$ bedingt ist. Zum Zeitpunkt $t'_{20}$ kommt es dann zum abgeleiteten Freigabesignal $QA = 1$ und zum entsprechenden Hochlauf des Winkels $\alpha_A$ auf die für den normalen Betrieb vorgesehene Gleichrichter-Aussteuerung und zu einem entsprechenden Verlauf der Spannung $U_{dA}$, wobei in der ungestörten Station A nunmehr die Bypass-Regelung aufgehoben und wieder die normale Regelung über den Stromregler aufgeschaltet ist. Zu den Zeitpunkten $t_{22}$ und $t'_{22}$ wird auch wieder von der durch die Hochlauffunktion gesteuert vorgegebenen Vorsteuergrösse auf die gemessene Störgrösse als Vorsteuergrösse umgeschaltet.

Bei diesem Konzept ist insbesondere vorteilhaft, dass im normalen Betrieb die beiden Stationen unabhängig voneinander arbeiten, d.h. dass für die Steuerung der beiden Stromrichter keine über Fernwirkleitungen zu übertragende Informationen aus der jeweils anderen Station benötigt werden. Beide Stromrichter können daher durch entsprechende Vorsteuerung sehr schnell geregelt werden, ohne dass durch die Totzeit von Fernwirk-Signalübertragungen ein träges Regelverhalten erzwungen würde. Auch im Störungsfall geschieht die Übertragung entsprechender Störungssignale nicht über Fernwirkleitungen, sondern über die HGÜ selbst, so dass beim Auftreten einer Störung in der einen Station jeweils nach der überhaupt kürzestmöglichen Zeit die nötige Information über den Störungsfall auch in der anderen Station vorliegt. Auch die Wiederaufnahme des ungestörten Normalbetriebs in der einen Station wird auf die gleiche Weise in der kürzestmöglichen Zeit mitgeteilt, so dass sich sehr kurze Anregelzeiten für die Aufnahme des Normalbetriebes ergeben. Darüber hinaus ist es durch diese schnelle Regelung möglich, die HGÜ selbst auch zur Steuerung oder Regelung der elektrischen Grössen der jeweiligen Netze zu verwenden, z.B. zur Blindstromsteuerung oder während des Bypass-Betriebes zur Konstanthaltung des ungestörten Netzes oder zur Dämpfung anderer Vorgänge, z.B. Ausgleichsvorgängen in den Netzen.

**Patentansprüche**

1. Verfahren zum Betrieb einer Hochspannungsgleichstrom-Übertragungsstrecke (HGÜ) zwischen zwei Wechselspannungsnetzen (NA, NB) mit einem Notbetrieb bei Störung, wobei im Normalbetrieb eine erste Station (Station A) mittels eines netzgetakteten, als Gleichrichter betriebenen ersten Stromrichters (1A) einen vorgegebenen, dem ersten Wechselspannungsnetz (NA) entnommenen Gleichstrom ($i_{dA}$) der HGÜ einprägt und eine zweite Station (Station B) mittels eines in das zweite Wechselspannungsnetz (NB) einspeisenden netzgetakteten, als Wechselrichter betriebenen zweiten Stromrichters (1B) die Gleichspannung ($U_{dB}$) der HGÜ bestimmt und wobei bei der Störung in einer (A bzw. B) der beiden Stationen diese Störung durch ein in dieser einen Station gebildetes, führendes Störungssignal (QA = 0 bzw. QB = 0) erfasst wird und die Gleichspannungsanschlüsse des einen in dieser einen Station angeordneten Stromrichters (1A bzw. 1B) über einen Bypass-Pfad bildende Bypass-Ventile kurzgeschlossen werden, die auf eine Belastung mit einem dem Blindstrom im Normalbetrieb mindestens ungefähr entsprechenden Strom ausgelegt sind und beim Auftreten des führenden Störungssignals gezündet werden, dadurch gekennzeichnet, dass nach dem Schliessen des Bypass-Pfades in der einen Station in der anderen Station (B bzw. A) ein abgeleitetes Störungssignal (QB = 0 bzw. QA = 0) gebildet wird, das in dieser anderen Station einen Gleichrichterbetrieb und eine Einspeisung eines Bypass-Stromes in die HGÜ auslöst, und dass nach Beendigung der Störung in besagter einen Station mittels eines führenden Freigabesignals (QA = 1 bzw. QB = 1) der Bypass-Pfad unterbrochen und der Übergang in den netzgetakteten Normalbetrieb dieser Station eingeleitet wird und anschliessend in der anderen Station (B bzw. A) mittels eines abgeleiteten Freigabesignals die Bypass-Stromeinspeisung beendet und der Übergang in den netzgetakteten Normalbetrieb dieser Station eingeleitet wird (Fig. 26, Fig. 27).

2. Verfahren nach Anspruch 1, dadurch gekennzeichnet, dass während des Notbetriebs der Bypass-Strom entsprechend den Erfordernissen des anderen Wechselspannungsnetzes, insbesondere entsprechend dem den Bypass-Strom bestimmenden Ausgangssignal eines dort angeordneten Bypass-Reglers (68A, 68B, Fig. 9, Fig. 10) für die Netzwechselspannung oder die Blindleistung, vorgegeben wird (Fig. 26, Fig. 27).

3. Verfahren nach Anspruch 1 oder 2, dadurch gekennzeichnet, dass zur Aufnahme des Notbetriebes der anderen Station der Steuerwinkel des anderen Stromrichters mittels des abgeleiteten Störungssignals derart in den Gleichrichterbetrieb verschoben wird, dass der HGÜ eine in Stromflussrichtung der Bypass-Ventile der einen Station positive, zur Zündung dieser Bypass-Ventile ausreichende Spannung eingeprägt wird.

4. Verfahren nach Anspruch 3, dadurch gekennzeichnet, dass zur Aufnahme des Notbetriebes dem Steuerwinkel der anderen Station (z.B. B) ein Zusatzimpuls ($\triangle\alpha$) zur Einprägung eines vorübergehenden Spannungsimpulses, insbesondere bei einer Störung der ersten Station (A) dem Steuerwinkel der zweiten Station (B) ein Zusatzimpuls zur raschen Umladung der HGÜ, aufgeschaltet wird (Fig. 26).

5. Verfahren nach Anspruch 3, dadurch gekennzeichnet, dass bei einer Störung in der zweiten Station (B) die HGÜ über in Reihe liegende Ventile der zweiten Station entladen wird und dass anschliessend die Bypass-Ventile in der zweiten Station gezündet werden, sobald der HGÜ über den ersten Stromrichter wieder eine zur Bypass-Ventil-Zündung ausreichende positive Spannung eingeprägt ist (Fig. 27).

6. Verfahren nach Anspruch 3, dadurch gekennzeichnet, dass bei einer Störung in der zweiten Station (B) beim Auftreten des führenden Störungssignals (QB = 0) die Bypass-Ventile möglichst sofort gezündet werden und dass beim Auftreten des abgeleiteten Störungssignals (QA = 0) in der ersten Station (A) der Steuerwinkel so vorgegeben wird, dass die HGÜ ohne Erlöschen des HGÜ-Stroms nachgeladen wird.

7. Verfahren nach Anspruch 6, dadurch gekennzeichnet, dass der Steuerwinkel der ersten Station zur Nachladung der HGÜ dadurch gebildet wird, dass in einem Netzmodell in der ersten Station (A) ein Modellwert ($i_{dB}$) für den Gleichstrom der zweiten Station gebildet und dieser Modellwert auf einen möglichst konstanten Wert ($i_{dA}^*$) geregelt wird (Fig. 13, Fig. 14).

8. Verfahren nach einem der Ansprüche 1 bis 7, dadurch gekennzeichnet, dass als Bypass-Ventile eine ausgewählte Kombination der für den normalen Stromrichterbetrieb benötigten Stromrichterventile gezündet werden (Bypass-Zusatzimpuls BZ, Fig. 20), insbesondere mehrere oder alle von in Reihe liegenden Stromrichterventile gebildete Stromrichter-Brückenzweige.

9. Verfahren nach Anspruch 8, dadurch gekennzeichnet, dass für die Aufnahme des netzgetakteten Normalbetriebes in der einen Station nach Beendigung der Störung ein Startwert des Steuerwinkels vorgegeben und aus einer auf die Netzspannung synchronisierten Referenzspannung und dem Startwert des Steuerwinkels der Zyklus der zum Normalbetrieb gehörenden netzgetakteten Zündbefehle gebildet wird und dass der Normalbetrieb mit dem Zündbefehl eines derjenigen für den Start ausgewählten Zündbefehle aufgenommen wird, die im Zyklus der Zündbefehle der Abkommutierung des Stromes von einem der Bypass-Ventile entsprechen (Impuls FZO in Fig. 16, Impuls S$^+$ in Fig. 22).

10. Verfahren nach Anspruch 9, dadurch gekennzeichnet, dass die Kombination der Bypass-Ventile und die Auswahl der Start-Zündbefehle vorprogrammiert sind (Fig. 16).

11. Verfahren nach Anspruch 9, dadurch gekennzeichnet, dass die Kombination der Bypass-Ventile betriebsabhängig von den beim Auftreten des führenden Störungssignals stromführenden Ventilen bestimmt wird und dass die Zündbefehle für den Start des Normalbetriebes abhängig von der betriebsabhängigen Bypass-Ventil-Kombination ausgewählt werden (Fig. 20).

12. Verfahren nach Anspruch 11, dadurch gekennzeichnet, dass während des Normalbetriebes jeweils aus dem im Zyklus der netzgetakteten Zündbefehle zuletzt abgegebenen Zündbefehl die Bypass-Ventil-Kombination bestimmt und bis zur nächsten Ventilzündung gespeichert (Speicher SBR$^+$, ..., SBT$^-$, Fig. 17) wird und dass beim Auftreten des führenden Störungssignals die Zündbefehle des Zündzyklus gesperrt und die durch die gespeicherte Bypass-Ventil-Kombination angegebenen Ventile gezündet werden (Impuls BZ in Fig. 20).

13. Verfahren nach Anspruch 12, dadurch gekennzeichnet, dass bei Zündung der Bypass-Ventile ein Speicher gesetzt wird, dessen Speicherwerte beim Auftreten des führenden Freigabesignals ausgelesen werden und die für den Start ausgewählten Zündbefehle freigeben.

14. Verfahren nach einem der Ansprüche 9 bis 13, dadurch gekennzeichnet, dass das führende Freigabesignal durch Überwachung des Wechselspannungsnetzes gebildet und nach einer Störung des Netzes zunächst unterdrückt wird, bis der Referenzspannungsgenerator bis auf einen maximal zulässigen Synchronisationsfehler, insbesondere einen Synchronisations-Fehlwinkel unter 30°, synchronisiert ist (Schonzeit T$_{syn}$ in Fig. 26, 27).

15. Verfahren nach einem der Ansprüche 1 bis 14, dadurch gekennzeichnet, dass die Aufnahme des Normalbetriebes in der einen Station unter Einprägung eines einem vorübergehenden Gleichrichterbetrieb entsprechenden Spannungsimpulses in die HGÜ erfolgt.

16. Verfahren nach einem der Ansprüche 1 bis 15, dadurch gekennzeichnet, dass nach einem führenden Freigabesignal oder einem abgeleiteten Freigabesignal der Normalbetrieb des Stromrichters mit einem Steuerwinkel ($\alpha$) aufgenommen wird, der ungefähr von dem der Stromrichter-Ausgangsgleichspannung Null entsprechenden Wert ($\alpha = 90°$) auf einen dem Normalbetrieb ungefähr entsprechenden Endwert hochgefahren wird, wobei dem Start der Hochlauffunktion eine vorübergehende Steuerwinkelverschiebung in den Gleichrichterbetrieb vorgelagert oder überlagert sein kann (Fig. 26, 27).

17. Verfahren nach Anspruch 16, dadurch gekennzeichnet, dass die Hochlaufzeit ungefähr zwei Perioden der Netzwechselspannung beträgt.

18. Verfahren nach Anspruch 16 oder 17, dadurch gekennzeichnet, dass der Hochlauf des Steuerwinkels beider Stromrichter vorprogrammiert und aufeinander abgestimmt ist.

19. Verfahren nach einem der Ansprüche 16 bis 18, dadurch gekennzeichnet, dass nach Beendigung des Hochlaufs der Steuerwinkel einer oder beider Stationen von einer Vorsteuereinrichtung vorgegeben wird, der das Ausgangssignal ($\triangle x_B$) eines Führungsgrössenreglers (41) und ein Modellwert für die im Normalbetrieb von der anderen Station erzeugte Störgrösse aufgeschaltet sind.

20. Verfahren nach Anspruch 16 und Anspruch 19, dadurch gekennzeichnet, dass der Steuerwinkel einer oder beider Stationen von einer Vorsteuereinrichtung vorgegeben wird, der einerseits während des Notbetriebes das Ausgangssignal eines den Bypass-Strom bestimmenden Bypass-Reglers, insbesondere eines Spannungsreglers für die Wechselspannung des eines Netzes oder eines Blindleistungsreglers, und während des Normalbetriebes das Ausgangssignal des Führungsgrössenreglers und andererseits während des Hochlaufs die Hochlauffunktion und während des Normalbetriebes und vorzugsweise bis zum Start der Hochlauffunktion der Modellwert der Störgrösse aufgeschaltet ist.

21. Verfahren nach Anspruch 19 oder 20, dadurch gekennzeichnet, dass in der ersten Station als Modellwert im Fall einer HGÜ-Fernleitung die Spannung (U$_{dLA}$, Fig. 5) am Ende einer dem ersten Stromrichter gleichspannungsseitig nachgeschalteten Stromrichterdrossel oder im Fall einer HGÜ-Kurzkupplung eine aus einem errechneten induktiven Gleichspannungsabfall des zweiten Stromrichters gebildeter Modellwert ($\tilde{U}_{dB}$, Fig. 7) aufgeschaltet ist.

22. Verfahren nach Anspruch 19 oder 20, dadurch gekennzeichnet, dass in der ersten Station der Modellwert von einem von Betriebsdaten der ersten Station gespeisten Modellschaltung gebildet wird (Fig. 13, Fig. 14).

23. Verfahren nach Anspruch 19 oder 20, dadurch gekennzeichnet, dass in der zweiten Station der Modellwert aus dem induktiven Gleichspannungsabfall des zweiten Stromrichters bestimmt wird, wobei der induktive Gleichspannungsabfall aus einem entsprechend dem Sollwert des Führungsgrössenreglers vorgegebenen Soll-Löschwinkel ($\gamma^*$) und aus Messwerten des Gleichstroms (i$_{dB}$) und der Netzwechselspannung (U$_B$) der zweiten Station berechnet und zum Ausgangssignal des Führungsgrössenreglers (41B), insbesondere eines Reglers für die die Spannung (U$_B$) oder die übertragene Blindleistung (Q$_B$) addiert wird (Fig. 5).

24. Verfahren nach einem der Ansprüche 16 bis 23, dadurch gekennzeichnet, dass beim Übergang vom Notbetrieb in den Normalbetrieb der Steuerwinkel der Station A mit anfänglich grösserer und später abnehmender Steigung in den normalen Gleichrichterbetrieb und der Steuerwinkel der Station B mit umgekehrter Reihenfolge der Steigung in den normalen Wechselrichterbetrieb gefahren wird.

25. Verfahren nach einem der Ansprüche 16 bis 24, dadurch gekennzeichnet, dass bei einem aus mehreren Teilstromrichtern bestehenden Stromrichter der Normalbetrieb der Teilstromrichter zeitlich versetzt gestartet wird, wobei der zeitlich zuerst startende Teilstromrichter rasch auf einen über dem betriebsmässig vorgegebenen Steuerwinkel hochgefahren und anschliessend in dem Masse zurückgenommen wird, wie der Hochlauf der anderen Teilstromrichter beendet wird.

26. Verfahren nach einem der Ansprüche 1 bis 25, dadurch gekennzeichnet, dass jeweils das führende Störungs- und Freigabesignal aus Betriebsdaten des einen Stromrichters, insbesondere aus Messwerten der angelegten Wechselspannung, gewonnen wird und dass jeweils das abgeleitete Störungs- und Freigabesignal aus Messwerten an den Gleichspannungsanschlüssen der anderen Station gewonnen wird, sobald dort die Auswirkungen des unterbrochenen oder wieder aufgenommenen Normalbetriebes erfassbar sind.

27. Vorrichtung zur Hochspannungsgleichstromübertragung mit einer Hochspannungsgleichstrom-Übertragungsstrecke (HGÜ), die in einer ersten Station (A) über einen ersten, im netzgetakteten Normalbetrieb als Gleichrichter betriebenen Stromrichter (1A) an ein erstes Wechselspannungsnetz (NA) angeschlossen und in einer zweiten Station (B) über einen zweiten, im netzgetakteten Normalbetrieb als Wechselrichter betriebenen Stromrichter (1B) an ein zweites Wechselspannungsnetz (NB) angeschlossen ist, enthaltend in jeder Station (Fig. 1):

— einen Referenzspannungsgenerator (RGA, RGB), der im Normalbetrieb eine netzsynchrone Referenzspannung erzeugt,

— einen von einer Steuer- und Regeleinrichtung (4A, 4B) mit einem Stromrichter ($\alpha_A$, $\alpha_B$) angesteuerten Steuersatz (STA, STB), der netzgetaktete Zündbefehle ($S_\alpha$) für den jeweiligen Stromrichter bildet, und

— eine Blockierschaltung (BS), die beim Auftreten eines von einer Überwachungseinrichtung gebildeten führenden Störungssignals die Zündbefehle sperrt und beim Auftreten eines führenden Freigabesignals freigibt, mit einem ersten Speicher (SBR+, ..., SBT⁻), in dem eine Kombination von als Bypass-Ventile ausgewählten Stromrichterventilen gespeichert ist und der mit den Steueranschlüssen der Ventile über Schaltungsmittel (GU2, GU3, GO2) verbunden ist, die beim Auftreten des führenden Störungssignals die Sperrung der netzgetakteten Zündbefehle und die Abgabe von Bypass-Zündbefehlen an die ausgewählten Bypass-Ventile bewirken (Fig. 17), dadurch gekennzeichnet,

— dass die Überwachungseinrichtung (Fig. 11) jeder Station Mittel (74, 71), die durch Überwachung der elektrischen Grössen des betreffenden Netzes bem Auftreten einer Netzstörung das führende Störungssignal («Selbststörungs-Meldeimpuls Fde») und nach Beendigung der Störung das führende Freigabesignal («Selbstfreigabeimpuls Ffe») erzeugen, und weitere Mittel (72, 73) enthält, die durch Überwachung der gleichspannungsseitigen elektrischen Grössen beim Auftreten der Auswirkung einer Störung der fremden Station ein abgeleitetes Störungssignal («Fremdstörungs-Meldeimpuls Fdf») und nach den Auswirkungen einer Aufnahme des netzgetakteten Normalbetriebes in der fremden Station ein abgeleitetes Freigabesignal («Fremdfreigageimpuls Fff») erzeugen;

— dass eine mit dem Steuersatz und der Blockierschaltung verbundene Auswahlschaltung (Fig. 21) einen zweiten Speicher, in dem nach einer Zündung der Bypass-Ventile eine für die Aufnahme des Normalbetriebes vorgesehene Kombination von Startventilen gespeichert ist, und eine logische Schaltung (GU5, GO5) enthält, die nach einem führenden Freigabesignal beim Auftreten eines Zündbefehls für eines der in der Startventil-Kombination enthaltenen Ventile die Sperrung der netzgetakteten Zündbefehle aufhebt, und

— dass eine Programmschaltung (63) derart in den Steuerwinkel für den Steuersatz der anderen Station eingreift, dass bei einem abgeleiteten Störungssignal der Stromrichter der anderen Station in einem Bypass-Betrieb als Gleichrichter betrieben und bei einem abgeleiteten Freigabesignal der Bypass-Betrieb beendet und eine Aufnahme des Normalbetriebs ausgelöst wird (Fig. 15).

28. Vorrichtung nach Anspruch 27, gekennzeichnet durch einen Schalter (60A, 60B), der dem Steuersatz der anderen Station im Bypass-Betrieb das Ausgangssignal eines Bypass-Reglers, insbesondere eines Spannungsreglers oder Blindleistungsreglers (68), zur Bildung des Zündwinkels des Steuersatzes aufschaltet (Fig. 9, Fig. 10).

29. Vorrichtung nach Anspruch 27 oder 28, gekennzeichnet durch einen anderen Schalter (61A, 61B) in jeder Station, der beim Auftreten eines Freigabesignals einen Hochlaufgeber (66) zur Bildung des Zündwinkels ($\alpha$) dem Steuersatz aufschaltet (Fig. 9, 10).

30. Vorrichtung nach Anspruch 29, dadurch gekennzeichnet, dass bei einem aus Teilstromrichtern bestehenden Stromrichter für jeden Teilstromrichter eine eigene Blockierschaltung, eine eigene Auswahlschaltung und ein eigener Hochlaufgeber vorgesehen sind, durch die die Aufnahme des Normalbetriebes der Teilstromrichter zeitlich versetzt und mit unterschiedlichen Hochlauffunktionen erfolgt.

31. Vorrichtung nach Anspruch 29, gekennzeichnet durch Schaltmittel (61A, 61B), die nach Ende des Hochlaufs den Hochlaufgeber abschalten und auf eine Einrichtung zur Ermittlung einer Störgrösse ($U_{dLA}$, Fig. 10; $\alpha_{Bv}$, Fig. 9) umschalten.

32. Vorrichtung nach Anspruch 31, dadurch gekennzeichnet, dass die Störgrössenermittlungs-Einrichtung in der ersten Station die Gleichspannung ($U_{dLA}$) und in der zweiten Station den induktiven Gleichspannungsabfall ($dx_B \cdot i_{dB}$) des jeweiligen Stromrichters erfasst.

33. Vorrichtung nach Anspruch 31 oder 32, gekennzeichnet durch eine dem Steuersatz vorgeschaltete Vorsteuereinrichtung (40A, 42A bzw. 40B, 42B), der beim oder nach Auftreten eines Freigabesignals die Störgrösse und das Ausgangssignal eines Führungsgrössenreglers (41A, 41B) aufgeschaltet ist (Fig. 9, Fig. 10).

34. Vorrichtung nach einem der Ansprüche 27 bis 33, dadurch gekennzeichnet, dass die Speicher der Blockierschaltung und der Auswahlschaltung Festwertspeicher sind, die vorzugsweise in der Programmschaltung enthalten sind.

35. Vorrichtung nach einem der Ansprüche 27 bis 33, gekennzeichnet durch Mittel zur Ansteuerung der Speicher, die den ersten Speicher jeweils bei einem Ausgangssignal des Steuersatzes auf eine vom momentanen Ansteuerzustand der Stromrichterventile abhängige Bypass-Ventil-Kombination und den zweiten Speicher jeweils bei einer Zündung der Bypass-Ventile auf eine von der Bypass-Ventil-Kombination abhängige Startventilkombination setzen.

36. Vorrichtung nach einem der Ansprüche 27 bis 35, dadurch gekennzeichnet, dass der Überwachungseinrichtung zur Bildung der Störungs- und Freigabesignale und der Steuer- und Regeleinrichtung zur Bildung des Steuerwinkels in jeder Station nur die ohne Verwendung von Fernwirksignalen zur Verfügung stehenden Ist- und Sollwerte eingegeben sind.

**Claims**

1. A method of operating an EHT d.c. link between two a.c. voltage networks (NA, NB), with emergency operation in the event of a disturbance, where, in normal operation, the first station (station A) impresses upon the EHT d.c. a predetermined d.c. ($i_{dA}$) obtained from the first a.c. voltage network (NA), using a first power converter (1A) controlled by a network clock signal and operated as a rectifier, and where a second station (station B) determines the d.c. voltage ($U_{dB}$) of the EHT d.c. by means of a second power converter (1B) connected to the second a.c. voltage network (NB), controlled by a network clock signal, and operating as an inverse rectifier, where, in the event of a disturbance in one of the two stations (A or B), this disturbance is detected by a leading disturbance signal (QA = 0 or QB = 0) formed in the said station, and the d.c. voltage terminals of the power converter (1A or 1B) in said station, are short-circuited via by-pass valves which form a shunt arm designed for a current load which corresponds at least approximately to the reactive current in normal operation, and are ignited when the leading disturbance signal occurs, characterised in that following the closure of the shunt arm in the one station, a derived disturbance signal (QB = 0 or QA = 0) is formed in the other station (B or A) which triggers a rectifier operation in this other station and the supply of a by-pass current into the EHT d.c., and that on the termination of the disturbance in the one station, a leading release signal (QA = 1 or QB = 1) interrupts the shunt arm and causes this station to assume network-clock-controlled normal operation and then a derived release signal serves to terminate the supply of the by-pass current and to initiate network-clock-controlled normal operation in the other station (B or A) (Fig. 26, Fig. 27).

2. A method as claimed in Claim 1, characterised in that during emergency operation the shunt arm current is governed by the requirements of the other a.c. voltage network, in particular in accordance with the output signal of a by-pass regulator (68A, 68B, Fig. 9, Fig. 10) arranged therein which determines the shunt arm current for the network a.c. voltage or the reactive power (Fig. 26, Fig. 27).

3. A method as claimed in Claim 1 or 2, characterised in that in order to commence emergency operation in the other station, the control angle of the other converter is moved towards rectifier operation by the derived disturbance signal such that a voltage positive in the current flow direction of the by-pass valves of the one station and sufficient to ignite these by-pass valves is impressed upon the EHT d.c.

4. A method as claimed in Claim 3, characterised in that to commence emergency operation an additional pulse ($\triangle \alpha$) is applied to the control angle of the other station (e.g. B) in order to impress a temporary voltage pulse, in particular in the event of a disturbance in the first station (A) an additional pulse is applied to the control angle of the second station (B) in order to rapidly recharge the EHT d.c. (Fig. 26).

5. A method as claimed in Claim 3, characterised in that in the event of a disturbance in the second station (B) the EHT d.c. is discharged via series-connected valves in the second station, and that then the by-pass valves in the second station are ignited as soon as a positive voltage sufficient to ignite the by-pass valves has been impressed upon the EHT d.c. via the first converter (Fig. 27).

6. A method as claimed in Claim 3, characterised in that in the event of a disturbance in the second station (B), the by-pass valves are ignited as far as possible immediately on the occurrence of the leading disturbance signal (QB = 0), and that on the occurrence of the derived disturbance signal (QA = 0) in the first station (A) the control angle is contrived to be such that the EHT d.c. is recharged without extinguishing the EHT d.c. current.

7. A method as claimed in Claim 6, characterised in that to form the control angle of the first station which serves to recharge the EHT d.c. a model value ($i_{dB}$) for the d.c. of the first station is formed in a network model in the first station (A), and this model value is regulated to as constant as possible a value ($i_{dA}^{*}$) (Fig. 13, Fig. 14).

8. A method as claimed in one of claims 1 to 7, characterised in that a selected combination of the converter valves required for normal converter operation are ignited as by-pass valves, (by-pass additional pulse BZ, Fig. 20), in particular a plurality of, or all of the converter bridge arms formed by series-connected converter valves.

9. A method as claimed in Claim 8, characterised in that to commence network-clock-controlled normal operation in one station, on the termination of the fault a start value of the control angle is preset and the cycle of mains-clock-controlled ignition commands assigned to normal operation is formed from a reference voltage synchronised to the network voltage and from the start value of the control angle, and that normal operation is commenced with the ignition command of one of those ignition commands selected for start-up, which, in the cycle of the ignition commands, correspond to the commutation of the current from one of the by-pass valves (pulse FZO in Fig. 16, pulse $S^{+}$ in Fig. 22).

10. A method as claimed in Claim 9, characterised in that the combination of the by-pass valves and the selection of the start ignition commands are preprogrammed (Fig. 16).

11. A method as claimed in Claim 9, characterised in that the combination of the by-pass valves is determined in operational dependence upon the valves which conduct current on the occurrence of the leading disturbance signal, and that the ignition commands for the start-up of normal operation are selected upon the operationally-dependet by-pass valve combination (Fig. 20).

12. A method as claimed in Claim 11, characterised in that during normal operation the by-pass valve combination is determined on the basis of the last ignition command to have been emitted in the cycle of the network-clock-controlled ignition commands, and is stored until the next valve ignition (store SBR$^+$, ..., SBT$^-$, Fig. 17), and that the occurrence of the leading disturbance signal blocks the ignition commands of the ignition cycle and the valves indicated by the stored by-pass valve combination are ignited (pulse BZ in Fig. 20).

13. A method as claimed in Claim 12, characterised in that when the by-pass valves are ignited a store is set whose store values are read when the leading release signal occurs, and release the ignition commands selected for the start-up.

14. A method as claimed in one of the Claims 9 to 13, characterised in that the leading release signal is formed by monitoring the a.c. voltage network and is initially suppressed following a disturbance in the network, until the reference voltage generator is synchronised to a maximum permissible synchronisation error, in particular a synchronisation angle error of less than 30° (hold-off interval $T_{syn}$ in Fig. 26, 27).

15. A method as claimed in one of the Claims 1 to 14, characterised in that the commencement of normal operation in the one station takes place by impressing onto the EHT d.c. a voltage pulse which corresponds to temporary rectifier operation.

16. A method as claimed in one of the Claims 1 to 15, characterised in that following a leading release signal or a derived release signal, the normal operation of the converter is commenced with a control angle ($\alpha$) which is increased from the value ($\alpha = 90°$), which corresponds approximately to the converter output d.c. voltage of zero, to a final value which corresponds approximately to normal operation, where a temporary control angle shift into rectifier operation can precede or be superimposed upon the start of the ramp function (Fig. 26, Fig. 27).

17. A method as claimed in Claim 16, characterised in that the ramp time amounts to approximately two periods of the network a.c. voltage.

18. A method as claimed in Claim 16 or 17, characterised in that the ramp functions of the control angles of the two converters are preprogrammed and adapted to one another.

19. A method as claimed in one of Claims 16 to 18, characterised in that at the end of the ramp function the control angle of one or both stations is preset by an advance control device supplied with the output signal ($\triangle x_B$) of a command variable regulator (41) and a model value for the disturbance variable produced during normal operation by the other station.

20. A method as claimed in Claim 16 and 19, characterised in that the control angle of one or of both stations is preset by an advance control device supplied during emergency operation with the output signal of a by-pass regulator which governs the by-pass current, in particular a voltage regulator for the a.c. voltage of the first network or a reactive power regulator, and during normal operation is supplied with the output signal of the command variable regulator, and is supplied with the ramp function during the ramp process and during normal operation and preferably until the start of the ramp function, is supplied with the model value of the disturbance variable.

21. A method as claimed in Claim 19 or 20, characterised in that in the first station, in the case of an EHT d.c. long-distance transmission line the voltage ($U_{dLA}$, Fig. 5) at the end of a converter choke connected to the output of the first converter on the d.c. voltage side serves as a model value or a model value ($U_{dB}$, Fig. 7), formed from a calculated, inductive d.c. voltage drop in the second converter, is used in the case of an EHT d.c. close-coupling.

22. A method as claimed in Claim 19 or 20, characterised in that in the first station the model value is formed by a model circuit fed with operating data from the first station (Fig. 13, Fig. 14).

23. A method as claimed in Claim 19 or 20, characterised in that in the second station the model value is governed by the inductive d.c. voltage drop in the second converter, where the inductive d.c. voltage drop is calculated from a theoretical extinguishing angle ($\gamma^*$), preset in accordance with the theoretical value of the command variable regulator, and from measured values of the d.c. ($i_{dB}$) and the network a.c. voltage ($U_B$) of the second station, and is added to the output signal of the command variable regulator (41B), in particular a regulator for the voltage ($U_B$) or the transmitted reactive power ($Q_B$) (Fig. 5).

24. A method as claimed in one of the Claims 16 to 23, characterised in that in the event of a changeover from emergency operation to normal operation the control angle of station A initially enters normal rectifier operation with a steep gradient that later decreases, and the control angle of station B enters normal inverse rectifier operation with a reverse gradient sequence.

25. A method as claimed in one of the Claims 16 to 24, characterised in that if a converter consists of a plurality of sub-converters, the normal operation of the sub-converter is started in time-staggered fashion, where the sub-converter which starts first rapidly rises to a control angle above that preset for operation and is then reduced in accordance with the extent to which the ramp function of the other sub-converters is terminated.

26. A method as claimed in one of the Claims 1 to 25, characterised in that the leading disturbance signal and release signal are each obtained from operating data of the one converter, in particular measured values of the connected a.c. voltage, and that the derived disturbance-and-release signal are each obtained from measured values at the d.c. voltage terminals of the other station as soon as the effects of the interrupted or resumed normal operation can be detected therein.

27. An EHT d.c. device comprising an EHT d.c. link connected in a first station (A) to a first a.c. voltage network (NA) via a first converter (1A) which operates as rectifier during network-clock-controlled normal operation, and is connected in a second station (B) to a second a.c. voltage network (NB) via a second converter (1B) which operates as an inverse rectifier in network-clock-controlled normal operation, containing in each station (Fig. 1):

29

— a reference voltage generator (RGA, RGB) which produces a network-synchronised reference voltage during normal operation;

— a control set (STA, STB) driven by a control-and-regulating device (4A, 4B) with a control angle ($\alpha_A$, $\alpha_B$) forming network-clock-controlled ignition commands (S$\alpha$) for the respective converter; and

— a blocking circuit (BS) which blocks the ignition commands on the occurrence of a leading disturbance signal formed by a monitoring device and releases the ignition commands on the occurrence of a leading release signal, comprising a first store (SBR+, ..., SBT⁻) which stores a combination of converter valves selected as by-pass valves and which is connected to the control terminals of the valves via switching means (GU2, GU3, GO2) which, on the occurrence of the leading disturbance signal, block the network-clock-controlled ignition commands and emit by-pass ignition commands to the selected by-pass valves (Fig. 17); characterised in that:

— the monitoring device (Fig. 11) of each station contains means (74, 71) which produce the leading disturbance signal («self-disturbance message pulse Fde») by monitoring the electrical variables of the network in question, and produce the leading release signal («self-release pulse Ffe») at the end of the disturbance; and contains further means (72, 73) which produce a derived disturbance signal («alien-disturbance-message pulse Fdf») on the occurrence of the effects of a disturbance in the other station by monitoring the d.c. voltage side electrical variables and produce a derived release signal («alien-release pulse Fff») following the effects of the resumption of network-clock-controlled normal operation in the other station;

— that a selection circuit (Fig. 21) connected to the control set and to the blocking circuit contains a second store which stores a combination of start valves provided for the resumption of normal operation following ignition of the by-pass valves and further contains a logic circuit (GU5, GO5) which discontinues the blockage of the network-clock-controlled ignition commands following a leading release signal after the occurrence of an ignition command for one of the valves contained in the start valve combination; and

— that a program circuit (63) acts upon the control angle for control set of the other station such that in the case of a derived disturbance signal the converter in the other station is operated in by-pass operation as a rectifier and in the case of a derived release signal the by-pass operation is terminated and triggers the resumption of normal operation (Fig. 15).

28. A device as claimed in Claim 27, characterised by a switch (60A, 60B) which supplies the control set of the other station with the output signal of a by-pass regulator in by-pass operation, in particular a voltage regulator or a reactive power regulator (68), to form the ignition angle of the control set (Fig. 9, Fig. 10).

29. A device as claimed in Claim 27 or Claim 28, characterised by a further switch (61A, 61B) in each station which connects a ramp generator (66) to the control set in order to form the ignition angle ($\alpha$) in the event of a release signal (Fg. 9, 10).

30. A device as claimed in Claim 29, characterised in that where a converter consists of sub-converters each sub-converter is provided with its own blocking circuit, its own selection circuit and its own ramp generator, by means of which the resumption of normal operation by the sub-converters takes place in time-staggeres fashion with different ramp functions.

31. A device as claimed in Claim 29, characterised by switching means (61A, 61B) which disconnect the ramp function generator at the end of the ramp function and switch over to a device which determines a disturbance variable ($U_{dLA}$, Fig. 10; $\alpha_{Bv}$, Fig. 9).

32. A device as claimed in Claim 31, characterised in that in the first station the disturbance variable determining device detects the d.c. voltage ($U_{dLA}$) and in the second station it detects the inductive d.c. voltage drop ($dx_B \cdot i_{dB}$) of the respective converter.

33. A device as claimed in Claim 31 or 32, characterised by an advance control device (40A, 42A or 40B, 42B) which precedes the control set and is supplied with the disturbance variable and the outer signal of a command variable regulator (41A, 41B) on or following the occurrence of a release signal (Fig. 9, Fig. 10).

34. A device as claimed in one of Claims 27 to 33, characterised in that the stores of the blocking circuit and the selection circuit are ROMs preferably contained in the program circuit.

35. A device as claimed in one of Claims 27 to 33, characterised by means which drive the stores and set the first store at a by-pass valve combination dependent upon the instantaneous drive status of the converter valves whenever the control set emits an output signal, and which set the second store at a start valve combination dependent upon the by-pass valve combination whenever the by-pass valves are ignited.

36. A device as claimed in one of Claims 27 to 35, characterised in that only those actual and theoretical values available without the use of remote-control signals are input into the monitoring device for the formation of the disturbance signals and release signals, and into the control-and-regulating device for the formation of the control angle in each station.

**Revendications**

1. Procédé pour faire fonctionner une voie de transmission à courant continu à haute tension (HGÜ) comportant deux réseaux à tension alternative (NA, NB), avec un fonctionnement en régime de secours, selon lequel, lors du fonctionnement normal, une première station (station A) injecte un courant continu prédéterminé ($i_{dA}$) prélevé du premier réseau à tension alternative (NA), dans la voie de transmission HGÜ au moyen d'un premier convertisseur de courant (1A) commandé à la cadence du réseau et fonctionnant en tant que redresseur, et une seconde station (station B) détermine la tension continue ($U_{dB}$) de la voie de transmission (HGÜ) à l'aide d'un second convertisseur de courant (1B) commandé à la cadence du réseau, fonctionnant en tant qu'onduleur et alimentant le second réseau à tension alternative (NB), et selon lequel, dans le cas d'une perturbation dans une première (A ou B) des deux stations, cette perturbation est détectée au moyen d'un signal de perturbation pilote (QA = 0 ou QB = 0) formé dans cette première station et les bornes à tension continu d'un premier convertisseur de courant (1A, 1B) situées dans une station sont court-circuitées par l'intermédiaire de valves de dérivation constituant une voie de dérivation, qui sont conçues pour recevoir un courant correspondant au moins approximativement à un courant réactif lors du fonctionnement normal et sont amorcées lors de l'apparition du signal de perturbation pilote, caractérisé par le fait qu'après la fermeture de la voie de dérivation dans la première station, dans la seconde station (B ou A) se trouve formé un signal de perturbation dérivé (QB = 0 ou QA = 0), qui déclenche, dans cette seconde station, un fonctionnement en redresseur et une injection d'un courant de dérivation dans la voie de transmission (HGÜ) et qu'à la fin de la perturbation dans ladite première station, la voie de dérivation est interrompue au moyen d'un signal pilote de libération (QA = 1 ou QB = 1) et le passage au fonctionnement normal, commandé à la cadence du réseau de cette station est déclenché et, ensuite, l'injection d'un courant de dérivation est arrêtée dans l'autre station (B ou A) au moyen d'un signal d'autorisation dérivé et le passage au fonctionnement normal, commandé à la cadence du réseau, de cette station, et déclenché (figure 26, figure 27).

2. Procédé suivant la revendication 1, caractérisé par le fait que pendant le fonctionnement en régime de secours, le courant de dérivation est prédéterminé en fonction des exigences de l'autre réseau à tension alternative, notamment en fonction du signal de sortie, déterminant le courant de dérivation, d'un régulateur de dérivation (68A, 68B, figure 9, figure 10) disposé dans ce réseau, pour la tension alternative du réseau ou pour la puissance réactive (figure 26, figure 27).

3. Procédé suivant la revendication 1 ou 2, caractérisé par le fait que pour la mise en oeuvre du fonctionnement en régime de secours de la seconde station, l'angle de commande du second convertisseur de courant est décalé au moyen du signal de perturbation dérivé, pour obtenir le mode de fonctionnement en redresseur de telle sorte qu'une tension, qui est positive pour le sens de passage du courant dans les valves de dérivation de la première station et est suffisante pour l'amorçage de ces valves de dérivation, est injectée dans la voie de transmission (HGÜ).

4. Procédé suivant la revendication 3, caractérisé par le fait que pour la mise en service du fonctionnement en régime de secours, une impulsion supplémentaire ($\triangle\alpha$) servant à injecter une impulsion de tension transitoire est appliquée à l'angle de commande de la seconde station (par exemple B), et notamment dans le cas d'une perturbation de la première station (A), une impulsion supplémentaire servant à modifier rapidement la charge de la voie de transmission (HGÜ) est appliquée à l'angle de commande de la seconde station (B) (figure 26).

5. Procédé suivant la revendication 3, caractérisé par le fait que, dans le cas d'une perturbation dans la seconde station (B), la voie de transmission (HGÜ) est déchargée per l'intermédiaire de valves branchées en série de la seconde station et qu'ensuite les valves de dérivation situées dans la seconde station sont amorcées dès qu'une tension positive, suffisante pour amorcer les valves de dérivation, est à nouveau injectée dans la voie de transmission (HGÜ) par l'intermédiaire du premier convertisseur de courant (figure 27).

6. Procédé suivant la revendication 3, caractérisé par le fait que, dans le cas d'une perturbation dans la seconde station (B), les valves de dérivation sont amorcées aussi rapidement que possible lors de l'apparition du signal de perturbation pilote (QB = 0) et que lors de l'apparition du signal de perturbation dérivé (QA = 0), l'angle de commande est prédéterminé dans la première station (A) de telle sorte que la voie de transmission (HGÜ) est rechargée sans extinction du réseau (HGÜ).

7. Procédé suivant la revendication 6, caractérisé par le fait que l'angle de commande de la première station pour la recharge de la voie de transmission (HGÜ) est formé par le fait qu'une valeur modèle ($i_{dB}$) pour le courant continu de la seconde station est formé dans un modèle de réseau dans la première station (A) et que cette valeur modèle est réglée à une valeur aussi constante que possible ($i_{dA}^{*}$) (figure 13, figure 14).

8. Procédé suivant l'une des revendications 1 à 5, caractérisé par le fait que, en tant que valves de dérivation, une combinaison sélectionnée des valves du convertisseur de courant, nécessaires pour le fonctionnement normal du redresseur de courant est amorcée (impulsion supplémentaire de dérivation BZ, figure 20), à savoir notamment plusieurs ou toutes les branches du pont du convertisseur de courant, formées par des valves du convertisseur de courant, branchées en série.

9. Procédé suivant la revendication 8, caractérisé par le fait que pour la mise en service du fonctionnement normal commandé à la cadence du réseau dans une station après la fin d'une perturbation, une valeur initiale de l'angle de commande est prédéterminée et que le cycle des instructions d'amorçage commandées à la cadence du réseau et correspondant au fonctionnement normal sont formés à partir d'une tension de référence synchronisée sur la tension du réseau et à partir de la valeur initiale de l'angle de commande, et que le fonctionnement normal est mis en oeuvre avec l'une des instructions d'amorçage, qui sont sélectionnées pour le démarrage et qui correspondent au cycle des instructions d'amorçage pour la commutation du courant à partir d'une des valves de dérivation (impulsion FZO sur la figure 16, impulsion $S^{+}$ sur la figure 22).

10. Procédé suivant la revendication 9, caractérisé par le fait que la combinaison des valves de dérivation et la sélection des instructions d'amorçage de démarrage sont programmées d'avance (figure 16).

11. Procédé suivant la revendication 9, caractérisé par le fait que la combinaison des valves de déri-

**0 142 096**

vation est déterminée, en fonction du fonctionnement, par les valves transmettant le courant lors de l'apparition du signal de perturbation pilote, et que les instructions d'amorçage pour le démarrage du fonctionnement normal sont sélectionnées en fonction de la combinaison de valves de dérivation, qui dépend du fonctionnement (figure 20).

12. Procédé suivant la revendication 11, caractérisé par le fait que pendant le fonctionnement normal, la combinaison de valves de dérivation est déterminée respectivement à partir de l'instruction d'amorçage délivrée en dernier lieu dans le cycle des instructions d'amorçage commandées à la cadence du réseau et est mémorisée jusqu'à l'amorçage immédiatement suivant des valves (mémoires SBR$^+$ ... SBT$^-$, figure 17) et que lors de l'apparition du signal de perturbation pilote, les instructions d'amorçage du cycle d'amorçage sont bloquées et les valves, indiquées par la combinaison mémorisée de valves de dérivation, sont amorcées (impulsion BZ sur la figure 20).

13. Procédé suivant la revendication 12, caractérisé par le fait que, lors de l'amorçage des valves de dérivation, il se produit le positionnement d'une mémoire, dont les valeurs sont lues lors de l'apparition du signal de libération pilote et libèrent les instructions d'amorçage sélectionnées pour de démarrage.

14. Procédé suivant l'une des revendications 9 à 13, caractérisé par le fait que le signal d'autorisation pilote est formé par contrôle du réseau à tension alternative et est tout d'abord supprimé après une perturbation du réseau jusqu'à ce que le générateur de la tension de référence soit synchronisé à une erreur de synchronisation maximale admissible près, notamment une erreur angulaire de synchronisation inférieure à 30° (intervalle de supression T$_{syn}$ sur les figures 26, 27).

15. Procédé suivant l'une des revendications 1 à 14, caractérisé par le fait que la mise en service du fonctionnement normal dans la première station s'effectue moyennant l'injection d'une impulsion de tension, correspondant à un fonctionnement transitoire des redresseurs, dans la voie de transmission (HGÜ).

16. Procédé suivant l'une des revendications 1 à 15, caractérisé par le fait qu'après un signal d'autorisation pilote ou un signal d'autorisation dérivé, le fonctionnement normal du convertisseur de courant est mis en oeuvre avec un angle de commande (α), qui est accru approximativement depuis la valeur (A = 90°) correspondant à la tension continue nulle de sortie du convertisseur de courant, à une valeur finale correspondant approximativement au fonctionnement normal, auquel cas un passage transitoire de l'angle de commande produisant le fonctionnement des redresseurs peut être mis en oeuvre avant le démarrage du fonctionnement de montée en régime ou peut lui être superposé (figures 26, 27).

17. Procédé suivant la revendication 16, caractérisé par le fait que la durée de fonctionnement de montée en régime élevé est égale approximativement à deux périodes de la tension alternative du réseau.

18. Procédé suivant la revendication 16 ou 17, caractérisé par le fait que les augmentations de l'angle de commande des deux convertisseurs de courant sont programmés d'avance et réglées l'une sur l'autre.

19. Procédé suivant l'une des revendications 16 à 18, caractérisé par le fait qu'à la fin du fonctionnement de montée en régime, l'angle de commande d'une ou des deux stations est prédéterminé par un dispositif de commande pilote, auquel sont appliqués le signal de sortie ($\triangle$x$_B$) d'un régulateur de grandeur de référence (41) et une valeur modèle pour la grandeur perturbatrice produite pendant le fonctionnement normal de l'autre station.

20. Procédé suivant les revendications 16 et 19, caractérisé par le fait que l'angle de commande dune ou des deux stations est prédéterminé par un dispositif de commande pilote, auquel d'une part le signal de sortie d'un régulateur de dérivation déterminé par le courant de dérivation, notamment d'un régulateur de tension réalisant le réglage de la tension alternative d'un réseau, ou d'un régulateur de la puissance réactive, est appliqué pendant le fonctionnement en régime de secours et le signal de sortie du régulateur de la grandeur de référence est appliqué pendant le fonctionnement normal, et auquel d'autre part la fonction de montée en régime élevé est appliquée pendant la montée en régime et la valeur modèle de la grandeur perturbatrice est appliquée, pendant le fonctionnement normal et de préférence jusqu'au début du fonctionnement de montée en régime.

21. Procédé suivant la revendication 19 ou 20, caractérisé par le fait que dans la première station, dans le cas d'une ligne à grande distance formant voie de transmission (HGÜ), la tension (U$_{dLA}$, figure 5) est appliquée, en tant que valeur modèle, à l'extrémité d'une bobine d'arrêt du convertisseur de courant, branchée en aval du premier convertisseur de courant, côté tension continue, ou, dans le cas d'un couplage court constituant la voie de transmission (HGÜ), une valeur modèle ($\tilde{U}_{dB}$, figure 7) formée à partir d'une chute inductive de tension continue calculée du second convertisseur de courant est appliqué à ladite extrémité.

22. Procédé suivant la revendication 19 ou 20, caractérisé par le fait que dans la première station, la valeur modèle est formée par un circuit modèle alimenté par des données fonctionnement de la présente station (figure 13, figure 14).

23. Procédé suivant la revendication 19 ou 20, caractérisé par le fait que dans la seconde station, la valeur modèle est déterminée à partir de la chute inductive de tension continue du second convertisseur de courant, la chute inductive de tension continue étant calculée à partir d'un angle d'extinction de consigne (γ*), prédéterminé en fonction de la valeur de consigne du régulateur de la grandeur de référence, et à partir de valeurs de mesure de courant continu (i$_{dB}$) et de la tension alternative du réseau (U$_B$) de la seconde station, et ajoutée au signal de sortie du régulateur (41B) de la grandeur de référence, notamment d'un régulateur de la tension (U$_B$) ou de la puissance réactive transmise (Q$_B$) (figure 5).

24. Procédé suivant l'une des revendications 16 à 23, caractérisé par le fait que, lors du passage du fonctionnement en régime de secours au fonctionnement normal, l'angle de commande de la station A

63    **0 142 096**    64

est amené, avec une pente plus importante au départ et diminuant ensuite, dans le mode de fonctionnement normal en redresseur et l'angle de commande de la station B est amené, selon la séquence inverse de montée, dans le mode de fonctionnement normal en onduleur.

25. Procédé suivant l'une des revendications 16 à 24, caractérisé par le fait que, dans le cas d'un convertisseur de courant constitué par plusieurs convertisseurs de courant partiels, le fonctionnement normal des convertisseurs de courant partiels est déclenché de façon décalée dans le temps, le convertisseur de courant partiel, qui est mis en marche le premier, étant amené rapidement à un régime élevé correspondant à l'angle de commande prédéterminé pour le fonctionnement et étant amené ultérieurement à un régime réduit dans la mesure où le fonctionnement à régime élevé des autres convertisseurs de courant partiels est terminé.

26. Procédé suivant l'une des revendications 1 à 25, caractérisé par le fait que le signal de perturbation pilote et le signal de libération pilote sont obtenus à partir des données de fonctionnement d'un convertisseur de courant, notamment à partir des données de mesure de la tension alternative appliquée, et que le signal de perturbation dérivé et le signal d'autorisation dérivé sont obtenus à partir de valeurs de mesure obtenues au niveau des bornes à tension continue de l'autre station, dès que, en cet endroit, les effets du fonctionnement normal interrompu ou du fonctionnement normal repris sont détectés.

27. Dispositif pour la transmission à courant continu à haute tension, comportant une voie de transmission à courant continu à haute tension (HGÜ), qui est raccordée, dans une première station (A), à un premier réseau à tension alternative (NA), par l'intermédiaire d'un premier convertisseur de courant (1A) fonctionnant en tant que redresseur lors du fonctionnement normal commandé à la cadence du réseau, et est raccordée, dans une seconde station (B), à un second réseau à tension alternative (NB), par l'intermédiaire d'un second convertisseur de courant (1B) fonctionnant en tant qu'onduleur dans le fonctionnement normal commandé à la cadence du réseau, et comportant, dans chaque station (figure 1):

— un générateur de tension de référence (RGA, RGB), qui produit une tension de référence synchrone avec le réseau lors du fonctionnement normal,

— un ensemble de commande (STA, STB), commandé par un dispositif de commande et de régulateur (4A, 4B) avec un angle de commande ($\alpha_A$, $\alpha_B$) et qui forme des instructions d'amorçage (S$\alpha$), commandées de façon cadencée par le réseau, pour le convertisseur respectif de courant, et

— un circuit de blocage (BS) qui, lors de l'apparition d'un signal de perturbation pilote envoyé par un dispositif de contrôle, bloque les instructions d'amorçage et, lors de l'apparition d'un signal pilote, libère les instructions d'amorçage, et qui comporte une première mémoire (SBR+, ..., SBT−), dans laquelle se trouve mémorisée une combinaison de valves du convertisseur de courant sélectionnées en tant que valves de dérivation et qui est relié aux bornes de commande des valves par l'intermédiaire de moyens de commutation (GU2, GU3, GO2) qui, lors de l'apparition du signal perturbateur pilote, déclenche le blocage des instructions d'amorçage, commandées à la cadence du réseau, et la délivrance d'instructions d'amorçage de dérivation aux valves de dérivation sélectionnées (figure 17), caractérisé par le fait

— que le dispositif de contrôle (figure 11) de chaque station contient des moyens (74, 71), qui, à l'aide du contrôle des grandeurs électriques du réseau considéré, produisent le signal perturbateur pilote («impulsion de signalisation d'auto-perturbation Fde») lors de l'apparition d'une perturbation du réseau et le signal d'autorisation pilote («impulsion d'auto-autorisation Ffe») à la fin de la perturbation, et d'autres moyens (72, 73) qui, au moyen du contrôle des grandeurs électriques côté tension continue, produisent un signal de parasitage dérivé («impulsion de signalisation de perturbation étrangère Fdf») lors de l'apparition de l'effet d'une perturbation de la station étrangère, et un signal d'autorisation dérivé («impulsion de libération étrangère Fff») après les effets d'une mise en oeuvre du fonctionnement normal commandé à la cadence du réseau, dans la station étrangère;

— qu'un circuit de sélection (figure 21), relié à l'ensemble de commande et au circuit de blocage, contient une seconde mémoire, dans laquelle se trouve mémorisée, après un amorçage des valves de dérivation, une combinaison de valves de démarrage, prévue pour la mise en oeuvre du fonctionnement normal, et un circuit logique (GU5, GO5), qui, après un signal d'autorisation pilote et lors de l'apparition d'une impulsion d'amorçage pour l'une des valves contenues dans la combinaison de valves de démarrage, supprime le blocage des instructions d'amorçage commandées de façon cadencée par le réseau, et

— qu'un circuit de programmation (63) agit sur l'angle de commande commande prévu pour l'ensemble de l'autre station de telle sorte que, dans le cas d'un signal de perturbation dérivé, le convertisseur de courant de l'autre station fonctionne en tant que redresseur dans un mode de fonctionnement de dérivation et que, dans le cas d'un signal d'autorisation dérivé, le fonctionnement de dérivation est terminé et qu'une mise en oeuvre du fonctionnement normal est déclenchée (figure 15).

28. Dispositif suivant la revendication 27, caractérisé par un commutateur (60A, 60B), qui applique à l'ensemble de commande de l'autre station, dans le mode de fonctionnement en dérivation, le signal de sortie d'un régulateur de dérivation, notamment d'un régulateur de tension ou d'un régulateur de la puissance réactive (68), pour la formation de l'angle d'amorçage de l'ensemble de commande (figure 9, figure 10).

29. Dispositif suivant la revendication 27 ou 28, caractérisé par un autre commutateur (61A, 61B) situé dans chaque station et qui, lors de l'apparition d'un signal d'autorisation raccorde à l'ensemble de commande un générateur de marche à régime élevé (66) pour la formation de l'angle d'amorçage ($\alpha$) (figures 9, 10).

33

30. Dispositif suivant la revendication 29, caractérisé par le fait que dans le cas d'un convertisseur de courant constitué par les convertisseurs de courant partiel, il est prévu pour chaque convertisseur de courant partiel un circuit particulier de blocage, un circuit particulier de sélection et un générateur particulier de marche à régime élevé, à l'aide desquels la mise en oeuvre de fonctionnement normal des convertisseurs de courant partiel s'effectue d'une manière décalée dans le temps et avec des fonctions différentes de marche en régime élevé.

31. Dispositif suivant la revendication 29, caractérisé par les moyens de commutation (61A, 61B), qui débranchent le générateur du signal de montée en régime à la fin du fonctionnement de montée en régime et réalisent une commutation sur un dispositif servant à déterminer une grandeur perturbatrice ($U_{dLA}$, figure 10; $\alpha_{Bv}$, figure 9).

32. Dispositif suivant la revendication 31, caractérisé par le fait que le dispositif de détermination de la grandeur perturbatrice détecte la tension continue ($U_{dLA}$) dans la première station et la chute inductive de tension continue ($dx_B \cdot i_{dB}$) du convertisseur de courant respectif dans la seconde station.

33. Dispositif suivant la revendication 31 ou 32, caractérisé par un dispositif de commande préalable (40A, 42A ou 40B, 42B) branché en amont de l'ensemble de commande auquel sont appliqués, lors de l'apparition d'un signal d'autorisation ou après une telle apparition, la grandeur perturbatrice et le signal de sortie d'un régulateur de la grandeur pilote (41A, 41B) (figure 9, figure 10).

34. Dispositif suivant l'une des revendications 27 à 33, caractérisé par le fait que les mémoires du circuit de blocage et du circuit de sélection sont des mémoires mortes, qui sont logées de préférence dans le circuit de programmation.

35. Dispositif suivant l'une des revendications 27 à 33, caractérisé par des moyens pour commander les mémoires, qui positionnent la première mémoire, respectivement pour un signal de sortie de l'ensemble de commande, sur une combinaison de valves de dérivation, qui dépend de l'état de commande instantané des valves du convertisseur de courant, et positionne la seconde mémoire, respectivement lors d'un amorçage des valves de dérivation, sur une combinaison de valves de démarrage, qui dépend de la combinaison des valves de dérivation.

36. Dispositif suivant l'une des revendications 27 à 35, caractérisé par le fait que seules les valeurs réelles et les valeurs de consigne, qui sont disponibles sans l'utilisation de signaux de télécommande, sont introduites dans le dispositif de contrôle servant à former le signal de perturbation et le signal d'autorisation et dans le dispositif de commande et de régulation servant à former l'angle de commande dans chaque station.

FIG 1

FIG 2

FIG 3

FIG 4

FIG 5

FIG 6

FIG 7

FIG 8

FIG 9

FIG 10

0 142 096

FIG 11

FIG 12

FIG 28

FIG 13

FIG 14

FIG 15

FIG 16

FIG 17

iT+

iS−

iR+

iT−

iS+

iR−

$T_0$

$T_0'$

FIG 18

FIG 19

0 142 096

FIG 20

FIG 21

FIG 22

FIG 23

FIG 24

**FIG 25**

FIG 26

FIG 27